# EUROPEAN PATENT APPLICATION

(11) **EP 2 913 143 A1**
(43) Date of publication of application: **02.09.2015**
(21) Application number: 13849657.5
(22) Date of filing: 24.10.2013
(51) Int. Cl.: B23K 35/363, B23K 1/19, B23K 3/00

(54) **ALUMINUM ALLOY BRAZING METHOD, AND ALUMINUM ALLOY MEMBER COVERED WITH FLUX COMPONENT**

(30) Priority: 26.10.2012 JP 2012236581
(71) Applicant: UACJ Corporation, Tokyo 100-0004 (JP)
(72) Inventor: KUMAGAI Hidetoshi, Tokyo 100-0004 (JP); HISATOMI Yuji, Tokyo 100-0004 (JP); YAMASHITA Naoki, Tokyo 100-0004 (JP)
(74) Representative: Müller-Boré & Partner Patentanwälte PartG mbB
(86) International application number: PCT/JP2013/078778
(87) International publication number: WO 2014/065357

(57) **Abstract**

A method for brazing an aluminum alloy includes applying a flux component to a surface of an aluminum alloy member, and brazing the aluminum alloy member to which the flux component has been applied, the flux component being a component (A) that is a powder of an alkali metal zinc fluoroaluminate represented by "M_{w}ZnₓAl_{y}F_{z} (1)" (wherein M is K or Cs, and w, x, y, and z are a positive integer, the greatest common divisor of w, x, y, and z being 1), the component (A) being applied to the surface of the aluminum alloy member in an amount of 1 to 50 g/m². A flux composition prevents occurrence of a brazing defect and discoloration even when an aluminum alloy is brazed in an atmosphere having a high oxygen concentration, or an atmosphere having high humidity.

## Description

### TECHNICAL FIELD

The present invention relates to a method for brazing an aluminum alloy that subjects an aluminum member or an aluminum alloy member to flux brazing, and a flux component-coated aluminum alloy member that is used for the method.

### BACKGROUND ART

A reduction in weight has been desired for an automotive heat exchanger made of aluminum in order to achieve a reduction in fuel consumption of an automotive engine and a reduction in cost, and a reduction in thickness of a material (e.g., tube) for producing a heat exchanger has been desired. However, since leakage of a refrigerant due to pitting corrosion of the aluminum alloy member may occur within a shorter period when the thickness of the material is reduced, it is important to provide the material with corrosion resistance while reducing the thickness of the material.

For example, a condenser used for an automotive heat exchanger is produced using a multi-port extruded tube having a flat cross-sectional shape as a tube that forms a refrigerant passage. When KZnF₃ is applied to the outer circumferential surface of the tube, and the tube is brazed, KAlF₄ is produced by the substitution reaction between Zn and Al, and removes an oxide film formed on the surface of the aluminum alloy. On the other hand, Zn produced by the substitution reaction forms a Zn diffusion layer on the surface of the aluminum alloy member, and improves corrosion resistance (see Patent Document 1). Specifically, when KZnF₃ is applied to the aluminum alloy member, and the aluminum alloy member is brazed, KZnF₃ reacts with A1 that forms the surface of the aluminum alloy member at about 550°C, and is decomposed into Zn and a potassium fluoroaluminate (e.g., KAlF₄ and K₂AlF₅) (i.e., a noncorrosive flux normally used for brazing). Zn produced by decomposition of KZnF₃ diffuses into the surface of the aluminum alloy member, and forms a Zn diffusion layer. On the other hand, the potassium fluoroaluminate removes an oxide film formed on the surface of the aluminum alloy member so that wetting occurs between the filler metal and the aluminum alloy member, and the aluminum alloy member is joined.

The Zn diffusion layer has a natural electrode potential lower than that of the aluminum alloy member that forms the tube, and is preferentially corroded as compared with the aluminum alloy member due to a sacrificial anode effect caused by galvanic action to prevent the tube from undergoing pitting corrosion. Since KZnF₃ ensures that the Zn diffusion layer has a uniform Zn concentration as compared with Zn arc spraying, it is possible to suppress contamination of the work environment that occurs when a thermally sprayed powder is scattered around the surface of the tube material, and reduce the application amount.

However, KZnF₃ may not normally function during brazing when the oxygen concentration in the brazing furnace is high. In such a case, since an oxide film is not removed, the molten filler metal may not spread, and a fillet may not be formed. When the aluminum alloy member is brazed using KZnF₃ in an atmosphere having a high oxygen concentration, Zn and K₃AlF₆ (having a high melting point) (covered with a thick oxide film) produced from KZnF₃ that has reacted with oxygen in the brazing furnace during brazing may remain on the surface of the aluminum alloy member as a residue, whereby the surface of the aluminum alloy member may be discolored, and a deterioration in external appearance may occur.

When KZnF₃ is stored in an atmosphere having high humidity, KZnF₃ may deteriorate, and not normally function during brazing. In such a case, since an oxide film is not removed, the molten filler metal may not spread, and a fillet may not be formed.

In order to prevent such a situation, it is necessary to store KZnF₃ in a storage area in which dehumidification equipment is installed.

In this case, however, since it is necessary to always operate the dehumidification equipment, the electricity cost increases, and frequent maintenance of the dehumidification equipment is required. This results in an increase in production cost.

KZnF₃ is easily affected by the flow of the molten filler metal, and may flow together with the filler metal when the filler metal flows toward the fin, and forms a fillet. In this case, the Zn concentration in the surface of the tube between the fillets (for which corrosion resistance is required) decreases, and the Zn concentration in the fillet increases, whereby the fillet is preferentially corroded, and the fin is separated at an early stage.

In order to solve the above problems, a method that utilizes a mixture of KZnF₃ and a noncorrosive flux (e.g., KAlF₄ or K₂AlF₅) has been proposed, for example (see Patent Document 2).

Specifically, when the noncorrosive flux that does not easily deteriorate during brazing even in an atmosphere having a high oxygen concentration, and removes an oxide film, is mixed with KZnF₃ that reacts with the surface of the aluminum alloy member to remove an oxide film and form a Zn diffusion layer, and the mixture is heated, the flux mixture spreads at a temperature lower than the melting point of the filler metal, and the Zn concentration in the Zn diffusion layer between the fillets becomes uniform.

### RELATED-ART DOCUMENT

### PATENT DOCUMENT

Patent Document 1: JP-A-61-293699 (claims)
Patent Document 2: JP-A-2006-255755 (claims)

### SUMMARY OF THE INVENTION

### TECHNICAL PROBLEM

When using the flux mixture disclosed in Patent Document 2, however, a brazing defect or discoloration may also occur when brazing is performed in an atmosphere having a high oxygen concentration, or an atmosphere having high humidity.

An object of the invention is to provide a method for brazing an aluminum alloy that prevents occurrence of a brazing defect and discoloration even when brazing an aluminum alloy in an atmosphere having a high oxygen concentration, or an atmosphere having high humidity, and a flux component-coated aluminum alloy member that is used for the method.

### SOLUTION TO PROBLEM

The inventors of the invention conducted extensive studies in order to achieve the above object. As a result, the inventors found that it is possible to prevent a brazing defect, form a good Zn diffusion layer, and prevent discoloration even when brazing an aluminum alloy in an atmosphere having a high oxygen concentration, or an atmosphere having high humidity, by applying a specific amount of a flux component that includes an alkali metal zinc fluoroaluminate in a ratio equal to or more than a specific ratio to the aluminum alloy member. This finding has led to the completion of the invention.

(1) According to one aspect of the invention, a method for brazing an aluminum alloy includes applying a flux component to a surface of an aluminum alloy member, and brazing the aluminum alloy member to which the flux component has been applied,
   the flux component being a component (A) that is a powder of an alkali metal zinc fluoroaluminate represented by the following general formula (1),

   M_{w}ZnₓAl_{y}F_{z} (1)

   wherein M is K or Cs, and w, x, y, and z are a positive integer, the greatest common divisor of w, x, y, and z being 1,
   the component (A) being applied to the surface of the aluminum alloy member in an amount of 1 to 50 g/m².
(2) According to another aspect of the invention, a method for brazing an aluminum alloy includes applying a flux component to a surface of an aluminum alloy member, and brazing the aluminum alloy member to which the flux component has been applied,
   the flux component being a mixture of a component (A) and a flux component other than the component (A), the component (A) being a powder of an alkali metal zinc fluoroaluminate represented by the following general formula (1),

   M_{w}ZnₓAl_{y}F_{z} (1)

   wherein M is K or Cs, and w, x, y, and z are a positive integer, the greatest common divisor of w, x, y, and z being 1,
   the component (A) being applied to the surface of the aluminum alloy member in a ratio of 50 mass% or more with respect to the total amount of the component (A) and the flux component other than the component (A), and
   the component (A) and the flux component other than the component (A) being applied to the surface of the aluminum alloy member in an amount of 1 to 50 g/m² in total.
(3) According to another aspect of the invention, a method for brazing an aluminum alloy includes applying a flux component to a surface of an aluminum alloy member, and brazing the aluminum alloy member to which the flux component has been applied,
   the flux component being a mixture of a component (A) that is a powder of an alkali metal zinc fluoroaluminate represented by the following general formula (1), and a component (B) that is one type of powder or two or more types of powders selected from a powder of an alkali metal fluoroaluminate and a powder of an alkali metal fluorozincate,

   M_{w}ZnₓAl_{y}F_{z} (1)

   wherein M is K or Cs, and w, x, y, and z are a positive integer, the greatest common divisor of w, x, y, and z being 1,
   the component (A) being applied to the surface of the aluminum alloy member in a ratio of 50 mass% or more with respect to the total amount of the component (A) and the component (B), and
   the component (A) and the component (B) being applied to the surface of the aluminum alloy member in an amount of 1 to 50 g/m² in total.
(4) The method for brazing an aluminum alloy according to any one of (1) to (3) may include applying a component (C) to the surface of the aluminum alloy member together with the flux component, the component (C) being one type of metal powder or two or more types of metal powders selected from a powder of an aluminum alloy that includes one type of metal element or two or more types of metal elements among Si, Cu, and Zn, an Al powder, an Si powder, a Cu powder, and a Zn powder, the component (A) being applied to the surface of the aluminum alloy member in a ratio of 50 mass% or more with respect to the total amount of the flux component and the component (C).
(5) According to another aspect of the invention, a flux component-coated aluminum alloy member includes an aluminum alloy member and a flux component, the flux component having been applied to a surface of the aluminum alloy member,
   the flux component being a component (A) that is a powder of an alkali metal zinc fluoroaluminate represented by the following general formula (1),

   M_{w}ZnₓAl_{y}F_{z} (1)

   wherein M is K or Cs, and w, x, y, and z are a positive integer, the greatest common divisor of w, x, y, and z being 1,
   the component (A) having been applied to the surface of the aluminum alloy member in an amount of 1 to 50 g/m².
(6) According to another aspect of the invention, a flux component-coated aluminum alloy member includes an aluminum alloy member and a flux component, the flux component having been applied to a surface of the aluminum alloy member,
   the flux component being a mixture of a component (A) and a flux component other than the component (A), the component (A) being a powder of an alkali metal zinc fluoroaluminate represented by the following general formula (1),

   M_{w}ZnₓAl_{y}F_{z} (1)

   wherein M is K or Cs, and w, x, y, and z are a positive integer, the greatest common divisor of w, x, y, and z being 1,
   the component (A) having been applied to the surface of the aluminum alloy member in a ratio of 50 mass% or more with respect to the total amount of the component (A) and the flux component other than the component (A), and
   the component (A) and the flux component other than the component (A) having been applied to the surface of the aluminum alloy member in an amount of 1 to 50 g/m² in total.
(7) According to another aspect of the invention, a flux component-coated aluminum alloy member includes an aluminum alloy member and a flux component, the flux component having been applied to a surface of the aluminum alloy member,
   the flux component being a mixture of a component (A) that is a powder of an alkali metal zinc fluoroaluminate represented by the following general formula (1), and a component (B) that is one type of powder or two or more types of powders selected from a powder of an alkali metal fluoroaluminate and a powder of an alkali metal fluorozincate,

   M_{w}ZnₓAl_{y}F_{z} (1)

   wherein M is K or Cs, and w, x, y, and z are a positive integer, the greatest common divisor of w, x, y, and z being 1,
   the component (A) having been applied to the surface of the aluminum alloy member in a ratio of 50 mass% or more with respect to the total amount of the component (A) and the component (B), and
   the component (A) and the component (B) having been applied to the surface of the aluminum alloy member in an amount of 1 to 50 g/m² in total.
(8) In the flux component-coated aluminum alloy member according to any one of (5) to (7), a component (C) may have been applied to the surface of the aluminum alloy member together with the flux component, the component (C) being one type of metal powder or two or more types of metal powders selected from a powder of an aluminum alloy that includes one type of metal element or two or more types of metal elements among Si, Cu, and Zn, an Al powder, an Si powder, a Cu powder, and a Zn powder, and the component (A) may have been applied to the surface of the aluminum alloy member in a ratio of 50 mass% or more with respect to the total amount of the flux component and the component (C).

### ADVANTAGEOUS EFFECTS OF THE INVENTION

The aspects of the invention thus provide a method for brazing an aluminum alloy that prevents occurrence of a brazing defect and discoloration even when brazing an aluminum alloy in an atmosphere having a high oxygen concentration, or an atmosphere having high humidity, and a flux component-coated aluminum alloy member that is used for the method.

### BRIEF DESCRIPTION OF DRAWINGS

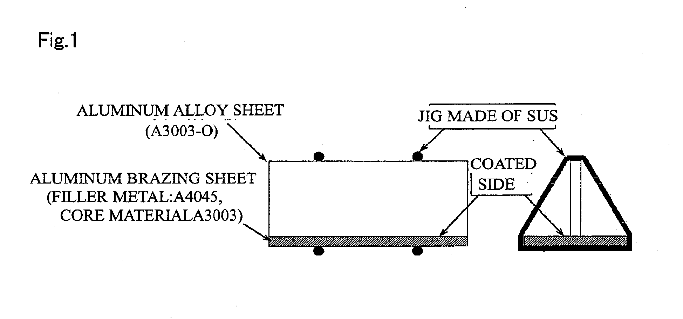

FIG. 1 is a schematic view illustrating a testing material assembly method used for a brazing test.

### DESCRIPTION OF EMBODIMENTS

The term "aluminum alloy member" used herein refers to a member that is formed of an aluminum alloy that includes various chemical components as alloy components, or a member that is formed of aluminum.

When the aluminum alloy member is a member that is formed of an aluminum alloy that includes various chemical components as alloy components, the aluminum alloy includes one type of chemical component or two or more types of chemical components, with the balance being aluminum and unavoidable impurities. The chemical components included in the aluminum alloy are not particularly limited. Examples of the chemical components included in the aluminum alloy include Si, Fe, Cu, Mn, Ti, Zr, Cr, Sr, and the like. The content of each chemical component in the aluminum alloy is appropriately selected taking account of the application of the aluminum alloy member. For example, the Si content in the aluminum alloy is preferably 1.0 mass% or less, and particularly preferably 0.8 mass% or less. The Fe content in the aluminum alloy is preferably 1.0 mass% or less, and particularly preferably 0.5 mass% or less. The Cu content in the aluminum alloy is preferably 1.0 mass% or less, and particularly preferably 0.7 mass% or less. The Mn content in the aluminum alloy is preferably 1.7 mass% or less, and particularly preferably 0.1 to 1.3 mass%. The Ti content in the aluminum alloy is preferably 0.3 mass% or less, and particularly preferably 0.2 mass% or less. The Zr content in the aluminum alloy is preferably 0.3 mass% or less, and particularly preferably 0.2 mass% or less. The Cr content in the aluminum alloy is preferably 0.3 mass% or less, and particularly preferably 0.2 mass% or less. The Sr content in the aluminum alloy is preferably 0.10 mass% or less, and particularly preferably 0.05 mass% or less.

When the aluminum alloy member is a member that is formed of aluminum, the aluminum alloy member (aluminum member) includes aluminum and unavoidable impurities.

The term "flux component" used herein refers to a component that is applied to the surface of the aluminum alloy member, and removes an oxide film formed on the surface of the aluminum alloy member when the aluminum alloy member is brazed.

The component (A) used in connection with the embodiments of the invention is a powder of an alkali metal zinc fluoroaluminate represented by the following general formula (1).

M_{w}ZnₓAl_{y}F_{z} (1)

wherein M is K or Cs, and w, x, y, and z are a positive integer, the greatest common divisor of w, x, y, and z being 1.

When the aluminum alloy member is brazed in a state in which the component (A) is applied to the surface of the aluminum alloy member, the component (A) is decomposed into Zn and an alkali metal fluoroaluminate (e.g., MAlF₄, M₂AlF₅, or M₃AlF₆) (M is K or Cs) at a temperature lower than the brazing temperature. Zn that has been produced by decomposition of the component (A) diffuses into the aluminum alloy member to form a Zn diffusion layer. The Zn diffusion layer ensures that the aluminum alloy member exhibits corrosion resistance that prevents a situation in which leakage of a refrigerant occurs due to pitting corrosion. The alkali metal fluoroaluminate (e.g., MAlF₄) that has been produced by decomposition of the component (A) functions as a flux, and removes an oxide film formed on the surface of the aluminum alloy member.

Specific examples of the alkali metal zinc fluoroaluminate represented by the general formula (1) include KZnAlF₆, K₂ZnAlF₇, KZn₂AlF₈, KZnAl₂F₉, CsZnAlF₆, Cs₂ZnAlF₇, CsZn₂AlF₈, CsZnAl₂F₉, and the like.

The component (A) may be one type of the alkali metal zinc fluoroaluminate represented by the general formula (1), or may be a combination of two or more types of the alkali metal zinc fluoroaluminate represented by the general formula (1).

The component (B) used in connection with the embodiments of the invention is one type of powder or two or more types of powders selected from a powder of an alkali metal fluoroaluminate and a powder of an alkali metal fluorozincate. The component (B) may be either or both of a powder of an alkali metal fluoroaluminate and a powder of an alkali metal fluorozincate.

When the aluminum alloy member is brazed in a state in which a mixture of the component (A) and the component (B) is applied to the surface of the aluminum alloy member, the component (B) functions as a flux, and removes an oxide film formed on the surface of the aluminum alloy member.

Specific examples of the alkali metal fluoroaluminate include KAlF₄, K₂AlF₅, K₃AlF₆, CsAlF₄, Cs₂AlF₅, Cs₃AlF₆, and the like. The component (B) may include only one type of alkali metal fluoroaluminate, or may include two or more types of alkali metal fluoroaluminates.

Specific examples of the alkali metal fluorozincate include KZnF₃, K₂ZnF₄, K₃Zn₂F₇, CsZnF₃, Cs₂ZnF₄, CsZn₂F₇, and the like. The component (B) may include only one type of alkali metal fluorozincate, or may include two or more types of alkali metal fluorozincates.

The component (B) may be one type of powder or two or more types of powders of an alkali metal fluoroaluminate, or may be one type of powder or two or more types of powders of an alkali metal fluorozincate, or may be a combination of one type of powder or two or more types of powders of an alkali metal fluoroaluminate and one type of powder or two or more types of powders of an alkali metal fluorozincate.

The component (C) used in connection with the embodiments of the invention is one type of metal powder or two or more types of metal powders selected from a powder of an aluminum alloy, an Al powder, an Si powder, a Cu powder, and a Zn powder. The component (C) is used to improve the properties of the aluminum alloy member that is joined by flux brazing, and provide a filler metal-producing function, a sacrificial anode layer-forming function, a function of reducing the melting point of the filler metal, and the like. The aluminum alloy used as the component (C) includes one type of metal element or two or more types of metal elements among Si, Cu, and Zn. The content of each metal element included in the aluminum alloy used as the component (C) may be appropriately selected taking account of the properties that are improved or provided by incorporating the component (C) in the flux composition.

The component (C') used in connection with the embodiments of the invention is one type of metal powder or two or more types of metal powders selected from a powder of an aluminum alloy that includes one type of metal element or two or more types of metal elements among Si, Cu, Zn, Sr, Bi, and Ge, an Al powder, an Si powder, a Cu powder, a Zn powder, an Sr powder, a Bi powder, and a Ge powder. The component (C') makes it possible to provide the following properties in addition to the properties provided using the component (C). Specifically, it is possible to improve the fluidity of the filler metal, and improve brazability by utilizing Sr or Bi. It is possible to reduce the temperature of reaction with the aluminum alloy member, and adjust the brazing temperature by utilizing Ge. The content of each metal element included in the aluminum alloy used as the component (C') may be appropriately selected taking account of the properties that are improved or provided by incorporating the component (C') in the flux composition.

A method for brazing an aluminum alloy according to a first embodiment of the invention (hereinafter may be referred to as "method (1)") includes applying a flux component to the surface of an aluminum alloy member, and brazing the aluminum alloy member to which the flux component has been applied,
the flux component being the component (A) that is a powder of an alkali metal zinc fluoroaluminate represented by the following general formula (1),

M_{w}ZnₓAl_{y}F_{z} (1)

wherein M is K or Cs, and w, x, y, and z are a positive integer, the greatest common divisor of w, x, y, and z being 1,
the component (A) being applied to the surface of the aluminum alloy member in an amount of 1 to 50 g/m².

A method for brazing an aluminum alloy according to a second embodiment of the invention (hereinafter may be referred to as "method (2)") includes applying a flux component to the surface of an aluminum alloy member, and brazing the aluminum alloy member to which the flux component has been applied,
the flux component being a mixture of the component (A) and a flux component other than the component (A), the component (A) being a powder of an alkali metal zinc fluoroaluminate represented by the following general formula (1),

M_{w}ZnₓAl_{y}F_{z} (1)

wherein M is K or Cs, and w, x, y, and z are a positive integer, the greatest common divisor of w, x, y, and z being 1,
the component (A) being applied to the surface of the aluminum alloy member in a ratio of 50 mass% or more with respect to the total amount of the component (A) and the flux component other than the component (A), and
the component (A) and the flux component other than the component (A) being applied to the surface of the aluminum alloy member in an amount of 1 to 50 g/m² in total.

A method for brazing an aluminum alloy according to a third embodiment of the invention (hereinafter may be referred to as "method (3)") includes applying a flux component to the surface of an aluminum alloy member, and brazing the aluminum alloy member to which the flux component has been applied,
the flux component being a mixture of the component (A) that is a powder of an alkali metal zinc fluoroaluminate represented by the following general formula (1), and the component (B) that is one type of powder or two or more types of powders selected from a powder of an alkali metal fluoroaluminate and a powder of an alkali metal fluorozincate,

M_{w}ZnₓAl_{y}F_{z} (1)

wherein M is K or Cs, and w, x, y, and z are a positive integer, the greatest common divisor of w, x, y, and z being 1,
the component (A) being applied to the surface of the aluminum alloy member in a ratio of 50 mass% or more with respect to the total amount of the component (A) and the component (B), and
the component (A) and the component (B) being applied to the surface of the aluminum alloy member in an amount of 1 to 50 g/m² in total.

The methods (1) to (3) differ from each other as to the type and the amount of the flux component that is applied to the aluminum alloy.

The methods (1) to (3) include applying the flux component to the surface of the aluminum alloy member (at least one surface of the aluminum alloy member).

The flux component may be applied to the aluminum alloy member using an arbitrary method. For example, the flux component may be dispersed in water or a volatile solvent to prepare a slurry (i.e., a flux coating material that includes the flux component), and the flux coating material may be applied to the surface of the aluminum alloy member using a known method such as a spray method, a dipping method, or a roll coating method.

The flux coating material that is applied to the aluminum alloy member may include an organic resin binder. Specifically, the flux component and the organic resin binder may be dispersed in water or a volatile solvent to prepare a slurry (i.e., flux coating material). The organic resin binder is used to improve the adhesion of the flux component to the aluminum alloy member when the flux component is applied to the aluminum alloy member.

The organic resin binder is an organic resin that has a decomposition temperature of 500°C or less, and does not impair brazability. The organic resin binder is not particularly limited as long as the organic resin binder is normally used as an organic resin binder for flux brazing.

It is preferable to apply the flux coating material to the surface of the aluminum alloy member using the roll coating method due to high coating stability and high capacity. When using the roll coating method, the material that forms the surface of each roll, and the coating conditions (e.g., forward rotation and reverse rotation of the coater roll and the application roll) are appropriately determined taking account of the desired film thickness, the desired surface roughness, and the like, and the roll transfer conditions are selected taking account of the objective.

After applying the flux coating material to the surface of the aluminum alloy member, the flux coating material is dried at 100 to 200°C.

When implementing the method (1), the component (A) (i.e., a powder of an alkali metal zinc fluoroaluminate represented by the following general formula (1)) is applied to the surface of the aluminum alloy member as the flux component.

M_{w}ZnₓAl_{y}F_{z} (1)

wherein M is K or Cs, and w, x, y, and z are a positive integer, the greatest common divisor of w, x, y, and z being 1.

Specifically, when implementing the method (1), only the component (A) (i.e., a powder of an alkali metal zinc fluoroaluminate represented by the general formula (1)) is applied to the surface of the aluminum alloy member as the flux component. Note that the expression "only the component (A) is applied" means that substantially only the component (A) is applied, and the flux component may include unavoidable impurities.

When implementing the method (1), the component (A) is applied to the surface of the aluminum alloy member as the flux component in an amount of 1 to 50 g/m². When brazing a fin material used for a heat exchanger, the component (A) is preferably applied in an amount of 1 to 20 g/m². When brazing a tube material used for a heat exchanger, the component (A) is preferably applied in an amount of 3 to 30 g/m². When brazing a tank material that is connected to a refrigerant passage, and forms the inlet and the outlet of a heat exchanger, the component (A) is preferably applied in an amount of 5 to 30 g/m².

When implementing the method (2), a mixture of the component (A) (i.e., a powder of an alkali metal zinc fluoroaluminate represented by the following general formula (1)) and the flux component other than the component (A) is applied to the surface of the aluminum alloy member as the flux component.

M_{w}ZnₓAl_{y}F_{z} (1)

wherein M is K or Cs, and w, x, y, and z are a positive integer, the greatest common divisor of w, x, y, and z being 1.

Specifically, when implementing the method (2), only the component (A) (i.e., a powder of an alkali metal zinc fluoroaluminate represented by the general formula (1)) and the flux component other than the component (A) are applied to the surface of the aluminum alloy member as the flux component. Note that the expression "only the component (A) and the flux component other than the component (A) are applied" means that substantially only the component (A) and the flux component other than the component (A) are applied, and the flux component may include unavoidable impurities.

The flux component other than the component (A) that is used when implementing the method (2) is not particularly limited as long as the flux component functions as a flux that removes an oxide film formed on the surface of the aluminum alloy. Examples of the flux component include K₂SiF₆ and the like that may be used as the component (B).

When implementing the method (2), the component (A) is applied to the surface of the aluminum alloy member in a ratio of 50 mass% or more, preferably 70 mass% or more, and particularly preferably 80 mass% or more, with respect to the total amount of the component (A) and the flux component other than the component (A).

When implementing the method (2), the component (A) and the flux component other than the component (A) are applied to the surface of the aluminum alloy member in an amount of 1 to 50 g/m² in total. When brazing a fin material used for a heat exchanger, the component (A) and the flux component other than the component (A) are preferably applied in an amount of 1 to 20 g/m² in total. When brazing a tube material used for a heat exchanger, the component (A) and the flux component other than the component (A) are preferably applied in an amount of 3 to 30 g/m² in total. When brazing a tank material that is connected to a refrigerant passage, and forms the inlet and the outlet of a heat exchanger, the component (A) and the flux component other than the component (A) are preferably applied in an amount of 5 to 30 g/m² in total.

When implementing the method (3), a mixture of the component (A) (i.e., a powder of an alkali metal zinc fluoroaluminate represented by the following general formula (1)) and the component (B) (i.e., one type of powder or two or more types of powders selected from a powder of an alkali metal fluoroaluminate and a powder of an alkali metal fluorozincate) is applied to the surface of the aluminum alloy member as the flux component.

M_{w}ZnₓAl_{y}F_{z} (1)

wherein M is K or Cs, and w, x, y, and z are a positive integer, the greatest common divisor of w, x, y, and z being 1.

Specifically, when implementing the method (3), only the component (A) (i.e., a powder of an alkali metal zinc fluoroaluminate represented by the general formula (1)) and the component (B) (i.e., one type of powder or two or more types of powders selected from a powder of an alkali metal fluoroaluminate and a powder of an alkali metal fluorozincate) are applied to the surface of the aluminum alloy member as the flux component. Note that the expression "only the component (A) and the component (B) are applied" means that substantially only the component (A) and the component (B) are applied, and the flux component may include unavoidable impurities.

When implementing the method (3), the component (A) is applied to the surface of the aluminum alloy member in a ratio of 50 mass% or more, preferably 70 mass% or more, and particularly preferably 80 mass% or more, with respect to the total amount of the component (A) and the component (B).

When implementing the method (3), the component (A) and the component (B) are applied to the surface of the aluminum alloy member in an amount of 1 to 50 g/m² in total. When brazing a fin material used for a heat exchanger, the component (A) and the component (B) are preferably applied in an amount of 1 to 20 g/m² in total. When brazing a tube material used for a heat exchanger, the component (A) and the component (B) are preferably applied in an amount of 3 to 30 g/m² in total. When brazing a tank material that is connected to a refrigerant passage, and forms the inlet and the outlet of a heat exchanger, the component (A) and the component (B) are preferably applied in an amount of 5 to 30 g/m² in total.

The methods (1) to (3) include brazing the aluminum alloy member to which the flux component has been applied.

The entirety or part of the aluminum alloy member that is brazed is the aluminum alloy member to which the flux component has been applied, and the flux component has been applied to at least one surface of the brazing target area. An assembly of the aluminum alloy members to be joined is brazed by heating in a heating furnace.

When implementing the methods (1) to (3), the aluminum alloy member is brazed at 570 to 620°C.

When implementing the methods (1) to (3), the aluminum alloy member is brazed in a nitrogen gas atmosphere, an argon gas atmosphere, or a hydrogen gas atmosphere. The oxygen concentration in each atmosphere is set to 1000 ppm or less. The dew point of each atmosphere is set to -20°C or less.

According to the method (1), since the component (A) is applied to the aluminum alloy member as the flux component in an amount within the above range, a Zn diffusion layer is formed in a stable manner, and excellent flux properties are obtained even when the brazing atmosphere has a high oxygen concentration of 100 to 1000 ppm (particularly 500 to 1000 ppm), and/or has a high humidity with a dew point of -20 to -40°C (particularly -20 to -30°C), and a brazing defect and discoloration do not occur. If the component (A) is applied to the aluminum alloy member in an amount less than the above range, an oxide film may not be sufficiently removed, and the molten filler metal may not form a fillet, whereby a deterioration in heat exchange performance, a decrease in strength of the structure, and the like may occur. If the component (A) is applied to the aluminum alloy member in an amount more than the above range, part of the flux component may not react with aluminum, and remain on the surface of the aluminum alloy member, whereby brazability and the external appearance of the product may be impaired.

According to the method (2), since the component (A) and the flux component other than the component (A) are applied to the aluminum alloy member as the flux component, the ratio of the component (A) applied to the surface of the aluminum alloy member is within the above range with respect to the total amount of the component (A) and the flux component other than the component (A), and the component (A) and the flux component other than the component (A) are applied to the aluminum alloy member in a total amount within the above range, a Zn diffusion layer is formed in a stable manner, and excellent flux properties are obtained even when the brazing atmosphere has a high oxygen concentration of 100 to 1000 ppm (particularly 500 to 1000 ppm), and/or has a high humidity with a dew point of -20 to -40°C (particularly -20 to -30°C), and a brazing defect and discoloration do not occur. If the component (A) and the flux component other than the component (A) are applied to the aluminum alloy member in an amount less than the above range, an oxide film may not be sufficiently removed, and the molten filler metal may not form a fillet, whereby a deterioration in heat exchange performance, a decrease in strength of the structure, and the like may occur. If the component (A) is applied to the aluminum alloy member in an amount more than the above range, part of the flux component may not react with aluminum, and may remain on the surface of the aluminum alloy member, whereby brazability and the external appearance of the product may be impaired. If the ratio of the component (A) applied to the surface of the aluminum alloy member is less than the above range with respect to the total amount of the component (A) and the flux component other than the component (A), a brazing defect or discoloration may occur when the aluminum alloy member is brazed in an atmosphere having a high oxygen concentration, or an atmosphere having high humidity.

According to the method (3), since the component (A) and the component (B) are applied to the aluminum alloy member as the flux component, the ratio of the component (A) applied to the surface of the aluminum alloy member is within the above range with respect to the total amount of the component (A) and the component (B), and the component (A) and the component (B) are applied to the aluminum alloy member in a total amount within the above range, a Zn diffusion layer is formed in a stable manner, and excellent flux properties are obtained even when the brazing atmosphere has a high oxygen concentration of 100 to 1000 ppm (particularly 500 to 1000 ppm), and/or has a high humidity with a dew point of -20 to -40°C (particularly -20 to -30°C), and a brazing defect and discoloration do not occur. If the component (A) and the component (B) are applied to the aluminum alloy member in a total amount less than the above range, an oxide film may not be sufficiently removed, and the molten filler metal may not form a fillet, whereby a deterioration in heat exchange performance, a decrease in strength of the structure, and the like may occur. If the component (A) and the component (B) are applied to the aluminum alloy member in a total amount more than the above range, part of the flux component may not react with aluminum, and may remain on the surface of the aluminum alloy member, whereby brazability and the external appearance of the product may be impaired. If the ratio of the component (A) applied to the surface of the aluminum alloy member is less than the above range with respect to the total amount of the component (A) and the component (B), a brazing defect or discoloration may occur when the aluminum alloy member is brazed in an atmosphere having a high oxygen concentration, or an atmosphere having high humidity.

According to the methods (1) to (3), a Zn diffusion layer is formed in a stable manner, and excellent flux properties are obtained even when the brazing atmosphere has a low oxygen concentration of less than 100 ppm, and/or has a low humidity with a dew point of less than -40°C, and a brazing defect and discoloration do not occur. According to the methods (1) to (3), when the brazing atmosphere has a low oxygen concentration of less than 100 ppm, and/or has a low humidity with a dew point of less than -40°C, a Zn diffusion layer is formed in a stable manner, and excellent flux properties are obtained when the flux component is applied to the aluminum alloy member in an amount within the range, and a brazing defect and discoloration do not occur. If the flux component is applied to the aluminum alloy member in an amount less than the above range when the brazing atmosphere has a low oxygen concentration of less than 100 ppm, and/or has a low humidity with a dew point of less than -40°C, an oxide film may not be sufficiently removed, and the molten filler metal may not form a fillet, whereby a deterioration in heat exchange performance, a decrease in strength of the structure, and the like may occur. If the flux component is applied to the aluminum alloy member in an amount more than the above range when the brazing atmosphere has a low oxygen concentration of less than 100 ppm, and/or has a low humidity with a dew point of less than -40°C, part of the flux component may not react with aluminum, and may remain on the surface of the aluminum alloy member, whereby brazability and the external appearance of the product may be impaired. Note that the amount of the flux component applied to the aluminum alloy member refers to the amount of the component (A) applied to the aluminum alloy member when implementing the method (1), refers to the total amount of the component (A) and the flux component other than the component (A) applied to the aluminum alloy member when implementing the method (2), and refers to the total amount of the component (A) and the component (B) applied to the aluminum alloy member when implementing the method (3).

When implementing the methods (1) to (3), the average particle size of the flux component applied to the aluminum alloy member is preferably 80 µm or less, and particularly preferably 1 to 50 µm. When the average particle size of the flux component is within the above range, the flux component exhibits high reactivity with the aluminum alloy, and the effect of suppressing a chemical reaction with oxygen is improved. This ensures that a Zn diffusion layer is formed in a stable manner, and excellent flux properties are obtained even in an atmosphere having a high oxygen concentration, or an atmosphere having high humidity, and a brazing defect and discoloration do not occur.

Note that the average particle size of the flux component refers to the average particle size of the component (A) applied to the aluminum alloy member when implementing the method (1), refers to the average particle size of the component (A) and the flux component other than the component (A) when implementing the method (2), and refers to the average particle size of the component (A) and the component (B) when implementing the method (3).

When implementing the methods (1) to (3), the component (C) (i.e., one type of metal powder or two or more types of metal powders selected from a powder of an aluminum alloy that includes one type of metal element or two or more types of metal elements among Si, Cu, and Zn, an Al powder, an Si powder, a Cu powder, and a Zn powder) may be applied to the surface of the aluminum alloy member together with the flux component.

Specifically, when implementing the method (1), a mixture of the component (A) and the component (C) may be applied to the surface of the aluminum alloy member. When applying a mixture of the component (A) and the component (C) to the surface of the aluminum alloy member when implementing the method (1), the component (A) is applied to the surface of the aluminum alloy member in a ratio of 50 mass% or more, preferably 70 mass% or more, and particularly preferably 80 mass% or more, with respect to the total amount of the component (A) and the component (C). When the ratio of the component (A) applied to the surface of the aluminum alloy member is within the above range with respect to the total amount of the component (A) and the component (C), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A) and the component (C), a brazing defect or discoloration may occur since the amount of flux is too small.

When implementing the method (2), a mixture of the component (A), the flux component other than the component (A), and the component (C) may be applied to the surface of the aluminum alloy member. When applying a mixture of the component (A), the flux component other than the component (A), and the component (C) to the surface of the aluminum alloy member when implementing the method (2), the component (A) is applied to the surface of the aluminum alloy member in a ratio of 50 mass% or more, preferably 70 mass% or more, and particularly preferably 80 mass% or more, with respect to the total amount of the component (A), the flux component other than the component (A), and the component (C). When the ratio of the component (A) applied to the surface of the aluminum alloy member is within the above range with respect to the total amount of the component (A), the flux component other than the component (A), and the component (C), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A), the flux component other than the component (A), and the component (C), a brazing defect or discoloration may occur since the amount of flux is too small.

When implementing the method (3), a mixture of the component (A), the component (B), and the component (C) may be applied to the surface of the aluminum alloy member. When applying a mixture of the component (A), the component (B), and the component (C) to the surface of the aluminum alloy member when implementing the method (3), the component (A) is applied to the surface of the aluminum alloy member in a ratio of 50 mass% or more, preferably 70 mass% or more, and particularly preferably 80 mass% or more, with respect to the total amount of the component (A), the component (B), and the component (C). When the ratio of the component (A) applied to the surface of the aluminum alloy member is within the above range with respect to the total amount of the component (A), the component (B), and the component (C), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A), the component (B), and the component (C), a brazing defect or discoloration may occur since the amount of flux is too small.

When the component (C) is applied to the surface of the aluminum alloy member together with the flux component when implementing the methods (1) to (3), it is possible to improve the properties of the aluminum alloy member that is joined by flux brazing, and provide the aluminum alloy member that is joined by flux brazing with a filler metal-producing function, a sacrificial anode layer-forming function, a function of reducing the melting point of the filler metal, and the like. For example, it is possible to provide or adjust the amount of filler metal required for a fillet that is formed at the brazing target joint by utilizing a powder of an aluminum alloy that includes Si, an Al powder, an Si powder, or a combination thereof. It is possible to adjust the potential difference between the brazing target members, and provide a sacrificial anode by utilizing a powder of an aluminum alloy that includes Cu, a powder of an aluminum alloy that includes Zn, a Zn powder, a Cu powder, or a combination thereof. It is possible to improve the strength of the brazing target members by utilizing a powder of an aluminum alloy that includes Zn, a Zn powder, or a combination thereof. When the component (C') is applied to the surface of the aluminum alloy member together with the flux component when implementing the methods (1) to (3), it is possible to provide the following properties in addition to the properties provided when applying the component (C). Specifically, it is possible to improve the fluidity of the filler metal, and improve brazability by utilizing Sr or Bi. It is possible to reduce the temperature of reaction with the aluminum alloy member, and adjust the brazing temperature by utilizing Ge.

The method (1) may be implemented by brazing a flux component-coated aluminum alloy member according to the first embodiment of the invention (hereinafter may be referred to as "flux component-coated aluminum alloy member (1)") (see below).

The flux component-coated aluminum alloy member (1) includes an aluminum alloy member and a flux component, the flux component having been applied to the surface of the aluminum alloy member,
the flux component being the component (A) that is a powder of an alkali metal zinc fluoroaluminate represented by the following general formula (1),

M_{w}ZnₓAl_{y}F_{z} (1)

wherein M is K or Cs, and w, x, y, and z are a positive integer, the greatest common divisor of w, x, y, and z being 1,
the component (A) having been applied to the surface of the aluminum alloy member in an amount of 1 to 50 g/m². Specifically, the flux component-coated aluminum alloy member (1) is obtained by applying the flux component to the surface of the aluminum alloy member using the method (1).

The method (2) may be implemented by brazing a flux component-coated aluminum alloy member according to the second embodiment of the invention (hereinafter may be referred to as "flux component-coated aluminum alloy member (2)") (see below).

The flux component-coated aluminum alloy member (2) includes an aluminum alloy member and a flux component, the flux component having been applied to the surface of the aluminum alloy member,
the flux component being a mixture of a component (A) and a flux component other than the component (A), the component (A) being a powder of an alkali metal zinc fluoroaluminate represented by the following general formula (1),

M_{w}ZnₓAl_{y}F_{z} (1)

wherein M is K or Cs, and w, x, y, and z are a positive integer, the greatest common divisor of w, x, y, and z being 1,
the component (A) having been applied to the surface of the aluminum alloy member in a ratio of 50 mass% or more with respect to the total amount of the component (A) and the flux component other than the component (A), and
the component (A) and the flux component other than the component (A) having been applied to the surface of the aluminum alloy member in an amount of 1 to 50 g/m² in total. Specifically, the flux component-coated aluminum alloy member (2) is obtained by applying the flux component to the surface of the aluminum alloy member using the method (2).

The method (3) may be implemented by brazing a flux component-coated aluminum alloy member according to the third embodiment of the invention (hereinafter may be referred to as "flux component-coated aluminum alloy member (3)") (see below).

The flux component-coated aluminum alloy member (3) includes an aluminum alloy member and a flux component, the flux component having been applied to the surface of the aluminum alloy member,
the flux component being a mixture of the component (A) that is a powder of an alkali metal zinc fluoroaluminate represented by the following general formula (1), and the component (B) that is one type of powder or two or more types of powders selected from a powder of an alkali metal fluoroaluminate and a powder of an alkali metal fluorozincate,

M_{w}ZnₓAl_{y}F_{z} (1)

wherein M is K or Cs, and w, x, y, and z are a positive integer, the greatest common divisor of w, x, y, and z being 1,
the component (A) having been applied to the surface of the aluminum alloy member in a ratio of 50 mass% or more with respect to the total amount of the component (A) and the component (B), and
the component (A) and the component (B) having been applied to the surface of the aluminum alloy member in an amount of 1 to 50 g/m² in total. Specifically, the flux component-coated aluminum alloy member (3) is obtained by applying the flux component to the surface of the aluminum alloy member using the method (3).

The advantageous effects of the method (1) can be achieved by brazing the flux component-coated aluminum alloy member (1). The advantageous effects of the method (2) can be achieved by brazing the flux component-coated aluminum alloy member (2). The advantageous effects of the method (3) can be achieved by brazing the flux component-coated aluminum alloy member (3).

The average particle size of the flux component applied to the aluminum alloy member included in each of the flux component-coated aluminum alloy members (1) to (3) is preferably 80 µm or less, and particularly preferably 1 to 50 µm. When the average particle size of the flux component is within the above range, the flux component exhibits high reactivity with the aluminum alloy, and the effect of suppressing a chemical reaction with oxygen is improved. This ensures that a Zn diffusion layer is formed in a stable manner, and excellent flux properties are obtained even in an atmosphere having a high oxygen concentration, or an atmosphere having high humidity, and a brazing defect and discoloration do not occur.

Note that the average particle size of the flux component refers to the average particle size of the component (A) included in the flux component-coated aluminum alloy member (1), or the average particle size of the component (A) and the flux component other than the component (A) included in the flux component-coated aluminum alloy member (2), or the average particle size of the component (A) and the component (B) included in the flux component-coated aluminum alloy member (3).

The component (C) (i.e., one type of metal powder or two or more types of metal powders selected from a powder of an aluminum alloy that includes one type of metal element or two or more types of metal elements among Si, Cu, and Zn, an Al powder, an Si powder, a Cu powder, and a Zn powder) may have been applied to the surface of the aluminum alloy member included in each of the flux component-coated aluminum alloy members (1) to (3) together with the flux component.

Specifically, a mixture of the component (A) and the component (C) may have been applied to the surface of the aluminum alloy member included in the flux component-coated aluminum alloy member (1). When a mixture of the component (A) and the component (C) has been applied to the surface of the aluminum alloy member included in the flux component-coated aluminum alloy member (1), the component (A) has been applied to the surface of the aluminum alloy member in a ratio of 50 mass% or more, preferably 70 mass% or more, and particularly preferably 80 mass% or more, with respect to the total amount of the component (A) and the component (C). When the ratio of the component (A) applied to the surface of the aluminum alloy member is within the above range with respect to the total amount of the component (A) and the component (C), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A) and the component (C), a brazing defect or discoloration may occur since the amount of flux is too small.

A mixture of the component (A), the flux component other than the component (A), and the component (C) may have been applied to the surface of the aluminum alloy member included in the flux component-coated aluminum alloy member (2). When a mixture of the component (A), the flux component other than the component (A), and the component (C) has been applied to the surface of the aluminum alloy member included in the flux component-coated aluminum alloy member (2), the component (A) has been applied to the surface of the aluminum alloy member in a ratio of 50 mass% or more, preferably 70 mass% or more, and particularly preferably 80 mass% or more, with respect to the total amount of the component (A), the flux component other than the component (A), and the component (C). When the ratio of the component (A) applied to the surface of the aluminum alloy member is within the above range with respect to the total amount of the component (A), the flux component other than the component (A), and the component (C), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A), the flux component other than the component (A), and the component (C), a brazing defect or discoloration may occur since the amount of flux is too small.

A mixture of the component (A), the component (B), and the component (C) may have been applied to the surface of the aluminum alloy member included in the flux component-coated aluminum alloy member (3). When a mixture of the component (A), the component (B), and the component (C) has been applied to the surface of the aluminum alloy member included in the flux component-coated aluminum alloy member (3), the component (A) has been applied to the surface of the aluminum alloy member in a ratio of 50 mass% or more, preferably 70 mass% or more, and particularly preferably 80 mass% or more, with respect to the total amount of the component (A), the component (B), and the component (C). When the ratio of the component (A) applied to the surface of the aluminum alloy member is within the above range with respect to the total amount of the component (A), the component (B), and the component (C)), a Zn diffusion layer is formed in a stable manner, and excellent flux properties are obtained even when the aluminum alloy member is brazed in an atmosphere having a high oxygen concentration, or an atmosphere having high humidity, and a brazing defect and discoloration do not occur. If the ratio of the component (A) applied to the surface of the aluminum alloy member is less than the above range with respect to the total amount of the component (A), the component (B), and the component (C), a brazing defect or discoloration may occur since the amount of flux is too small.

When the component (C) has been applied to the surface of the aluminum alloy member included in each of the flux component-coated aluminum alloy members (1) to (3) together with the flux component, it is possible to improve the properties of the aluminum alloy member that is joined by flux brazing, and provide the aluminum alloy member that is joined by flux brazing with a filler metal-producing function, a sacrificial anode layer-forming function, a function of reducing the melting point of the filler metal, and the like. For example, it is possible to provide or adjust the amount of filler metal required for a fillet that is formed at the brazing target joint by utilizing a powder of an aluminum alloy that includes Si, an Al powder, an Si powder, or a combination thereof. It is possible to adjust the potential difference between the brazing target members, and provide a sacrificial anode by utilizing a powder of an aluminum alloy that includes Cu, a powder of an aluminum alloy that includes Zn, a Zn powder, a Cu powder, or a combination thereof. It is possible to improve the strength of the brazing target members by utilizing a powder of an aluminum alloy that includes Zn, a Zn powder, or a combination thereof.

The methods for brazing an aluminum alloy according to the embodiments of the invention make it possible to ensure that a Zn diffusion layer is formed in a stable manner, and excellent flux properties are obtained even when brazing is performed in an atmosphere having a high oxygen concentration, or an atmosphere having high humidity, and a brazing defect and discoloration do not occur. It is also possible to increase the wetting area, and form a uniform Zn diffusion layer. The methods for brazing an aluminum alloy according to the embodiments of the invention may suitably be used for brazing using a noncorrosive flux, and may be applied when brazing a condenser of an automotive heat exchanger for which corrosion resistance is mainly improved by a sacrificial corrosion prevention effect due to a Zn diffusion layer, for example.

### EXAMPLES

### Example 1 and Comparative Example 1

### Experimental flux composition

Flux powders (average particle size: 10 µm) (flux content: 100 mass%) having the composition shown in Table 1 or 2 were provided as a flux component.

### Adjustment of average particle size

The average particle size of the flux powder was adjusted by grinding the flux powder (metal salt powder) using a ball mill.

### Measurement of average particle size

The powder was dispersed in ethanol, and the average particle size thereof was measured using an optical transmission particle size distribution analyzer (laser diffraction/scattering particle size distribution analyzer) ("LA-700" manufactured by Horiba Ltd.). Note that the average particle size refers to the particle size (D50) at 50% in the cumulative volume particle size distribution.

### Brazing test

The flux component was diluted with an equal amount of purified water, and the dilution was applied to the filler metal side of an aluminum alloy double-layer clad sheet (thickness: 1.0 mm, width: 25 mm, length: 60 mm, filler metal: 4045, thickness of filler metal: 50 µm, core material: A3003, thickness of core material: 950 µm) using a bar coater so that the flux component was applied in the amount shown in Table 1 or 2. As illustrated in FIG. 1, the aluminum alloy double-layer clad sheet was placed horizontally so that the side to which the flux component was applied was situated on the upper side, and an A3003-O aluminum alloy sheet (thickness: 1.0 mm, width: 25 mm, length: 55 mm) was vertically secured on the aluminum alloy double-layer clad sheet (in the shape of the character "T") using a jig. The assembly was introduced into a furnace (nitrogen gas atmosphere, average oxygen concentration: 100 ppm, dew point: -40°C or less), and brazed at 600°C for 3 minutes. After cooling the assembly to 500°C or less in the furnace, the assembly (specimen) was removed from the furnace.

### Evaluation of brazability

The joining ratio and the size of the fillet formed at the joint between the horizontal aluminum alloy double-layer clad sheet and the vertical A3003-O aluminum alloy sheet, and the presence or absence of a surface residue were evaluated. Note that the joining ratio (%) is the ratio of the length L1 of the fillet formed at the joint between the horizontal aluminum alloy double-layer clad sheet and the vertical A3003-O aluminum alloy sheet, to the length L2 of the contact area between the horizontal aluminum alloy double-layer clad sheet and the vertical A3003-O aluminum alloy sheet (joining ratio (%)=(L1/L2)×100). The specimen was embedded in a resin, and a magnified photograph of the cross section of the joint was captured to evaluate the size of the fillet. Specifically, the size of the evaluation target fillet was determined to be "large" when the size of the evaluation target fillet was close to the size of the fillet of specimen Aa3 of Example 1, determined to be "medium" when the size of the evaluation target fillet was close to the size of the fillet of specimen Aa2 of Example 1, and determined to be "small" when the size of the evaluation target fillet was close to the size of the fillet of specimen Aa1 of Example 1. The presence or absence of a surface residue was determined with the naked eye. When a white residue (unreacted flux) and whitening were observed, or when a discolored residue and discoloring were observed, the specimen was determined to be unacceptable even when the joining ratio was 100%. When a significant residue was not observed, the specimen was determined to be acceptable even when the surface after brazing was dull white. The evaluation results are shown in Tables 1 and 2.

**TABLE 1**

| | Specimen | Flux composition | Application amount (g/m²) | | | Specimen | Joining ratio (%) | Size of fillet | External appearance of surface of aluminum | Residue on surface of aluminum |
|---|---|---|---|---|---|---|---|---|---|---|
| | Aa1 | KZnAlF₆ | 1 | | | Aa1 | 100 | Small | Not discolored | Absent |
| | Aa2 | KZnAlF₆ | 10 | | | Aa2 | 100 | Medium | Not discolored | Absent |
| | Aa3 | KZnAlF₆ | 50 | | | Aa3 | 100 | Large | Not discolored | Absent |
| | Ba1 | K₂ZnAlF₇ | 1 | | | Ba1 | 100 | Small | Not discolored | Absent |
| | Ba2 | K₂ZnAlF₇ | 10 | | | Ba2 | 100 | Medium | Not discolored | Absent |
| | Ba3 | K₂ZnAlF₇ | 50 | | | Ba3 | 100 | Large | Not discolored | Absent |
| | Ca1 | KZn₂AlF₈ | 1 | | | Ca1 | 100 | Small | Not discolored | Absent |
| | Ca2 | KZn₂AlF₈ | 10 | | | Ca2 | 100 | Medium | Not discolored | Absent |
| | Ca3 | KZn₂AlF₈ | 50 | | | Ca3 | 100 | Large | Not discolored | Absent |
| | Da1 | KZnAl₂F₉ | 1 | | | Da1 | 100 | Small | Not discolored | Absent |
| | Da2 | KZnAl₂F₉ | 10 | | | Da2 | 100 | Medium | Not discolored | Absent |
| | Da3 | KZnAl₂F₉ | 50 | | | Da3 | 100 | Large | Not discolored | Absent |
| Example 1 | Ea1 | CsZnAlF₆ | 1 | | Example 1 | Ea1 | 100 | Small | Not discolored | Absent |
| | Ea2 | CsZnAlF₆ | 10 | | | Ea2 | 100 | Medium | Not discolored | Absent |
| | Ea3 | CsZnAlF₆ | 50 | | | Ea3 | 100 | Large | Not discolored | Absent |
| | Fa1 | Cs₂ZnAlF₂ | 1 | | | Fa1 | 100 | Small | Not discolored | Absent |
| | Fa2 | Cs₂ZnAlF₇ | 10 | | | Fa2 | 100 | Medium | Not discolored | Absent |
| | Fa3 | Cs₂ZnAlF₇ | 50 | | | Fa3 | 100 | Large | Not discolored | Absent |
| | Ga1 | CsZn₂AlF₈ | 1 | | | Ga1 | 100 | Small | Not discolored | Absent |
| | Ga2 | CsZn₂AlF₈ | 10 | | | Ga2 | 100 | Medium | Not discolored | Absent |
| | Ga3 | CsZn₂AlF₈ | 50 | | | Ga3 | 100 | Large | Not discolored | Absent |
| | Ha1 | CsZnAl₂F₉ | 1 | | | Ha1 | 100 | Small | Not discolored | Absent |
| | Ha2 | CsZnAl₂F₉ | 10 | | | Ha2 | 100 | Medium | Not discolored | Absent |
| | Ha3 | CsZnAl₂F₉ | 50 | | | Ha3 | 100 | Large | Not discolored | Absent |

**TABLE 2**

| | Specimen | Flux composition | Application amount (g/m²) | | | Specimen | Joining ratio (%) | Size of fillet | External appearance of surface of aluminum | Residue on surface of aluminum |
|---|---|---|---|---|---|---|---|---|---|---|
| | Aa4 | KZnAlF₆ | 0.5 | | | Aa4 | 70 | Small | Not discolored | Absent |
| | Aa5 | KZnAlF₆ | 60 | | | Aa5 | 60 | Medium | White | Present (white) |
| | Ba4 | K₂ZnAlF₇ | 0.5 | | | Ba4 | 70 | Small | Not discolored | Absent |
| | Ba5 | K₂ZnAlF₇ | 60 | | | Ba5 | 60 | Medium | White | Present (white) |
| | Ca4 | KZn₂AlF₈ | 0.5 | | | Ca4 | 70 | Small | Not discolored | Absent |
| | Ca5 | KZn₇AlF₈ | 60 | | | Ca5 | 60 | Medium | White | Present (white) |
| | Da4 | KZnAl₂F₉ | 0.5 | | | Da4 | 70 | Small | Not discolored | Absent |
| Comparative Example 1 | Da5 | KZnAl₂F₉ | 60 | | Comparative Example 1 | Da5 | 60 | Medium | White | Present (white) |
| | Ea4 | CsZnAlF₆ | 0.5 | | | Ea4 | 70 | Small | Not discolored | Absent |
| | Ea5 | CsZnAlF₆ | 60 | | | Ea5 | 60 | Medium | White | Present (white) |
| | Fa4 | Cs₂ZnAlF₇ | 0.5 | | | Fa4 | 70 | Small | Not discolored | Absent |
| | Fa5 | Cs₂LnAlF₇ | 60 | | | Fa5 | 60 | Medium | White | Present (white) |
| | Ga4 | CsZn₂AlF₈ | 0.5 | | | Ga4 | 70 | Small | Not discolored | Absent |
| | Ga5 | CsZn₂AlF₈ | 60 | | | Ga5 | 60 | Medium | White | Present (white) |
| | Ha4 | CsZnAl₂F₉ | 0.5 | | | Ha4 | 70 | Small | Not discolored | Absent |
| | Ha5 | CsZnAl₂F₉ | 60 | | | Ha5 | 60 | Medium | White | Present (white) |

As shown in Table 1, good results were obtained when the flux component was applied in an amount of 1 to 50 g/m² (Example 1). As shown in Table 2, when the flux component was applied in an amount of less than 1 g/m² (Aa4, Ba4, Ca4, Da4, Ea4, Fa4, Ga4, and Ha4), the size of the fillet was small, and the joining ratio decreased. When the flux component was applied in an amount of more than 50 g/m² (Aa5, Ba5, Ca5, Da5, Ea5, Fa5, Ga5, and Ha5), a large amount of unreacted flux remained, and the joining ratio decreased due to the flux residue.

### Example 2

### Experimental flux composition

Flux powders (flux content: 100 mass%) having the average particle size and the composition shown in Table 3 were provided as a flux component.

### Brazing test

The brazing test was performed in the same manner as in Example 1 and Comparative Example 1, except that the flux component was applied in an amount of 20 g/m².

### Evaluation of brazability

The brazability was evaluated in the same manner as in Example 1 and Comparative Example 1. The evaluation results are shown in Table 3.

**TABLE 3**

| | Specimen | Flux composition | Average particle size (µm) | | | Specimen | Joining ratio (%) | Size of fillet | External appearance of surface of aluminum | Residue on surface of aluminum |
|---|---|---|---|---|---|---|---|---|---|---|
| | Ab1 | KZnAlF₆ | 20 | | | Ab1 | 100 | Large | Not discolored | Absent |
| | Ab2 | KZnAlF₆ | 70 | | | Ab2 | 100 | Medium | Not discolored | Absent |
| | Bb1 | K₂ZnAlF₇ | 20 | | | Bb1 | 100 | Large | Not discolored | Absent |
| | Bb2 | K₂ZnAlF₇ | 70 | | | Bb2 | 100 | Medium | Not discolored | Absent |
| | Cb1 | KZn₂AlF₈ | 20 | | | Cb1 | 100 | Large | Not discolored | Absent |
| | Cb2 | KZn₂AlF₈ | 70 | | | Cb2 | 100 | Medium | Not discolored | Absent |
| | Db1 | KZnAl₂F₉ | 20 | | | Db1 | 100 | Large | Not discolored | Absent |
| Example 2 | Db2 | KZnAl₂F₉ | 70 | | Example 2 | Db2 | 100 | Medium | Not discolored | Absent |
| | Eb1 | CsZnAlF₆ | 20 | | | Eb1 | 100 | Large | Not discolored | Absent |
| | Eb2 | CsZnAlF₆ | 70 | | | Eb2 | 100 | Medium | Not discolored | Absent |
| | Fb1 | Cs₂ZnAlF₇ | 20 | | | Fb1 | 100 | Large | Not discolored | Absent |
| | Fb2 | Cs₂ZnAlF₇ | 70 | | | Fb2 | 100 | Medium | Not discolored | Absent |
| | Gb1 | CsZn₂AlF₈ | 20 | | | Gb1 | 100 | Large | Not discolored | Absent |
| | Gb2 | CsZn₂AlF₈ | 70 | | | Gb2 | 100 | Medium | Not discolored | Absent |
| | Hb1 | CsZnAl₂F₉ | 20 | | | Hb1 | 100 | Large | Not discolored | Absent |
| | Hb2 | CsZnAl₂F₉ | 70 | | | Hb2 | 100 | Medium | Not discolored | Absent |

As shown in Table 3, good results were obtained in Example 2.

### Example 3 and Comparative Example 3

### Flux composition

Flux powders (average particle size: 10 µm) (flux content: 100 mass%) having the composition shown in Table 4 were provided as a flux component.

### Brazing test

The brazing test was performed in the same manner as in Example 1 and Comparative Example 1, except that the flux component was applied in an amount of 20 g/m², and the average oxygen concentration in the furnace was changed as shown in Table 4.

### Evaluation of brazability

The brazability was evaluated in the same manner as in Example 1 and Comparative Example 1. The evaluation results are shown in Table 4.

**TABLE 4**

| | Specimen | Flux composition | Average oxygen concentration (ppm) | | | Specimen | Joining ratio (%) | Size of fillet | External appearance of surface of aluminum | Residue on surface of aluminum |
|---|---|---|---|---|---|---|---|---|---|---|
| | Ac1 | KZnAlF₆ | 50 | | | Ac1 | 100 | Large | Not discolored | Absent |
| | Ac2 | KZnAlF₆ | 500 | | | Ac2 | 100 | Medium | Not discolored | Absent |
| | Ac3 | KZnAlF₆ | 1000 | | | Ac3 | 100 | Medium | Dull while | Absent |
| | Bc1 | K₂ZnAlF₇ | 50 | | | Bc1 | 100 | Large | Not discolored | Absent |
| | Bc2 | K₂ZnAlF₇ | 500 | | | Bc2 | 100 | Medium | Not discolored | Absent |
| | Bc3 | K₂ZnAlF₇ | 1000 | | | Bc3 | 100 | Medium | Dull white | Absent |
| | Cc1 | KZn₂AlF₈ | 50 | | | Cc1 | 100 | Large | Not discolored | Absent |
| | Cc2 | KZn₂AlF₈ | 500 | | | Cc2 | 100 | Medium | Not discolored | Absent |
| | Cc3 | KZn₂AlF₈ | 1000 | | | Cc3 | 100 | Medium | Dull white | Absent |
| | Dc1 | KZnAl₂F₉ | 50 | | | Dc1 | 100 | Large | Not discolored | Absent |
| | Dc2 | KZnAl₂F₉ | 500 | | | Dc2 | 100 | Medium | Not discolored | Absent |
| Example 3 | Dc3 | KZnAl₂F₉ | 1000 | | Example 3 | Dc3 | 100 | Medium | Dull white | Absent |
| | Ec1 | CsZnAlF₆ | 50 | | | Ec1 | 100 | Large | Not discolored | Absent |
| | Ec2 | CsZnAlF₆ | 500 | | | Ec2 | 100 | Medium | Not discolored | Absent |
| | Ec3 | CsZnAlF₆ | 1000 | | | Ec3 | 100 | Medium | Dull white | Absent |
| | Fc1 | Cs₂ZnAlF₇ | 50 | | | Fc1 | 100 | Large | Not discolored | Absent |
| | Fc2 | Cs₂ZnAlF₇ | 500 | | | Fc2 | 100 | Medium | Not discolored | Absent |
| | Fc3 | Cs₂ZnAlF₇ | 1000 | | | Fc3 | 100 | Medium | Dull white | Absent |
| | Gc1 | CsZn₂AlF₈ | 50 | | | Gc1 | 100 | Large | Not discolored | Absent |
| | Gc2 | CsZn₂AlF₈ | 500 | | | Gc2 | 100 | Medium | Not discolored | Absent |
| | Gc3 | CsZn₂AlF₈ | 1000 | | | Gc3 | 100 | Medium | Dull white | Absent |
| | Hc1 | CsZnAl₂F₉ | 50 | | | Hc1 | 100 | Large | Not discolored | Absent |
| | Hc2 | CsZnAl₂F₉ | 500 | | | Hc2 | 100 | Medium | Not discolored | Absent |
| | Hc3 | CsZnAl₂F₉ | 1000 | | | Hc3 | 100 | Medium | Dull white | Absent |
| Comparative Example 3 | Ic1 | KZnF₃ | 50 | | Comparative Example 3 | Ic1 | 100 | Large | Not discolored | Absent |
| | Ic2 | KZnF₃ | 500 | | | Ic2 | 60 | Small | Discolored | Present (discolored) |
| | Ic3 | KZnF₃ | 1000 | | | Ic3 | 0 | - | White | Present (white) |

As shown in Table 4, good results were obtained in Example 3 even when the oxygen concentration in the atmosphere during brazing was high. The surface of aluminum of specimens Ac3, Bc3, Dc3, Ec3, Fc3, and Hc3 was dull white to some extent, but the degree of whitening was at an acceptable level.

In Comparative Example 3, no problem occurred when the oxygen concentration in the atmosphere during brazing was low (Ic1). However, when the oxygen concentration in the atmosphere during brazing was high, a discolored residue and discoloring were observed (Ic2), or most of KZnF₃ remained unreacted, and a fillet was not formed (Ic3).

### Example 4 and Comparative Example 4

### Flux composition

The materials shown in Tables 5-1 to 5-4 were mixed in the mixing ratio shown in Tables 5-1 to 5-4 to prepare a powder mixture (flux composition) (average particle size: 10 µm).

The materials shown in Tables 5-5 to 5-8 were mixed in the mixing ratio shown in Tables 5-5 to 5-8 to prepare a powder mixture (comparative flux composition) (average particle size: 10 µm).

### Brazing test

The brazing test was performed in the same manner as in Example 1 and Comparative Example 1, except that the flux component was applied in an amount of 20 g/m², and the average oxygen concentration in the furnace was set to 500 ppm.

### Evaluation of brazability

The brazability was evaluated in the same manner as in Example 1 and Comparative Example 1. The evaluation results are shown in Tables 5-1 to 5-8.

**TABLE 5-1**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ad1 | KZnAlF₆/KAlF₁ | 90/10 | | | Ad1 | 100 | Medium | Not discolored | Absent |
| | Ad2 | KZnAlF₆/KAlF₁ | 55/45 | | | Ad2 | 100 | Medium | Not discolored | Absent |
| | Ad3 | KZnAlF₆/K₂AlF₅ | 90/10 | | | Ad3 | 100 | Medium | Not discolored | Absent |
| | Ad4 | KZnAlF₆/K₂AlF₅ | 55/45 | | | Ad4 | 100 | Medium | Not discolored | Absent |
| | Ad5 | KZnAlF₆/K₃AlF₆ | 90/10 | | | Ad5 | 100 | Medium | Not discolored | Absent |
| | Ad6 | KZnAlF₆/K₃AlF₆ | 55/45 | | | Ad6 | 100 | Medium | Not discolored | Absent |
| | Ad7 | KZnAlF₆/CsAlF₁ | 90/10 | | | Ad7 | 100 | Medium | Not discolored | Absent |
| | Ad8 | KZnAlF₆/CsAlF₄ | 55/45 | | | Ad8 | 100 | Medium | Not discolored | Absent |
| | Ad9 | KZnAlF₆/Cs₂AlF₅ | 90/10 | | | Ad9 | 100 | Medium | Not discolored | Absent |
| | Ad10 | KZnAlF₆/Cs₂AlF₅ | 55/45 | | | Ad10 | 100 | Medium | Not discolored | Absent |
| | Ad11 | KZnAlF₆/Cs₃AlF₆ | 90/10 | | | Ad11 | 100 | Medium | Not discolored | Absent |
| | Ad12 | KZnAlF₆/Cs₃AlF₆ | 55/45 | | | Ad12 | 100 | Medium | Not discolored | Absent |
| | Ad13 | KZnAlF₆/KZnF₃ | 90/10 | | | Ad13 | 100 | Medium | Not discolored | Absent |
| | Ad14 | KZnAlF₆/KZnF₃ | 55/45 | | | Ad14 | 100 | Medium | Not discolored | Absent |
| | Ad15 | KZnAlF₆/K₂ZnF₄ | 90/10 | | | Ad15 | 100 | Medium | Not discolored | Absent |
| | Ad16 | KZnAlF₆/K₂nF₁ | 55/45 | | | Ad16 | 100 | Medium | Not discolored | Absent |
| | Ad17 | KZnAlF₆/K₃Zn₂F₇ | 90/10 | | | Ad17 | 100 | Medium | Not discolored | Absent |
| | Ad18 | KZnAlF₆/K₃Zn₂F₇ | 55/45 | | | Ad18 | 100 | Medium | Not discolored | Absent |
| | Ad19 | KZnAlF₆/CsZnF₃ | 90/10 | | | Ad19 | 100 | Medium | Not discolored | Absent |
| | Ad20 | KZnAlF₆/CsZnF₃ | 55/45 | | | Ad20 | 100 | Medium | Not discolored | Absent |
| | Ad21 | KZnAlF₆/Cs₂ZnF₄ | 90/10 | | | Ad21 | 100 | Medium | Not discolored | Absent |
| | Ad22 | KZnAlF₆/CS₂ZnF₄ | 55/45 | | | Ad22 | 100 | Medium | Not discolored | Absent |
| | Ad23 | KZnAlF₆/Cs₃Zn₂F₇ | 90/10 | | | Ad23 | 100 | Medium | Not discolored | Absen |
| | Ad24 | KZnAlF₆/Cs₃Zn₂F₇ | 55/45 | | | Ad24 | 100 | Medium | Not discolored | Absen |
| | Bd1 | K₂ZnAlF₇/KAlF₄ | 90/10 | | | Bd1 | 100 | Medium | Not discolored | Absen |
| | Bd2 | K₂ZnAlF₇/KAlF₄ | 55/45 | | | Bd2 | 100 | Medium | Not discolored | Absent |
| | Bd3 | K₂ZnAlF₇/K₂AlF₅ | 90/10 | | | Bd3 | 100 | Medium | Not discolored | Absent |
| Example 4 | Bd4 | K₂ZnAlF₇/K₂AlF₅ | 55/45 | | Example 4 | Bd4 | 100 | Medium | Not discolored | Absent |
| | Bd5 | K₂ZnAlF₇/K₃AlF₆ | 90/10 | | | Bd5 | 100 | Medium | Not discolored | Absent |
| | Bd6 | K₂ZnAlF₇/K₃AlF₆ | 55/45 | | | Bd6 | 100 | Medium | Not discolored | Absent |
| | Bd7 | K₂ZnAlF₇/CsAlF₄ | 90/10 | | | Bd7 | 100 | Medium | Not discolored | Absent |
| | Bd8 | K₂ZnAlF₇/CsAlF₄ | 55/45 | | | Bd8 | 100 | Medium | Not discolored | Absent |
| | Bd9 | K₂nAlF₇/Cs₂AlF₅ | 90/10 | | | Bd9 | 100 | Medium | Not discolored | Absent |
| | Bd10 | K₂ZnAlF₇/Cs₂AlF₅ | 55/45 | | | Bd10 | 100 | Medium | Not discolored | Absent |
| | Bd11 | K₂ZnAlF₇/Cs₃AlF₆ | 90/10 | | | Bd11 | 100 | Medium | Not discolored | Absent |
| | Bd12 | K₂ZnAlF₇/Cs₃AlF₆ | 55/45 | | | Bd12 | 100 | Medium | Not discolored | Absent |
| | Bd13 | K₂ZnAlF₇/KZnF₃ | 90/10 | | | Bd13 | 100 | Medium | Not discolored | Absent |
| | Bd14 | K₂ZnAlF₇/KZnF₃ | 55/45 | | | Bd14 | 100 | Medium | Not discolored | Absent |
| | Bd15 | K₂ZnAlF₇/K₂ZnF₄ | 90/10 | | | Bd15 | 100 | Medium | Not discolored | Absent |
| | Bd16 | K₂ZnAlF₇/K₂ZnF₄ | 55/45 | | | Bd16 | 100 | Medium | Not discolored | Absent |
| | Bd17 | K₂ZnAlF₇/K₃Zn₂F₇ | 90/10 | | | Bd17 | 100 | Medium | Not discolored | Absent |
| | Bd18 | K₂ZnAlF₇/K₃Zn₂F₇ | 55/45 | | | Bd18 | 100 | Medium | Not discolored | Absent |
| | Bd19 | K₂ZnAlF₇/CsZnF₃ | 90/10 | | | Bd19 | 100 | Medium | Not discolored | Absent |
| | Bd20 | K₂ZnAlF₇/CsZnF₃ | 55/45 | | | Bd20 | 100 | Medium | Not discolored | Absent |
| | Bd21 | K₂ZnAlF₇/Cs₂ZnF₄ | 90/10 | | | Bd21 | 100 | Medium | Not discolored | Absent |
| | Bd22 | K₂ZnAlF₇/Cs₂ZnF₄ | 55/45 | | | Bd22 | 100 | Medium | Not discolored | Absent |
| | Bd23 | K₂ZnAlF₂/Cs₃Zn₂F₇ | 90/10 | | | Bd23 | 100 | Medium | Not discolored | Absent |
| | Bd24 | K₂ZnAlF₇/Cs₃Zn₂F₇ | 55/45 | | | Bd24 | 100 | Medium | Not discolored | Absent |

**TABLE 5-2**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Cd1 | KZn₂AlF₈fKAlF₄ | 90/10 | | | Cd1 | 100 | Medium | Not discolored | Absent |
| | Cd2 | KZn₂AlF₈/KAlF₄ | 55/45 | | | Cd2 | 100 | Medium | Not discolored | Absent |
| | Cd3 | KZn₂AlF₈/K₂AlF₅ | 90/10 | | | Cd3 | 100 | Medium | Not discolored | Absent |
| | Cd4 | KZn₂AlF₈/K₂AlF₅ | 55/45 | | | Cd4 | 100 | Medium | Not discolored | Absent |
| | Cd5 | KZn₂AlF₈/K₃AlF₆ | 90/10 | | | Cd5 | 100 | Medium | Not discolored | Absent |
| | Cd6 | KZn₂AlF₈/K₃AlF₆ | 55/45 | | | Cd6 | 100 | Medium | Not discolored | Absent |
| | Cd7 | KZn₂AlF₈/CsAlF₄ | 90/10 | | | Cd7 | 100 | Medium | Not discolored | Absent |
| | Cd8 | KZn₂AlF₈/CsAlF₄ | 55/45 | | | Cd8 | 100 | Medium | Not discolored | Absent |
| | Cd9 | KZn₂AlF₈/Cs₂AlF₅ | 90/10 | | | Cd9 | 100 | Medium | Not discolored | Absent |
| | Cd10 | KZn₂AlF₈/Cs₂AlF₅ | 55/45 | | | Cd10 | 100 | Medium | Not discolored | Absent |
| | Cd11 | KZn₂AlF₈/Cs₃AlF₆ | 90/10 | | | Cd11 | 100 | Medium | Not discolored | Absent |
| | Cd12 | KZn₂AlF₆/Cs₃AlF₆ | 55/45 | | | Cd12 | 100 | Medium | Not discolored | Absent |
| | Cd13 | KZn₂AlF₈/KZnF₃ | 90/10 | | | Cd13 | 100 | Medium | Not discolored | Absent |
| | Cd14 | KZn₂AlF₈/KZnF₃ | 55/45 | | | Cd14 | 100 | Medium | Not discolored | Absent |
| | Cd15 | KZn₂AlF₃/K₂ZnF₄ | 90/10 | | | Cd15 | 100 | Medium | Not discolored | Absent |
| | Cd16 | KZn₂AlF₃/K₂ZnF₄ | 55/45 | | | Cd16 | 100 | Medium | Not discolored | Absent |
| | Cd17 | KZn₂AlF₈/K₃Zn₂F₂ | 90/10 | | | Cd17 | 100 | Medium | Not discolored | Absent |
| | Cd18 | KZn₂AlF₈/Zn₃F₇ | 55/45 | | | Cd18 | 100 | Medium | Not discolored | Absent |
| | Cd19 | KZn₂AlF₈/CsZnF₃ | 90/10 | | | Cd19 | 100 | Medium | Not discolored | Absent |
| | Cd20 | KZn₂AlF₈/CsZnF₃ | 55/45 | | | Cd20 | 100 | Medium | Not discolored | Absent |
| | Cd21 | KZn₂AlF₅/Cs₂ZnF₄ | 90/10 | | | Cd21 | 100 | Medium | Not discolored | Absent |
| | Cd22 | KZn₂AlF₈/Cs₂ZnF₄ | 55/45 | | | Cd22 | 100 | Medium | Not discolored | Absent |
| | Cd23 | KZn₂AlF₈/Cs₃Zn₂F₇ | 90/10 | | | Cd23 | 100 | Medium | Not discolored | Absent |
| | Cd24 | KZn₂AlF₈/Cs₃Zn₂F₇ | 55/45 | | | Cd24 | 100 | Medium | Not discolored | Absent |
| | Dd1 | KZnAl₂F₉/KAlF₄ | 90/10 | | | Dd1 | 100 | Medium | Not discolored | Absent |
| | Dd2 | KZnAl₂F₉/KAlF₄ | 55/45 | | | Dd2 | 100 | Medium | Not discolored | Absent |
| | Dd3 | KZnAl₂F₉/K₂AlF₅ | 90/10 | | | Dd3 | 100 | Medium | Not discolored | Absent |
| Example 4 | Dd4 | KZnAl₂F₉/K₂AlF₅ | 55/45 | | Example 4 | Dd4 | 100 | Medium | Not discolored | Absent |
| | Dd5 | KZnAl₂F₉/K₃AlF₆ | 90/10 | | | Dd5 | 100 | Medium | Not discolored | Absent |
| | Dd6 | KZnAl₂F₉/K₃AlF₆ | 55/45 | | | Dd6 | 100 | Medium | Not discolored | Absent |
| | Dd7 | KZnAl₂F₉/CsAlF₄ | 90/10 | | | Dd7 | 100 | Medium | Not discolored | Absent |
| | Dd8 | KZnAl₂F₉/CsAlF₄ | 55/45 | | | Dd8 | 100 | Medium | Not discolored | Absent |
| | Dd9 | KZnAl₂F₉/Cs₂AlF₅ | 90/10 | | | Dd9 | 100 | Medium | Not discolored | Absent |
| | Dd10 | KZnAl₂F₉/Cs₂AlF₅ | 55/45 | | | Dd10 | 100 | Medium | Not discolored | Absent |
| | Dd11 | KZnAl₂F₉/Cs₃AlF₆ | 90/10 | | | Dd11 | 100 | Medium | Not discolored | Absent |
| | Dd12 | KZnAl₂F₉/Cs₃AlF₆ | 55/45 | | | Dd12 | 100 | Medium | Not discolored | Absent |
| | Dd13 | KZnAl₂F₉/KZnF₃ | 90/10 | | | Dd13 | 100 | Medium | Not discolored | Absent |
| | Dd14 | KZnAl₂F₉/KZnF₃ | 55/45 | | | Dd14 | 100 | Medium | Not discolored | Absent |
| | Dd15 | KZnAl₂F₉/K₂ZnF₄ | 90/10 | | | Dd15 | 100 | Medium | Not discolored | Absent |
| | Dd16 | KZnAl₂F₉/K₂ZnF₄ | 55/45 | | | Dd16 | 100 | Medium | Not discolored | Absent |
| | Dd17 | KZnAl₂F₉/K₃Zn₂F₇ | 90/10 | | | Dd17 | 100 | Medium | Not discolored | Absent |
| | Dd18 | KZnAl₂F₉/K₃Zn₂F₇ | 55/45 | | | Dd18 | 100 | Medium | Not discolored | Absent |
| | Dd19 | KZnAl₂F₉/CsZnF₃ | 90/10 | | | Dd19 | 100 | Medium | Not discolored | Absent |
| | Dd20 | KZnAl₂F₉/CsZnF₃ | 55/45 | | | Dd20 | 100 | Medium | Not discolored | Absent |
| | Dd21 | KZnAl₂F₉/Cs₂ZnF₄ | 90/10 | | | Dd21 | 100 | Medium | Not discolored | Absent |
| | Dd22 | KZnAl₂F₉/Cs₂ZnF₄ | 55/45 | | | Dd22 | 100 | Medium | Not discolored | Absent |
| | Dd23 | KZnAl₂F₉/Cs₃Zn₂F₇ | 90/10 | | | Dd23 | 100 | Medium | Not discolored | Absent |
| | Dd24 | KZnAl₂F₉/Cs₃Zn₂F₇ | 55/45 | | | Dd24 | 100 | Medium | Not discolored | Absent |

**TABLE 5-3**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ed1 | CsZnAlF₆/KAlF₄ | 90/10 | | | Ed1 | 100 | Medium | Not discolored | Absent |
| | Ed2 | CsZnAlF₆/KAlF₄ | 55/45 | | | Ed2 | 100 | Medium | Not discolored | Absent |
| | Ed3 | CsZnAlF₆/K₂AlF₅ | 90/10 | | | Ed3 | 100 | Medium | Not discolored | Absent |
| | Ed4 | CsZnAlF₆/K₂AlF₅ | 55/45 | | | Ed4 | 100 | Medium | Not discolored | Absent |
| | Ed5 | CsZnAlF₆/K₃AlF₆ | 90/10 | | | Ed5 | 100 | Medium | Not discolored | Absent |
| | Ed6 | CsZnAlF₆/K₃AlF₆ | 55/45 | | | Ed6 | 100 | Medium | Not discolored | Absent |
| | Ed7 | CsZnAlF₆/CsAlF₄ | 90/10 | | | Ed7 | 100 | Medium | Not discolored | Absent |
| | Ed8 | CsZnAlF₆/CsAlF₄ | 55/45 | | | Ed8 | 100 | Medium | Not discolored | Absent |
| | Ed9 | CsZnAlF₆/CsAlF₅ | 90/10 | | | Ed9 | 100 | Medium | Not discolored | Absent |
| | Ed10 | CsZnAlF₆/Cs₂AlF₅ | 55/45 | | | Ed10 | 100 | Medium | Not discolored | Absent |
| | Ed11 | CsZnAlF₆/Cs₃AlF₆ | 90/10 | | | Ed11 | 100 | Medium | Not discolored | Absent |
| | Ed12 | CsZnAlF₆/Cs₃AlF₆ | 55/45 | | | Ed12 | 100 | Medium | Not discolored | Absent |
| | Ed13 | CsZnAlF₆/KZnF₃ | 90/10 | | | Ed13 | 100 | Medium | Not discolored | Absent |
| | Ed14 | CsZnAlF₆/KZnF₃ | 55/45 | | | Ed14 | 100 | Medium | Not discolored | Absent |
| | Ed15 | CsZnAlF₆/K₂ZnF₄ | 90/10 | | | Ed15 | 100 | Medium | Not discolored | Absent |
| | Ed16 | CsZnAlF₆/K₂ZnF₄ | 55/45 | | | Ed16 | 100 | Medium | Not discolored | Absent |
| | Ed17 | CsZnAlF₆/K₃Zn₂F₇ | 90/10 | | | Ed17 | 100 | Medium | Not discolored | Absent |
| | Ed18 | CsZnAlF₆/K₃Zn₂F₇ | 55/45 | | | Ed18 | 100 | Medium | Not discolored | Absent |
| | Ed19 | CsZnAlF₆/CsZnF₃ | 90/10 | | | Ed19 | 100 | Medium | Not discolored | Absent |
| | Ed20 | CsZnAlF₆/CsZnF₃ | 55/45 | | | Ed20 | 100 | Medium | Not discolored | Absent |
| | Ed21 | CsZnAlF₆/Cs₂ZnF₄ | 90/10 | | | Ed21 | 100 | Medium | Not discolored | Absent |
| | Ed22 | CsZnAlF₆/Cs₂ZnF₄ | 55/45 | | | Ed22 | 100 | Medium | Not discolored | Absent |
| | Ed23 | CsZnAlF₆/Cs₃Zn₂F₇ | 90/10 | | | Ed23 | 100 | Medium | Not discolored | Absent |
| | Ed24 | CsZnAlF₆/Cs₃Zn₂F₇ | 55/45 | | | Ed24 | 100 | Medium | Not discolored scolored | Absent |
| | Fd1 | Cs₂ZnAlF₇/KAlF₄ | 90/10 | | | Fd1 | 100 | Medium | Not discolored scolored | Absent |
| | Fd2 | Cs₂ZnAlF₇/KAlF₄ | 55/45 | | | Fd2 | 100 | Medium | Not discolored | Absent |
| | Fd3 | Cs₂ZnAlF₇/K₂AlF₅ | 90/10 | | | Fd3 | 100 | Medium | Not discolored | Absent |
| Example 4 | Fd4 | Cs₂ZnAlF₇/K₂AlF₅ | 55/45 | | Example 4 | Fd4 | 100 | Medium | Not discolored | Absent |
| | Fd5 | Cs₂ZnAlF₇/K₃AlF₆ | 90/10 | | | Fd5 | 100 | Medium | Not discolored | Absent |
| | Fd6 | Cs₂ZnAlF₇/K₃AlF₆ | 55/45 | | | Fd6 | 100 | Medium | Not discolored | Absent |
| | Fd7 | Cs₂ZnAlF₇/CsAlF₄ | 90/10 | | | Fd7 | 100 | Medium | Not discolored | Absent |
| | Fd8 | Cs₂ZnAlF₇/CsAlF₄ | 55/45 | | | Fd8 | 100 | Medium | Not discolored | Absent |
| | Fd9 | Cs₂ZnAlF₇/Cs₂AlF₅ | 90/10 | | | Fd9 | 100 | Medium | Not discolored | Absent |
| | Fd10 | Cs₂ZnAlF₇/Cs₂AlF₅ | 55/45 | | | Fd10 | 100 | Medium | Not discolored | Absent |
| | Fd11 | Cs₂ZnAlF₇/Cs₃AlF₆ | 90/10 | | | Fd11 | 100 | Medium | Not discolored | Absent |
| | Fd12 | Cs₂ZnAlF₇/Cs₃AlF₆ | 55/45 | | | Fd12 | 100 | Medium | Not discolored | Absent |
| | Fd13 | Cs₂ZnAlF₇/KZnF₃ | 90/10 | | | Fd13 | 100 | Medium | Not discolored | Absent |
| | Fd14 | Cs₂ZnAlF₇/KZnF₃ | 55/45 | | | Fd14 | 100 | Medium | Not discolored | Absent |
| | Fd15 | Cs₂ZnAlF₇/K₂ZnF₄ | 90/10 | | | Fd15 | 100 | Medium | Not discolored | Absent |
| | Fd16 | Cs₂ZnAlF₇/K₂ZnF₄ | 55/45 | | | Fd16 | 100 | Medium | Not discolored | Absent |
| | Fd17 | Cs₂ZnAlF₇/K₃Zn₂F₇ | 90/10 | | | Fd17 | 100 | Medium | Not discolored | Absent |
| | Fd18 | Cs₂ZnAlF₇/K₃Zn₂F₇ | 55/45 | | | Fd18 | 100 | Medium | Not discolored | Absent |
| | Fd19 | Cs₂ZnAlF₇/CsZnF₃ | 90/10 | | | Fd19 | 100 | Medium | Not discolored | Absent |
| | Fd20 | Cs₂ZnAlF₇/CsZnF₃ | 55/45 | | | Fd20 | 100 | Medium | Not discolored | Absent |
| | Fd21 | Cs₂ZnAlF₇/Cs₂ZnF₄ | 90/10 | | | Fd21 | 100 | Medium | Not discolored | Absent |
| | Fd22 | Cs₂ZnAlF₇/Cs₂ZnF₄ | 55/45 | | | Fd22 | 100 | Medium | Not discolored | Absent |
| | Fd23 | Cs₂ZnAlF₇/Cs₃Zn₂F₇ | 90/10 | | | Fd23 | 100 | Medium | Not discolored | Absent |
| | Fd24 | Cs₂ZnAlF₇/Cs₃Zn₂F₇ | 55/45 | | | Fd24 | 100 | Medium | Not discolored | Absent |

**TABLE 5-4**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Gd1 | CsZn₂AlF₈/KAlF₄ | 90/10 | | | Gd1 | 100 | Medium | Not discolored | Absent |
| | Gd2 | CsZn₂AlF₈/KAlF₄ | 55/45 | | | Gd2 | 100 | Medium | Not discolored | Absent |
| | Gd3 | CsZn₂AlF₈/K₂AlF₅ | 90/10 | | | Gd3 | 100 | Medium | Not discolored | Absent |
| | Gd4 | CsZn₂AlF₈/K₂AlF₅ | 55/45 | | | Gd4 | 100 | Medium | Not discolored | Absent |
| | Gd5 | CsZn₂AlF₈/K₃AlF₆ | 90/10 | | | Gd5 | 100 | Medium | Not discolored | Absent |
| | Gd6 | CsZn₂AlF₈/K₃AlF₆ | 55/45 | | | Gd6 | 100 | Medium | Not discolored | Absent |
| | Gd7 | CsZn₂AlF₈/CsAlF₄ | 90/10 | | | Gd7 | 100 | Medium | Not discolored | Absent |
| | Gd8 | CsZn₂AlF₈/CsAlF₄ | 55/45 | | | Gd8 | 100 | Medium | Not discolored | Absent |
| | Gd9 | CsZn₂AlF₈/Cs₂AlF₅ | 90/10 | | | Gd9 | 100 | Medium | Not discolored | Absent |
| | Gd10 | CsZn₂AlF₈/Cs₂AlF₅ | 55/45 | | | Gd10 | 100 | Medium | Not discolored | Absent |
| | Gd11 | CsZn₂AlF₈/Cs₃AlF₆ | 90/10 | | | Gd11 | 100 | Medium | Not discolored | Absent |
| | Gd12 | CsZn₂AlF₈/Cs₃AlF₆ | 55/45 | | | Gd12 | 100 | Medium | Not discolored | Absent |
| | Gd13 | CsZn₂AlF₈/KZnF₃ | 90/10 | | | Gd13 | 100 | Medium | Not discolored | Absent |
| | Gd14 | CsZn₂AlF₈/KZnF₃ | 55/45 | | | Gd14 | 100 | Medium | Not discolored | Absent |
| | Gd15 | CsZn₂AlF₈/K₂ZnF₄ | 90/10 | | | Gd15 | 100 | Medium | Not discolored | Absent |
| | Gd16 | CsZn₂AlF₈/K₂ZnF₄ | 55/45 | | | Gd16 | 100 | Medium | Not discolored | Absent |
| | Gd17 | CsZn₂AlF₈/K₃Zn₂F₇ | 90/10 | | | Gd17 | 100 | Medium | Not discolored | Absent |
| | Gd18 | CsZn₂AlF₈/K₃Zn₂F₇ | 55/45 | | | Gd18 | 100 | Medium | Not discolored | Absent |
| | Gd19 | CsZn₂AlF₈/CsZnF₃ | 90/10 | | | Gd 9 | 100 | Medium | Not discolored | Absent |
| | Gd20 | CsZn₂AlF₈/CsZnF₃ | 55/45 | | | Gd20 | 100 | Medium | Not discolored | Absent |
| | Gd21 | CsZn₂AlF₈/Cs₂ZnF₄ | 90/10 | | | Gd21 | 100 | Medium | Not discolored | Absent |
| | Gd22 | CsZn₂AlF₈/Cs₂ZnF₄ | 55/45 | | | Gd22 | 100 | Medium | Not discolored | Absent |
| | Gd23 | CsZn₂AlF₈/Cs₃Zn₂F₇ | 90/10 | | | Gd23 | 100 | Medium | Not discolored | Absent |
| | Gd24 | CsZn₂AlF₈/Cs₃Zn₂F₇ | 55/45 | | | Gd24 | 100 | Medium | Not discolored | Absent |
| | Hd1 | CsZnAl₂F₉/KAlF₄ | 90/10 | | | Hd1 | 100 | Medium | Not discolored | Absent |
| | Hd2 | CsZnAl₂F₉/KAlF₄ | 55/45 | | | Hd2 | 100 | Medium | Not discolored | Absent |
| | Hd3 | CsZnAl₂F₉/K₂AlF₅ | 90/10 | | | Hd3 | 100 | Medium | Not discolored | Absent |
| Example 4 | Hd4 | CsZnAl₂F₉/K₂AlF₅ | 55/45 | | Example 4 | Hd4 | 100 | Medium | Not discolored | Absent |
| | Hd5 | CsZnAl₂F₉/K₃AlF₆ | 90/10 | | | Hd5 | 100 | Medium | Not discolored | Absent |
| | Hd6 | CsZnAl₂F₉/K₃AlF₆ | 55/45 | | | Hd6 | 100 | Medium | Not discolored | Absent |
| | Hd7 | CsZnAl₂F₉/CsAlF₄ | 90/10 | | | Hd7 | 100 | Medium | Not discolored | Absent |
| | Hd8 | CsZnAl₂F₉/CsAlF₄ | 55/45 | | | Hd8 | 100 | Medium | Not discolored | Absent |
| | Hd9 | CsZnAl₂F₉/Cs₂AlF₅ | 90/10 | | | Hd9 | 100 | Medium | Not discolored | Absent |
| | Hd10 | CsZnAl₂F₉/Cs₂AlF₅ | 55/45 | | | Hd10 | 100 | Medium | Not discolored | Absent |
| | Hd11 | CsZnAl₂F₉/Cs₃AlF₆ | 90/10 | | | Hd11 | 100 | Medium | Not discolored | Absent |
| | Hd12 | CsZnAl₂F₉/Cs₃AlF₆ | 55/45 | | | Hd12 | 100 | Medium | Not discolored | Absent |
| | Hd13 | CsZnAl₂F₉/KZnF₃ | 90/10 | | | Hd13 | 100 | Medium | Not discolored | Absent |
| | Hd14 | CsZnAl₂F₉/KZnF₃ | 55/45 | | | Hd14 | 100 | Medium | Not discolored | Absent |
| | Hd15 | CsZnAl₂F₉/K₂ZnF₄ | 90/10 | | | Hd15 | 100 | Medium | Not discolored | Absent |
| | Hd16 | CsZnAl₂F₉/K₂ZnF₄ | 55/45 | | | Hd16 | 100 | Medium | Not discolored | Absent |
| | Hd17 | CsZnAl₂F₉/K₃Zn₂F₇ | 90/10 | | | Hd17 | 100 | Medium | Not discolored | Absent |
| | Hd18 | CsZnAl₂F₉/K₃Zn₂F₇ | 55/45 | | | Hd18 | 100 | Medium | Not discolored | Absent |
| | Hd19 | CsZnAl₂F₉/CsZnF₃ | 90/10 | | | Hd19 | 100 | Medium | Not discolored | Absent |
| | Hd20 | CsZnAl₂F₉/CsZnF₃ | 55/45 | | | Hd20 | 100 | Medium | Not discolored | Absent |
| | Hd21 | CsZnAl₂F₉/Cs₂ZnF₄ | 90/10 | | | Hd21 | 100 | Medium | Not discolored | Absent |
| | Hd22 | CsZnAl₂F₉/Cs₂ZnF₄ | 55/45 | | | Hd22 | 100 | Medium | Not discolored | Absent |
| | Hd23 | CsZnAl₂F₉/Cs₃Zn₂F₇ | 90/10 | | | Hd23 | 100 | Medium | Not discolored | Absent |
| | Hd24 | CsZnAl₂F₉/Cs₃Zn₂F₇ | 55/45 | | | Hd24 | 100 | Medium | Not discolored | Absent |

**TABLE 5-5**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ad25 | KZnAlF₆/KAlF₄ | 10/90 | | | Ad25 | 90 | Small | White | Present (white) |
| | Ad26 | KZnAlF₆/K₂AlF₅ | 10/90 | | | Ad26 | 90 | Small | White | Present (white) |
| | Ad27 | KZnAlF₆/K₃AlF₆ | 10/90 | | | Ad27 | 90 | Small | White | Present (white) |
| | Ad28 | KZnAlF₆/CsAlF₄ | 10/90 | | | Ad28 | 90 | Small | White | Present (white) |
| | Ad29 | KZnAlF₆/Cs₂AlF₅ | 10/90 | | | Ad29 | 90 | Small | White | Present (white) |
| | Ad30 | KZnAlF₆/Cs₃AlF₆ | 10/90 | | | Ad30 | 90 | Small | Whitete | Present (white) |
| | Ad31 | KZnAlF₆/KZnF₃ | 10/90 | | | Ad31 | 70 | Sma | Discolored | Present (white) |
| | Ad32 | KZnAlF₆/K₂ZnF₄ | 10/90 | | | Ad32 | 70 | Small | Discolored | Present (discolored) |
| | Ad33 | KZnAlF₆/K₃Zn₂F₇ | 10/90 | | | Ad33 | 70 | Small | Discolored | Present (discolored) |
| | Ad34 | KZnAlF₆/CsZnF₃ | 10/90 | | | Ad34 | 70 | Small | Discolored | resent (discolored) |
| | Ad35 | KZnAlF₆/Cs₂ZnF₄ | 10/90 | | | Ad35 | 70 | Small | Discolored | Present (discolored) |
| | Ad36 | KZnAlF₆/Cs₃Zn₂F₇ | 10/90 | | | Ad36 | 70 | Small | Discolored | Present (discolored) |
| | Bd25 | K₂ZnAlF₇/KAlF₄ | 10/90 | | | Bd25 | 90 | Small | White | Present (white) |
| | Bd26 | K₂ZnAlF₇/K₂AlF₅ | 10/90 | | | Bd26 | 90 | Small | White | Present (white) |
| | Bd27 | K₂ZnAlF₇/K₃AlF₆ | 10/90 | | | Bd27 | 90 | Small | White | Present (white) |
| | Bd28 | K₂ZnAlF₇/CsAlF₄ | 10/90 | | | Bd28 | 90 | Small | White | Present (white) |
| | Bd29 | K₂ZnAlF₇/Cs₂AlF₅ | 10/90 | | | Bd29 | 90 | Small | White | Present (white) |
| | Bd30 | K₂ZnAlF₇/Cs₃AlF₆ | 10/90 | | | Bd30 | 90 | Small | Whitete | Present (white) |
| | Bd31 | K₂ZnAlF₇/KZnF₃ | 10/90 | | | Bd31 | 90 | Small | Discolored | Present (discolored) |
| | Bd32 | K₂ZnAlF₇/K₂ZnF₄ | 10/90 | | | Bd32 | 70 | Small | Discolored | Present (discolored) |
| | Bd33 | K₂ZnAlF₇/K₃Zn₂F₇ | 10/90 | | | Bd33 | 70 | Small | Discolored | Present (discolored) |
| | Bd34 | K₂ZnAlF₇/CsZnF₃ | 10/90 | | | Bd34 | 70 | Small | Discolored | Present (discolored) |
| | Bd35 | K₂ZnAlF₇/Cs₂ZnF₄ | 10/90 | | | Bd35 | 70 | Small | Discolored | Present (discolored) |
| | Bd36 | K₂ZnAlF₇/Cs₃Zn₂F₇ | 10/90 | | | Bd36 | 70 | Small | Discolored | Present (discolored) |
| | Cd25 | KZn₂AlF₈/KAlF₄ | 10/90 | | | Cd25 | 90 | Small | White | Present (white) |
| Comparative Examples 4 | Cd26 | KZn₂AlF₈/K₂AlF₅ | 10/90 | | Comparative Examples 4 | Cd26 | 90 | Small | White | Present (white) |
| | Cd27 | KZn₂AlF₈/K₃AlF₆ | 10/90 | | | Cd27 | 90 | Small | White | Present (white) |
| | Cd28 | KZn₂AlF₈/CsAlF₄ | 10/90 | | | Cd28 | 90 | Small | White | Present (white) |
| | Cd29 | KZn₂AlF₈/Cs₂AlF₅ | 10/90 | | | Cd29 | 90 | Sma | White | Present (white) |
| | Cd30 | KZn₂AlF₈/Cs₃AlF₆ | 10/90 | | | Cd30 | 90 | Small | White | Present (white) |
| | Cd31 | KZn₂AlF₈/K₂ZnF₄ | 10/90 | | | Cd31 | 70 | Small | Discolored | Present (white) |
| | Cd32 | KZn₂AlF₈/K₂ZnF₄ | 10/90 | | | Cd32 | 70 | Small | Discolored | Present (discolored) |
| | Cd33 | KZn₂AlF₈/K₃Zn₂F₇ | 10/90 | | | Cd33 | 70 | Small | Discolored | Present (discolored) |
| | Cd34 | KZn₂AlF₈/CsZnF₃ | 10/90 | | | Cd34 | 70 | Small | Discolored | Present (discolored) |
| | Cd35 | KZn₂AlF₈/Cs₂ZnF₄ | 10/90 | | | Cd35 | 70 | Small | Discolored | Present (discolored) |
| | Cd36 | KZn₂AlF₈/Cs₃Zn₂F₇ | 10/90 | | | Cd36 | 70 | Small | Discolored | Present (Discolored) |
| | Dd25 | KZnAl₂F₉/KAlF₄ | 10/90 | | | Dd25 | 90 | Smal | White | Present (white) |
| | Dd26 | KZnAl₂F₉/K₂AlF₅ | 10/90 | | | Dd26 | 90 | Small | White | Present (white) |
| | Dd27 | KZnAl₂F₉/K₃AlF₆ | 10/90 | | | Dd27 | 90 | Small | White | Present (white) |
| | Dd28 | KZnAl₂F₉/CsAlF₄ | 10/90 | | | Dd28 | 90 | Small | White | Presen (white) |
| | Dd29 | KZnAl₂F₉/Cs₂AlF₅ | 10/90 | | | Dd29 | 90 | Small | White | Present (white) |
| | Dd30 | KZnAl₂F₉/Cs₃AlF₆ | 10/90 | | | Dd30 | 90 | Small | White | Presen (white) |
| | Dd31 | KZnAl₂F₉/KZnF₃ | 10/90 | | | Dd31 | 70 | Small | Discolored | Present (white) |
| | Dd32 | KZnAl₂F₉/K₂ZnF₄ | 10/90 | | | Dd32 | 70 | Small | Discolored | Present (discolored) |
| | Dd33 | KZnAl₂F₉/K₃Zn₂F₇ | 10/90 | | | Dd33 | 70 | Small | Discolored | Present (discolored) |
| | Dd34 | KZnAl₂F₉/CsZnF₃ | 10/90 | | | Dd34 | 70 | Small | Discolored | Present (discolored) |
| | Dd35 | KZnAl₂F₉/Cs₂ZnF₄ | 10/90 | | | Dd35 | 70 | Small | Discolored | Present (discolored) |
| | Dd36 | KZnAl₂F₉/Cs₃Zn₂F₇ | 10/90 | | | Dd36 | 70 | Small | Discolored | Present (discolored) |

**TABLE 5-6**

| | Specimen | Flux composition | Mixing ratio (%) | | | Specimen | Joining ratio (%) | Size of Fillet | External appearance surface of aluminum | Residue on surface of aluminum |
|---|---|---|---|---|---|---|---|---|---|---|
| | Ed25 | CsZnAlF₆/KAlF₄ | 10/90 | | | Ed25 | 90 | Small | White | Present (white) |
| | Fd26 | CsZnAlF₆/K₂AlF₅ | 10/90 | | | Ed26 | 90 | Small | White | Present (white) |
| | Ed27 | CsZnAlF₆/K₃AlF₆ | 10/90 | | | Ed27 | 90 | Small | White | Present (white) |
| | Ed28 | CsZnAlF₆/CsAlF₄ | 10/90 | | | Ed28 | 90 | Small | White | Present (white) |
| | Ed29 | CsZnAlF₆/Cs₂AlF₅ | 10/90 | | | Ed29 | 90 | Small | Wh | Present (white) |
| | Ed30 | CsZnAlF₆/Cs₃AlF₆ | 10/90 | | | Ed30 | 90 | Small | White | Present (white) |
| | Ed31 | CsZnAlF₆/KZnF₃ | 10/90 | | | Ed31 | 70 | Small | Discolored | Presen (white) |
| | Ed32 | CsZnAlF₆/K₂ZnF₄ | 10/90 | | | Ed32 | 70 | Small | Discolored | Present (discolored) |
| | Ed33 | CsZnAlF₆/K₃Zn₂F₇ | 10/90 | | | Ed33 | 70 | Small | Discolored | Present (discolored) |
| | Ed34 | CsZnAlF₆/CsZnF₃ | 10/90 | | | Ed34 | 70 | Smal | Discolored | Present (discolored) |
| | Ed35 | CsZnAlF₆/Cs₂ZnF₄ | 10/90 | | | Ed35 | 70 | Small | Discolored | Present (discolored) |
| | Ed36 | CsZnAlF₆/Cs₃Zn₂F₇ | 10/90 | | | Ed36 | 70 | Small | Discolored | Present (discolored) |
| | Fd25 | Cs₂ZnAlF₇/KAlF₄ | 10/90 | | | Fd25 | 90 | Small | White | Present (white) |
| | Fd26 | Cs₂ZnAlF₇/K₂AlF₅ | 10/90 | | | Fd26 | 90 | Small | White | Present (white) |
| | -d27 | Cs₂ZnAlF₇/K₃AlF₆ | 10/90 | | | Fd27 | 90 | Small | White | Present (white) |
| | Fd28 | Cs₂ZnAlF₇/CsAlF₄ | 10/90 | | | Fd28 | 90 | Small | White | Present (white) |
| | Fd29 | Cs₂ZnAlF₇/Cs₂AlF₅ | 10/90 | | | Fd29 | 90 | Small | White | Present (white) |
| | Fd30 | Cs₂ZnAlF₇/Cs₃AlF₆ | 10/90 | | | Fd30 | 90 | Small | White | Present (white) |
| | Fd31 | Cs₂ZnAlF₇/KZnF₃ | 10/90 | | | Fd31 | 70 | Small | Discolored | Present (white) |
| | Fd32 | Cs₂ZnAlF₇/K₂ZnF₄ | 10/90 | | | Fd32 | 70 | Small | Discolored | Present (discolored) |
| | Fd33 | Cs₂ZnAlF₇/K₃Zn₂F₇ | 10/90 | | | Fd33 | 70 | Small | Discolored | Present (discolored) |
| | Fd34 | Cs₂ZnAlF₇/CsZnF₃ | 10/90 | | | Fd34 | 70 | Small | Discolored | Present (discolored) |
| | Fd35 | Cs₂ZnAlF₇/Cs₂ZnF₄ | 10/90 | | | Fd35 | 70 | Small | Discolored | Present (discolored) |
| | Fd36 | Cs₂ZnAlF₇/Cs₃Zn₂F₇ | 10/90 | | | Fd36 | 70 | Small | Discolored | Present (discolored) |
| | Gd25 | CsZn₂AlF₈/KAlF₄ | 10/90 | | | Gd25 | 90 | Small | White | Present (white) |
| Comparative Examples 4 | Gd26 | CsZn₂AlF₈/K₂AlF₅ | 10/90 | | Comparative Examples 4 | Gd26 | 90 | Small | White | Present (white) |
| | Gd27 | CsZn₂AlF₈/K₃AlF₆ | 10/90 | | | Gd27 | 90 | Small | White | Present (white) |
| | Gd28 | CsZn₂AlF₈/CsAlF₄ | 10/90 | | | Gd28 | 90 | Small | White | Present (white) |
| | Gd29 | CsZn₂AlF₈/Cs₂AlF₅ | 10/90 | | | Gd29 | 90 | Small | White | Present (white) |
| | Gd30 | CsZn₂AlF₈/Cs₃AlF₆ | 10/90 | | | Gd30 | 90 | Small | White | Present (white) |
| | Gd31 | CsZn₂AlF₈/KZnF₃ | 10/90 | | | Gd31 | 70 | Small | Discolored | Present (white) |
| | Gd32 | CsZn₂AlF₈/K₂ZnF₄ | 10/90 | | | Gd32 | 70 | Small | Discolored | Present (discolored) |
| | Gd33 | CsZn₂AlF₈/K₃Zn₂F₇ | 10/90 | | | Gd33 | 70 | Small | Discolored | Present (discolored) |
| | Gd34 | CsZn₂AlF₈/CsZnF₃ | 10/90 | | | Gd34 | 70 | Small | Discolored | Present (discolored) |
| | Gd35 | CsZn₂AlF₈/Cs₂ZnF₄ | 10/90 | | | Gd35 | 70 | Small | Discolored | Present (discolored) |
| | Gd36 | CsZn₂AlF₈/Cs₃Zn₂F₇ | 10/90 | | | Gd36 | 70 | Small | Discolored | Present (discolored) |
| | Hd25 | CsZnAl₂F₉/KAlF₄ | 10/90 | | | Hd25 | 90 | Small | White | Present (white) |
| | Hd26 | CsZnAl₂F₉/K₂AlF₅ | 10/90 | | | Hd26 | 90 | Small | White | Present (white) |
| | Hd27 | CsZnAl₂F₉/K₃AlF₆ | 10/90 | | | Hd27 | 90 | Small | White | Present (white) |
| | Hd28 | CsZnAl₂F₉/CsAlF₄ | 10/90 | | | Hd28 | 90 | Small | White | Present (white) |
| | Hd29 | CsZnAl₂F₉/Cs₂AlF₅ | 10/90 | | | Hd29 | 90 | Small | White | Present (white) |
| | Hd30 | CsZnA l₂F₉/Cs₃AlF₆ | 10/90 | | | Hd30 | 90 | Small | White | Present (white) |
| | Hd31 | CsZnAl₂F₉/KZnF₃ | 10/90 | | | Hd31 | 70 | Small | Discolored | Present (white) |
| | Hd32 | CsZnAl₂F₉/K₂ZnF₄ | 10/90 | | | Hd32 | 70 | Small | Discolored | Present (disco ored) |
| | Hd33 | CsZnAl₂F₉/K₃Zn₂F₇ | 10/90 | | | Hd33 | 70 | Small | Discolored | Present (discolored) |
| | Hd34 | CsZnAl₂F₉/CsZnF₃ | 10/90 | | | Hd34 | 70 | Small | Discolored | Present (discolored) |
| | Hd35 | CsZnAl₂F₉/Cs₂ZnF₄ | 10/90 | | | Hd35 | 70 | Small | Discolored | Present (discolored) |
| | Hd36 | CsZnAl₂F₉/Cs₃Zn₂F₇ | 10/90 | | | Hd36 | 70 | Small | Discolored | Present (discolored) |

**TABLE 5-7**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Id1 | KAlF₄/K₂AlF₅ | 10/90 | | | d1 | 80 | Small | White | Present (white) |
| | Id2 | KAlF₄/K₂AlF₅ | 55/45 | | | d2 | 80 | Small | White | Present (white) |
| | Id3 | KAlF₄/K₂AlF₅ | 10/90 | | | d3 | 80 | Small | White | Present (white) |
| | Id4 | KAlF₄/K₃AlF₆ | 90/10 | | | d4 | 80 | Small | White | Present (white) |
| | Id5 | KAlF₄/K₃AlF₆ | 55/45 | | | d5 | 80 | Small | White | Present (white) |
| | Id6 | KAlF₄/K₃AlF₆ | 10/90 | | | d6 | 80 | Small | White | Present (white) |
| | Id7 | KAlF₄/CsAlF₄ | 90/10 | | | d7 | 80 | Small | White | Present (white) |
| | Id8 | KAlF₄/CsAlF₄ | 55/45 | | | d8 | 80 | Small | White | Present (white) |
| | Id9 | KAlF₄/CsAlF₄ | 10/90 | | | d9 | 80 | Small | White | Present (white) |
| | Id10 | KAlF₄/Cs₂AlF₅ | 90/10 | | | Id10 | 80 | Small | White | Present (white) |
| | Id11 | KAlF₄/Cs₂AlF₅ | 55/45 | | | Id11 | 80 | Small | White | Present (white) |
| | Id12 | KAlF₄/Cs₂AlF₅ | 10/90 | | | Id12 | 80 | Small | White | Present (white) |
| | Id13 | KAIF₄/Cs₃AlF₆ | 90/10 | | | Id13 | 80 | Small | White | Present (white) |
| | Id14 | KAlF₄/Cs₃AlF₆ | 55/45 | | | Id14 | 80 | Small | White | Present (white) |
| | Id15 | KAlF₄/Cs₃AlF₆ | 10/90 | | | Id15 | 80 | Small | White | Present (white) |
| | Id16 | KAlF₄/KZnF₃ | 90/10 | | | Id16 | 60 | Small | Discolored | Present (white) |
| | Id17 | KAlF₄KZnF₃ | 55/45 | | | Id17 | 60 | Small | Discolored | Present (white) |
| | Id18 | KAlF₄/KZnF₃ | 10/90 | | | Id18 | 60 | Small | Discolored | Present (discolored) |
| Comparative Example 4 | Id19 | KAlF₄/K₂ZnF₄ | 90/10 | | Comparative Example 4 | Id19 | 60 | Small | Discolored | Present (discolored) |
| | Id20 | KAlF₄/K₂ZnF₄ | 55/45 | | | Id20 | 60 | Small | Discolored | Present (white) |
| | Id21 | KAlF₄/K₂ZnF₄ | 10/90 | | | Id21 | 60 | Small | Discolored | Present (discolored) |
| | Id22 | KAlF₄K₃Zn₂F₇ | 90/10 | | | Id22 | 60 | Small | Discolored | Present (discolored) |
| | Id23 | KAlF₄/K₃Zn₂F₇ | 55/45 | | | Id23 | 60 | Small | Discolored | Present (white) |
| | Id24 | KAlF₄/K₃Zn₂F₇ | 10/90 | | | Id24 | 60 | Small | Discolored | Present (discolored) |
| | Id25 | KAlF₄/CsZnF₃ | 90/10 | | | Id25 | 60 | Small | Discolored | Present (discolored) |
| | Id26 | KAlF₄CsZnF₃ | 55/45 | | | Id26 | 60 | Small | Discolored | Present (white) |
| | Id27 | KAlF₄CsZnF₃ | 10/90 | | | Id27 | 60 | Small | Discolored | Present (discolored) |
| | Id28 | KAlF₄/Cs₂ZnF₄ | 90/10 | | | Id28 | 60 | Small | Discolored | Present (white) |
| | Id29 | KAlF₄/Cs₂ZnF₄ | 55/45 | | | Id29 | 60 | Small | Discolored | Present (discolored) |
| | Id30 | KAlF₄/Cs₂ZnF₄ | 10/90 | | | Id30 | 60 | Small | Discolored | Present (discolored) |
| | Id31 | KAlF₄/Cs₃Zn₂F₇ | 90/10 | | | Id3 | 60 | Small | Discolored | Present (white) |
| | Id32 | KAlF₄Cs₃Zn₂F₇ | 55/45 | | | Id32 | 60 | Small | Discolored | Present (discolored) |
| | Id33 | KAlF₄/Cs₃Zn₂F₇ | 10/90 | | | Id33 | 06 | Small | Discolored | Present (discolored) |

**TABLE 5-8**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Jd1 | KZnF₃/KAlF₄ | 90/10 | | | Jd1 | 60 | Small | Discolored | Present (discolored) |
| | Jd2 | KZnF₃/KAlF₄ | 55/45 | | | Jd2 | 60 | Small | Discolored | Present (discolored) |
| | Jd3 | KZnF₃KAlF₄ | 10/90 | | | Jd3 | 60 | Small | Discolored | Present (discolored) |
| | Jd4 | KZnF₃K₂AlF₅ | 90/10 | | | Jd4 | 60 | Small | Discolored | Present (decolored) |
| | Jd5 | KZnF₃/K₂AlF₅ | 55/45 | | | Jd5 | 60 | Small | Discolored | Present (discolored) |
| | Jd6 | KZnF₃/K₂Al₅ | 10/90 | | | Jd6 | 60 | Small | Discolored | Present (discolored) |
| | Jd7 | KZnF₃/K₃/AlF₆ | 90/10 | | | Jd7 | 60 | Small | Discolored | Present (discolored) |
| | Jd8 | KZnF₃/K₃AlF₆ | 55/45 | | | Jd8 | 60 | Small | Discolored | Present (discolored) |
| | Jd9 | KZnF₃/K₃AlF₆ | 10/90 | | | Jd9 | 60 | Small | Discolored | Present (discolored) |
| | Jd10 | KZnF₃/CsAlF₄ | 90/10 | | | Jd10 | 60 | Small | Discolored | Present (discolored) |
| | Jd11 | KZnF₃/CsAlF₄ | 55/45 | | | Jd11 | 60 | Small | Discolored | Present (discolored) |
| | Jd12 | KZnF₃/CsAlF₄ | 10/90 | | | Jd12 | 60 | Small | Discolored | Present (discolored) |
| | Jd13 | KZnF₃/Cs₂AlF₅ | 90/10 | | | Jd13 | 60 | Small | Discolored | Present (discolored) |
| | Jd14 | KZnF₃/Cs₂AlF₅ | 55/45 | | | Jd14 | 60 | Small | Discolored | Present (discolored) |
| | Jd15 | KZnF₃/Cs₂AlF₅ | 10/90 | | | Jd15 | 60 | Small | Discolored | Present (discolored) |
| | Jd16 | KZnF₃/Cs₃AlF₆ | 90/10 | | | Jd16 | 60 | Small | Discolored | Present (discolored) |
| | Jd17 | KZnF₃/Cs₃AlF₆ | 55/45 | | | Jd17 | 60 | Small | Discolored | Present (discolored) |
| | Jd18 | KZnF₃/Cs₃AlF₆ | 10/90 | | | Jd18 | 60 | Small | Discolored | Present (discolored) |
| Comparative Example 4 | Jd19 | KZnF₃/K₂ZnF₄ | 90/10 | | Comparative Example 4 | Jd19 | 60 | Small | Discolored | Present (discolored) |
| | Jd20 | KZnF₃/K₂ZnF₄ | 55/45 | | | Jd20 | 60 | Small | Discolored | Present (discolored) |
| | Jd21 | KZnF₃/K₂ZnF₄ | 10/90 | | | Jd21 | 60 | Small | Discolored | Present (discolored) |
| | Jd22 | KZnF₃/K₃Zn₂F₇ | 90/10 | | | Jd22 | 60 | Small | Discolored | Present (discolored) |
| | Jd23 | KZnF₃/KZn₂F₇ | 55/45 | | | Jd23 | 60 | Small | Discolored | Present (discolored) |
| | Jd24 | KZnF₃/K₃Zn₂F₇ | 10/90 | | | Jd24 | 60 | Small | Discolored | Present (discolored) |
| | Jd25 | KZnF₃/CsZnF₃ | 90/10 | | | Jd25 | 60 | Small | Discolored | Present (discolored) |
| | Jd26 | KZnF₃/CsZnF₃ | 55/45 | | | Jd26 | 60 | Small | Discolored | Present (discolored) |
| | Jd27 | KZnF₃/CsZnF₃ | 10/90 | | | Jd27 | 60 | Small | Discolored | Present (discolored) |
| | Jd28 | KZnF₃/Cs₂ZnF₄ | 90/10 | | | Jd28 | 60 | Small | Discolored | Present (discolored) |
| | Jd29 | KZnF₃/Cs₂ZnF₄ | 55/45 | | | Jd29 | 60 | Small | Discolored | Present (discolored) |
| | Jd30 | KZnF₃/Cs₂ZnF₄ | 10/90 | | | Jd30 | 60 | Small | Discolored | Present (discolored) |
| | Jd31 | KZnF₃/Cs₃Zn₂F₇ | 90/10 | | | Jd31 | 60 | Small | Discolored | Present (discolored) |
| | Jd32 | KZnF₃/Cs₃Zn₂F₇ | 55/45 | | | Jd32 | 60 | Small | Discolored | Present (discolored) |
| | Jd33 | KZnF₃/Cs₃Zn₂F₇ | (10/90 | | | Jd33 | 60 | Smal | Discolored | Present (discolored) |

As shown in Tables 5-1 to 5-4, good results (brazability) were obtained in Example 4 even when the oxygen concentration during brazing was high. On the other hand, when the ratio of the component (A) was low, and the ratio of the alkali metal fluoroaluminate was high (Ad25 to Ad30, Bd25 to Bd30, Cd25 to Cd30, Dd25 to Dd30, Ed25 to Ed30, Fd25 to Fd30, Gd25 to Gd30, and Hd25 to Hd30 of Comparative Example 4), a white residue was observed on the surface of the aluminum alloy when the oxygen concentration was high, and the joining ratio decreased due to the residue. When the ratio of the component (A) was low, and the ratio of the alkali metal fluorozincate was high (Ad31 to Ad36, Bd31 to Bd36, Cd31 to Cd36, Dd31 to Dd36, Ed31 to Ed36, Fd31 to Fd36, Gd31 to Gd36, and Hd31 to Hd36), the joining ratio decreased, and a discolored residue and discoloring were observed on the surface of the aluminum alloy when the oxygen concentration was high. When the component (A) was not used (Id1 to Id33 and Jd1 to Jd33), a white residue (unreacted flux) or a discolored residue and discoloration were observed on the surface of the aluminum alloy, and the joining ratio decreased.

### Example 5 and Comparative Example 5

### Flux composition

The materials shown in Tables 6-1 to 6-16 were mixed in the mixing ratio shown in Tables 6-1 to 6-16 to prepare a powder mixture (flux composition) (average particle size: 10 µm). In Example 5 and Comparative Example 5, a powder of an alkali metal zinc fluoroaluminate and a metal powder or a metal alloy powder were mixed. In Tables 6-1 to 6-16, the content (mass%) of each element in each metal alloy is indicated by a numeral. For example, "KZnAlF₆/Al-25Si-25Cu" is a mixture of a KZnAlF₆ powder and an Al alloy powder having an Si content of 25 mass% and a Cu content of 25 mass%.

### Brazing test

The brazing test was performed in the same manner as in Example 1 and Comparative Example 1, except that the flux component was applied in an amount of 20 g/m².

### Evaluation of brazability

The brazability was evaluated in the same manner as in Example 1 and Comparative Example 1. The evaluation results are shown in Tables 6-1 to 6-16.

**TABLE 6-1**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Aa1 | KZₙAlF₆/Al | 70/30 | | | Aa1 | 100 | Large | Not discolored | Absent |
| | Aa2 | KZnAlF₆/Si | 70/30 | | | Aa2 | 100 | Large | Not discolored | Absent |
| | Aa3 | KZnAlF₆/Cu | 70/30 | | | Aa3 | 100 | Large | Not discolored | Absent |
| | Aa4 | KZnAlF₆/Zn | 70/30 | | | Aa4 | 100 | Large | Not discolored | Absent |
| | Aa5 | KZnAlF₆/Al-1Si | 70/30 | | | Aa5 | 100 | Large | Not discolored | Absent |
| | Aa6 | KZnAlF₆/Al-10Si | 70/30 | | | Aa6 | 100 | Large | Not discolored | Absent |
| | Aa7 | KZnAlF₆/Al-50Si | 70/30 | | | Aa7 | 100 | Large | Not discolored | Absent |
| | Aa8 | KZnAlF₆/Al-90Si | 70/30 | | | Aa8 | 100 | Large | Not discolored | Absent |
| | Aa9 | KZnAlF₆/Al-1Cu | 70/30 | | | Aa9 | 100 | Large | Not discolored | Absent |
| | Aa10 | KZnAlF₆/Al-10Cu | 70/30 | | | Aa10 | 100 | Large | Not discolored | Absent |
| | Aa11 | KZnAlF₆/Al-50Cu | 70/30 | | | Aa11 | 100 | Large | Not discolored | Absent |
| | Aa12 | KZnAlF₆/Al-90Cu | 70/30 | | | Aa12 | 100 | Large | Not discolored | Absent |
| | Aa13 | KZnAlF₆/Al-1Zn | 70/30 | | | Aa13 | 100 | Large | Not discolored | Absent |
| | Aa14 | KZnAlF₆/Al-10Zn | 70/30 | | | Aa14 | 100 | Large | Not discolored | Absent |
| | Aa15 | KZnAlF₆/Al-50Zn | 70/30 | | | Aa15 | 100 | Large | Not discolored | Absent |
| | Aa16 | KZnAlF₆/Al-90Zn | 70/30 | | | Aa16 | 100 | Large | Not discolored | Absent |
| | Aa17 | KZnAlF₆/Cu-10Zn | 70/30 | | | Aa17 | 100 | Large | Not discolored | Absent |
| | Aa18 | KZnAlF₆/Cu-50Zn | 70/30 | | | Aa18 | 100 | Large | Not discolored | Absent |
| | Aa19 | KZnAlF₆/Cu-90Zn | 70/30 | | | Aa19 | 100 | Large | Not discolored | Absent |
| | Aa20 | KZnAlF₆/Al-1Si-1Cu | 70/30 | | | Aa20 | 100 | Large | Not discolored | Absent |
| | Aa21 | KZnAlF₆/Al-10Si-10Cu | 70/30 | | | Aa21 | 100 | Large | Not discolored | Absent |
| | Aa22 | KZnAlF₆/Al-25Si-25Cu | 70/30 | | | Aa22 | 100 | Large | Not discolored | Absent |
| Examples 5 | Aa23 | KZnAlF₆/Al-45Si-45Cu | 70/30 | | Examples 5 | Aa23 | 100 | Large | Not discolored | Absent |
| | Aa24 | KZnAlF₆/Al-90Si-1Cu | 70/30 | | | Aa24 | 100 | Large | Not discolored | Absent |
| | Aa25 | KZnAlF₆/Al-1Si-90Cu | 70/30 | | | Aa25 | 100 | Large | Not discolored | Absent |
| | Aa26 | KZnAlF₆/Al-1Si-1Zn | 70/30 | | | Aa26 | 100 | Large | Not discolored | Absent |
| | Aa27 | KZnAlF₆/Al-10Si-10Zn | 70/30 | | | Aa27 | 100 | Large | Not discolored | Absent |
| | Aa28 | KZnAlF₆/Al-25Si-25Zn | 70/30 | | | Aa28 | 100 | Large | Not discolored | Absent |
| | Aa29 | KZnAlF₆/Al-45Si-45Zn | 70/30 | | | Aa29 | 100 | Large | Not discolored | Absent |
| | Aa30 | KZnAIF₆/Al-90Si-1Zn | 70/30 | | | Aa30 | 100 | Large | Not discolored | Absent |
| | Aa31 | KZnAlF₆/Al-1Si-90Zn | 70/30 | | | Aa31 | 100 | Large | Not discolored | Absent |
| | Aa32 | KZnAlF₆/Al-1Cu-1Zn | 70/30 | | | Aa32 | 100 | Large | Not discolored | Absent |
| | Aa33 | KZnAlF₆/Al-10Cu-10Zn | 70/30 | | | Aa33 | 100 | Large | Not discolored | Absent |
| | Aa34 | KZnAlF₆/Al-25Cu-25Zn | 70/30 | | | Aa34 | 100 | Large | Not discolored | Absent |
| | Aa35 | KZnAlF₆/Al-45Cu-45Zn | 70/30 | | | Aa35 | 100 | Large | Not discolored | Absent |
| | Aa36 | KZnAlF₆/Al-90Cu-1Zn | 70/30 | | | Aa36 | 100 | Large | Not discolored | Absent |
| | Aa37 | KZnAlF₆/Al-1Cu-90Zn | 70/30 | | | Aa37 | 100 | Large | Not discolored | Absent |
| | Aa38 | KZnAlF₆/Al-1Si-1Cu-1Zn | 70/30 | | | Aa38 | 100 | Large | Not discolored | Absent |
| | Aa39 | KZnAlF₆/Al-5Si-5Cu-5Zn | 70/30 | | | Aa39 | 100 | Large | Not discolored | Absent |
| | Aa40 | KZnAIF₆/Al-10Si-10Cu-10Zn | 70/30 | | | Aa40 | 100 | Large | Not discolored | Absent |
| | Aa41 | KZnAlF₆/Al-30Si-30Cu-30Cu | 70/30 | | | Aa41 | 100 | Large | Not discolored | Absent |
| | Aa42 | KZnAlF₆/Al-90Si-1Cu-1Zn | 70/30 | | | Aa42 | 100 | Large | Not discolored | Absent |
| | Aa43 | KZnAIF₆/Al-1Si-90Cu-1Zn | 70/30 | | | Aa43 | 100 | Large | Not discolored | Absent |
| | Aa44 | KZnAlF₆/Al-1Si-1Cu-90Zn | 70/30 | | | Aa44 | 100 | Large | Not discolored | Absent |

**TABLE 6-2**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ba1 | K₂ZnAlF₇/Al | 70/30 | | | Ba1 | 100 | Large | Not discolored | Absent |
| | Ba2 | k₂ZnAlF₇/Si | 70/30 | | | Ba2 | 100 | Large | Not discolored | Absent |
| | Ba3 | K₂ZnAlF₇/Cu | 70/30 | | | Ba3 | 100 | Large | Not discolored | Absent |
| | Ba4 | K₂ZnlF₇/Zn | 70/30 | | | Ba4 | 100 | Large | Not discolored | Absent |
| | Ba5 | K₂ZnAlF₇/Al-1Si | 70/30 | | | Ba5 | 100 | Large | Not discolored | Absent |
| | Ba6 | K₂ZnAlF₇/Al-10Si | 70/30 | | | Ba6 | 100 | Large | Not discolored | Absent |
| | Ba7 | K₂ZnAlF₇/Al-50Si | 70/30 | | | Ba7 | 100 | Large | Not discolored | Absent |
| | Ba8 | K₂ZnAlF₇/Al-90Si | 70/30 | | | Ba8 | 100 | Large | Not discolored | Absent |
| | Ba9 | K₂ZnAlF₇/Al-1Cu | 70/30 | | | Ba9 | 100 | Large | Not discolored | Absent |
| | Ba10 | K₂ZnAlF₇/Al-10Cu | 70/30 | | | Ba10 | 100 | Large | Not discolored | Absent |
| | Ba11 | K₂ZnAlF₇/Al-50Cu | 70/30 | | | Ba11 | 100 | Large | Not discolored | Absent |
| | Ba12 | K₂ZnAlF₇/Al-9OCu | 70/30 | | | Ba12 | 100 | Large | Not discolored | Absent |
| | Ba13 | K₂ZnAlF₇/Al-1Zn | 70/30 | | | Ba13 | 100 | Large | Not discolored | Absent |
| | Ba14 | K₂ZnAlF₇/Al-10Zn | 70/30 | | | Ba14 | 100 | Large | Not discolored | Absent |
| | Ba15 | K₂ZnAlF₇//Al-50Zn | 70/30 | | | Ba15 | 100 | Large | Not discolored | Absent |
| | Ba16 | K₂ZnAlF₇/Al-90Zn | 70/30 | | | Ba16 | 100 | Large | Not discolored | Absent |
| | Ba17 | K₂ZnAlF₇/Cu-10Zn | 70/30 | | | Ba17 | 100 | Large | Not discolored | Absent |
| | Ba18 | K₂ZnAlF₇/Cu-50Zn | 70/30 | | | Ba18 | 100 | Large | Not discolored | Absent |
| | Ba19 | K₂ZnAlF₇/Cu-90Zn | 70/30 | | | Ba19 | 100 | Laree | Not discolored | Absent |
| | Ba20 | K₇ZnAlF₇/Al-1Si-1Cu | 70/30 | | | Ba20 | 100 | Large | Not discolored | Absent |
| | Ba21 | K₂ZnAlF₇/Al-10Si-10Cu | 70/30 | | | Ba21 | 100 | Large | Not discolored | Absent |
| | Ba22 | K₂ZnAlF₇/Al-25Si-25Cu | 70/30 | | | Ba22 | 100 | Large | Not discolored | Absent |
| Examples 5 | Ba23 | K₂ZnAlF/Al-45Si-45Cu | 70/30 | | Examples 5 | Ba23 | 100 | Large | Not discolored | Absent |
| | Ba24 | K₂ZnAlF₇/Al-90Si-1Cu | 70/30 | | | Ba24 | 100 | Large | Not discolored | Absent |
| | Ba25 | K₂ZnAlF₇/Al-1Si-90Cu | 70/30 | | | Ba25 | 100 | Large | Not discolored | Absent |
| | Ba26 | K₂ZnAlF₇/Al-1Si-1Zn | 70/30 | | | Ba26 | 100 | Large | Not discolored | Absent |
| | Ba27 | K₂ZnAlF₇/Al-10Si-10Zn | 70/30 | | | Ba27 | 100 | Large | Not discolored | Absent |
| | Ba28 | K₂ZnAlF₇/Al-25Si-25Zn | 70/30 | | | Ba28 | 100 | Large | Not discolored | Absent |
| | Ba29 | K₂ZnAlF₇/Al-45Si-45Zn | 70/30 | | | Ba29 | 100 | Large | Not discolored | Absent |
| | Ba30 | K₂ZnAlF₇/Al-90Si-1Zn | 70/30 | | | Ba30 | 100 | Large | Not discolored | Absent |
| | Ba31 | K₂ZnAlF₇/Al-1Si-90Zn | 70/30 | | | Ba31 | 100 | Large | Not discolored | Absent |
| | Ba32 | k₂ZnAlF₇/Al-1Cu-1Zn | 70/30 | | | Ba32 | 100 | Large | Not discolored | Absent |
| | Ba33 | K₂ZnAlF₇/Al-10Cu-10Zn | 70/30 | | | Ba33 | 100 | Large | Not discolored | Absent |
| | Ba34 | K₂ZnAlF₇/Al-25Cu-25Zn | 70/30 | | | Ba34 | 100 | Large | Not discolored | Absent |
| | Ba35 | K₂ZnAlF₇/Al-45Cu-45Zn | 70/30 | | | Ba35 | 100 | Large | Not discolored | Absent |
| | Ba36 | K₂ZnAlF₇/Al-90Cu-1Zn | 70/30 | | | Ba36 | 100 | Large | Not discolored | Absent |
| | Ba37 | K₂ZnAlF₇/Al-1Cu-90Zn | 70/30 | | | Ba37 | 100 | Large | Not discolored | Absent |
| | Ba38 | K₂ZnAlF₇/Al-1Si-1Cu-1Zn | 70/30 | | | Ba38 | 100 | Large | Not discolored | Absent |
| | Ba39 | K₂ZnAlF₇/Al-5Si-5Cu-5Zn | 70/30 | | | Ba39 | 100 | Large | Not discolored | Absent |
| | Ba40 | K₂ZnAlF₇/Al-10Si-10Cu-10Zn | 70/30 | | | Ba40 | 100 | Large | Not discolored | Absent |
| | Ba41 | K₂ZnAlF₇/Al-30Si-30Cu-30Cu | 70/30 | | | Ba41 | 100 | Large | Not discolored | Absent |
| | Ba42 | K₂ZnAlF₇/Al-90Si-1Cu-1Zn | 70/30 | | | Ba42 | 100 | Large | Not discolored | Absent |
| | Ba43 | K₂ZnAlF₇/Al-1Si-90Cu-1Zn | 70/30 | | | Ba43 | 100 | Large | Not discolored | Absent |
| | Ba44 | K₂ZnAlF₇/Al-1Si-1Cu-90Zn | 70/30 | | | Ba44 | 100 | Large | Not discolored | Absent |

**TABLE 6-3**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ca1 | KZn₂AlF₈/Al | 70/30 | | | Ca1 | 100 | Large | Not discolored | Absent |
| | Ca2 | KZn₂AlF₈/Si | 70/30 | | | Ca2 | 100 | Large | Not discolored | Absent |
| | Ca3 | KZn₂AlF₈/Cu | 70/30 | | | Ca3 | 100 | Large | Not discolored | Absent |
| | Ca4 | KZn₂AlF₈/Zn | 70/30 | | | Ca4 | 100 | Large | Not discolored | Absent |
| | Ca5 | KZn₂AlF₈/Al-1Si | 70/30 | | | Ca5 | 100 | Large | Not discolored | Absent |
| | Ca6 | KZn₂AlF₈/Al-10Si | 70/30 | | | Ca6 | 100 | Large | Not discolored | Absent |
| | Ca7 | KZn₂AlF₈/Al-50Si | 70/30 | | | Ca7 | 100 | Large | Not discolored | Absent |
| | Ca8 | KZn₂AlF₈/Al-90Si | 70/30 | | | Ca8 | 100 | Large | Not discolored | Absent |
| | Ca9 | KZn₂AlF₈/Al-1Cu | 70/30 | | | Ca9 | 100 | Large | Not discolored | Absent |
| | Ca10 | KZn₂AlF₈/Al-10Cu | 70/30 | | | Ca10 | 100 | Large | Not discolored | Absent |
| | Ca11 | KZn₂AlF₈/Al-50Cu | 70/30 | | | Ca11 | 100 | Large | Not discolored | Absent |
| | Ca12 | KZn₂AlF₈/Al-90Cu | 70/30 | | | Ca12 | 100 | Large | Not discolored | Absent |
| | Ca13 | KZn₂AlF₈/Al-1Zn | 70/30 | | | Ca13 | 100 | Large | Not discolored | Absent |
| | Ca14 | KZn₂AlF₈/Al-10Zn | 70/30 | | | Ca14 | 100 | Large | Not discolored | Absent |
| | Ca15 | KZn₂AlF₈/Al-50Zn | 70/30 | | | Ca15 | 100 | Large | Not discolored | Absent |
| | Ca16 | KZn₂AlF₈/Al-90Zn | 70/30 | | | Ca16 | 100 | Large | Not discolored | Absent |
| | Ca17 | KZn₂AlF₈/Cu-10Zn | 70/30 | | | Ca17 | 100 | Large | Not discolored | Absent |
| | Ca18 | KZn₂AlF₈/Cu-50Zn | 70/30 | | | Ca18 | 100 | Large | Not discolored | Absent |
| | Ca19 | KZn₂AlF₈/Cu-90Zn | 70/30 | | | Ca19 | 100 | Large | Not discolored | Absent |
| | Ca20 | KZn₂AlF₈/Al-1Si-1Cu | 70/30 | | | Ca20 | 100 | Large | Not discolored | Absent |
| | Ca21 | KZn₂AlF₈/Al-10Si-10Cu | 70/30 | | | Ca21 | 100 | Large | Not discolored | Absent |
| | Ca22 | KZn₂AlF₈/Al-25Si-25Cu | 70/30 | | | Ca22 | 100 | Large | Not discolored | Absent |
| Examples 5 | Ca23 | KZn₂AlF₈/Al-45Si-45Cu | 70/30 | | Examples 5 | Ca23 | 100 | Large | Not discolored | Absent |
| | Ca24 | KZn₂AlF₈/Al-90Si-1Cu | 70/30 | | | Ca24 | 100 | Large | Not discolored | Absent |
| | Ca25 | KZn₂AlF₈/Al-1Si-90Cu | 70/30 | | | Ca25 | 100 | Large | Not discolored | Absent |
| | Ca26 | KZn₂AlF₈/Al-1Si-1Zn | 70/30 | | | Ca26 | 100 | Large | Not discolored | Absent |
| | Ca27 | KZn₂AlF₈/Al-10Si-10Zn | 70/30 | | | Ca27 | 100 | Large | Not discolored | Absent |
| | Ca28 | KZn₂AlF₈/Al-25Si-25Zn | 70/30 | | | Ca28 | 100 | Large | Not discolored | Absent |
| | Ca29 | KZn₂AlF₈/Al-45Si-45Zn | 70/30 | | | Ca29 | 100 | Large | Not discolored | Absent |
| | Ca30 | KZn₂AlF₈/Al-90Si-1Zn | 70/30 | | | Ca30 | 100 | Large | Not discolored | Absent |
| | Ca31 | KZn₂AlF₈/Al-1Si-90Zn | 70/30 | | | Ca31 | 100 | Large | Not discolored | Absent |
| | Ca32 | KZn₂AlF₈/Al-1Cu-1Zn | 70/30 | | | Ca32 | 100 | Large | Not discolored | Absent |
| | Ca33 | KZn₂AlF₈/Al-10Cu-10Zn | 70/30 | | | Ca33 | 100 | Large | Not discolored | Absent |
| | Ca34 | KZn₂AlF₈/Al-25Cu-25Zn | 70/30 | | | Ca34 | 100 | Large | Not discolored | Absent |
| | Ca35 | KZn₂AlF₈/Al-45Cu-45Zn | 70/30 | | | Ca35 | 100 | Large | Not discolored | Absent |
| | Ca36 | KZn₂AlF₈/Al-90Cu-1Zn | 70/30 | | | Ca36 | 100 | Large | Not discolored | Absent |
| | Ca37 | KZn₂AlF₈/Al-1Cu-90Zn | 70/30 | | | Ca37 | 100 | Large | Not discolored | Absent |
| | Ca38 | KZn₂AlF₈/Al-1Si-1Cu-1Zn | 70/30 | | | Ca38 | 100 | Large | Not discolored | Absent |
| | Ca39 | KZn₂AlF₈/Al-5Si-5Cu-5Zn | 70/30 | | | Ca39 | 100 | Large | Not discolored | Absent |
| | Ca40 | KZn₂AlF₈/Al-10Si-10Cu-10Zn | 70/30 | | | Ca40 | 100 | Large | Not discolored | Absent |
| | Ca41 | KZn₂AlF₈/Al-30Si-30Cu-30Cu | 70/30 | | | Ca41 | 100 | Large | Not discolored | Absent |
| | Ca42 | KZn₂AlF₈/Al-90Si-1Cu-1Zn | 70/30 | | | Ca42 | 100 | Large | Not discolored | Absent |
| | Ca43 | KZn₂AlF₈/Al-1Si-90Cu-1Zn | 70/30 | | | Ca43 | 100 | Large | Not discolored | Absent |
| | Ca44 | KZn₂AlF₈/Al-1Si-1Cu-90Zn | 70/30 | | | Ca44 | 100 | Large | Not discolored | Absent |

**TABLE 6-4**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Da1 | KZnAl₂F₉/Al | 70/30 | | | Da1 | 100 | Large | Not discolored | Absent |
| | Da2 | KZnAl₂F₉/Si | 70/30 | | | Da2 | 100 | Large | Not discolored | Absent |
| | Da3 | KZnAl₂F₉/Cu | 70/30 | | | Da3 | 100 | Large | Not discolored | Absent |
| | Da4 | KZnAl₂F₉/Zn | 70/30 | | | Da4 | 100 | Large | Not discolored | Absent |
| | Da5 | KZnAl₂F₉/Al-1Si | 70/30 | | | Da5 | 100 | Large | Not discolored | Absent |
| | Da6 | KZnAl₂F₉/Al-10Si | 70/30 | | | Da6 | 100 | Large | Not discolored | Absent |
| | Da7 | KZnAl₂F₉/Al-50Si | 70/30 | | | Da7 | 100 | Large | Not discolored | Absent |
| | Da8 | KZnAl₂F₉/Al-90Si | 70/30 | | | Da8 | 100 | Large | Not discolored | Absent |
| | Da9 | KZnAl₂F₉/Al-1Cu | 70/30 | | | Da9 | 100 | Large | Not discolored | Absent |
| | Da10 | KZnAl₂F₉/Al-10Cu | 70/30 | | | Da10 | 100 | Large | Not discolored | Absent |
| | Da11 | KZnAl₂F₉/Al-50Cu | 70/30 | | | Da11 | 100 | Large | Not discolored | Absent |
| | Da12 | KZnAl₂F₉/Al-90Cu | 70/30 | | | Da12 | 100 | Large | Not discolored | Absent |
| | Da13 | KZnAl₂F₉/Al-1Zn | 70/30 | | | Da13 | 100 | Large | Not discolored | Absent |
| | Da14 | KZnAl₂F₉/Al-10Zn | 70/30 | | | Da14 | 100 | Large | Not discolored | Absent |
| | Da15 | KZnAl₂F₉/Al-50Zn | 70/30 | | | Da15 | 100 | Large | Not discolored | Absent |
| | Da16 | KZnAl₂F₉/Al-90Zn | 70/30 | | | Da16 | 100 | Large | Not discolored | Absent |
| | Da17 | KZnAl₂F₉/Cu-10Zn | 70/30 | | | Da17 | 100 | Large | Not discolored | Absent |
| | Da18 | KZnAl₂F₉/Cu-50Zn | 70/30 | | | Da18 | 100 | Large | Not discolored | Absent |
| | Da19 | KZnAl₂F₉/Cu-90Zn | 70/30 | | | Da19 | 100 | Large | Not discolored | Absent |
| | Da20 | KZnAl₂F₉/Al-1Si-1Cu | 70/30 | | | Da20 | 100 | Large | Not discolored | Absent |
| | Da21 | KZnAl₂F₉/Al-10Si-10Cu | 70/30 | | | Da21 | 100 | Large | Not discolored | Absent |
| | Da22 | KZnAl₂F₉/-25Si-25Cu | 70/30 | | | Da22 | 100 | Large | Not discolored | Absent |
| Examples 5 | Da23 | KZnAl₂F₉/Al-45Si-43Cu | 70/30 | | Examples 5 | Da23 | 100 | Large | Not discolored | Absent |
| | Da24 | KZnAl₂F₉/Al-90Si-1Cu | 70/30 | | | Da24 | 100 | Large | Not discolored | Absent |
| | Da25 | KZnAl₂F₉/Al-1Si-90Cu | 70/30 | | | Da25 | 100 | Large | Not discolored | Absent |
| | Da26 | KZnAl₂F₉/Al-1Si-1Zn | 70/30 | | | Da26 | 100 | Large | Not discolored | Absent |
| | Da27 | KZnAl₂F₉/Al-10Si-10Zn | 70/30 | | | Da27 | 100 | Large | Not discolored | Absent |
| | Da28 | KZnAl₂F₉/Al-25Si-25Zn | 70/30 | | | Da28 | 100 | Large | Not discolored | Absent |
| | Da29 | KZnAl₂F₉/Al-45Si-45Zn | 70/30 | | | Da29 | 100 | Large | Not discolored | Absent |
| | Da30 | KZnAl₂F₉/Al-90Si-1Zn | 70/30 | | | Da30 | 100 | Large | Not discolored | Absent |
| | Da31 | KZnAl₂F₉/Al-1Si-90Zn | 70/30 | | | Da31 | 100 | Large | Not discolored | Absent |
| | Da32 | KZnAl₂F₉/Al-1Cu-1Zn | 70/30 | | | Da32 | 100 | Large | Not discolored | Absent |
| | Da33 | KZnAl₂F₉/Al-10Cu-10Zn | 70/30 | | | Da33 | 100 | Large | Not discolored | Absent |
| | Da34 | KZnAl₂F₉/Al-25Cu-25Zn | 70/30 | | | Da34 | 100 | Large | Not discolored | Absent |
| | Da35 | KZnAl₂F₉/Al-45Cu-45Zn | 70/30 | | | Da35 | 100 | Large | Not discolored | Absent |
| | Da36 | KZnAl₂F₉/Al-90Cu-1Zn | 70/30 | | | Da36 | 100 | Large | Not discolored | Absent |
| | Da37 | KZnAl₂F₉/Al-1Cu-90Zn | 70/30 | | | Da37 | 100 | Large | Not discolored | Absent |
| | Da38 | KZnAl₂F₉/Al-1Si-1Cu-1Zn | 70/30 | | | Da38 | 100 | Large | Not discolored | Absent |
| | Da39 | KZnAl₂F₉/Al-5Si-5Cu-5Zn | 70/30 | | | Da39 | 100 | Large | Not discolored | Absent |
| | Da40 | KZnAl₂F₉/Al-10Si-10Cu-10Zn | 70/30 | | | Da40 | 100 | Large | Not discolored | Absent |
| | Da41 | KZnAl₂F₉/Al-30Si-30Cu-30Cu | 70/30 | | | Da41 | 100 | Large | Not discolored | Absent |
| | Da42 | KZnAl₂F₉/Al-90Si-1Cu-1Zn | 70/30 | | | Da42 | 100 | Large | Not discolored | Absent |
| | Da43 | KZnAl₂F₉/Al-1Si-90Cu-1Zn | 70/30 | | | Da43 | 100 | Large | Not discolored | Absent |
| | Da44 | KZnAl₂F₉/Al-1Si-1Cu-90Zn | 70/30 | | | Da44 | 100 | Large | Not discolored | Absent |

**TABLE 6-5**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ea1 | CsZnAlF₆/Al1 | 70/30 | | | Ea1 | 100 | Large | Not discolored | Absent |
| | Ea2 | CsZnAlF₆/Si | 70/30 | | | Ea2 | 100 | Large | Not discolored | Absent |
| | Ea3 | CsZnAlF₆/Cu | 70/30 | | | Ea3 | 100 | Large | Not discolored | Absent |
| | Ea4 | CsZnAlF₆/Zn | 70/30 | | | Ea4 | 100 | Large | Not discolored | Absent |
| | Ea5 | CsZnAlF₆/Al-1Si | 70/30 | | | Ea5 | 100 | Large | Not discolored | Absent |
| | Ea6 | CsZnAlF₆/Al-10Si | 70/30 | | | Ea6 | 100 | Large | Not discolored | Absent |
| | Ea7 | CsZnAlF₆/Al-50Si | 70/30 | | | Ea7 | 100 | Large | Not discolored | Absent |
| | Ea8 | CsZnAlF₆/Al-90Si | 70/30 | | | Ea8 | 100 | Large | Not discolored | Absent |
| | Ea9 | CsZnAlF₆/Al-1Cu | 70/30 | | | Ea9 | 100 | Large | Not discolored | Absent |
| | Ea10 | CsZnAlF₆/Al-10Cu | 70/30 | | | Ea10 | 100 | Large | Not discolored | Absent |
| | Ea11 | CsZnAlF₆/Al-50Cu | 70/30 | | | Ea11 | 100 | Large | Not discolored | Absent |
| | Ea12 | CsZnAlF₆/Al-90Cu | 70/30 | | | Ea12 | 100 | Large | Not discolored | Absent |
| | Ea13 | CsZnAlF₆/Al-1Zn | 70/30 | | | Ea13 | 100 | Large | Not discolored | Absent |
| | Ea14 | CsZnAlF₆/Al-10Zn | 70/30 | | | Ea14 | 100 | Large | Not discolored | Absent |
| | Ea15 | CsZnAlF₆/Al-50Zn | 70/30 | | | Ea15 | 100 | Large | Not discolored | Absent |
| | Ea16 | CsZnAlF₆/Al-90Zn | 70/30 | | | Ea16 | 100 | Large | Not discolored | Absent |
| | Ea17 | CsZnAlF₆/Cu-10Zn | 70/30 | | | Ea17 | 100 | Large | Not discolored | Absent |
| | Ea18 | CsZnAlF₆/Cu-50Zn | 70/30 | | | Ea18 | 100 | Large | Not discolored | Absent |
| | Ea19 | CsZnAlF₆/Cu-90Zn | 70/30 | | | Ea19 | 100 | Large | Not discolored | Absent |
| | Ea20 | CsZnAlF₆/Al-1Si-1Cu | 70/30 | | | Ea20 | 100 | Large | Not discolored | Absent |
| | Ea21 | CsZnAlF₆/Al-10Si-10Cu | 70/30 | | | Ea21 | 100 | Large | Not discolored | Absent |
| | Ea22 | CsZnAlF₆/Al-25Si-25Cu | 70/30 | | | Ea22 | 100 | Large | Not discolored | Absent |
| Examples 5 | Ea23 | CsZnAlF₆/Al-45Si-45Cu | 70/30 | | Examples 5 | Ea23 | 100 | Large | Not discolored | Absent |
| | Ea24 | CsZnAlF₆/Al-90Si-1Cu | 70/30 | | | Ea24 | 100 | Large | Not discolored | Absent |
| | Ea25 | CsZnAlF₆/Al-1Si-90Cu | 70/30 | | | Ea25 | 100 | Large | Not discolored | Absent |
| | Ea26 | CsZnAlF₆/Al-1Si-1Zn | 70/30 | | | Ea26 | 100 | Large | Not discolored | Absent |
| | Ea27 | CsZnAlF₆/Al-10Si-10Zn | 70/30 | | | Ea27 | 100 | Large | Not discolored | Absent |
| | Ea28 | CsZnAlF₆/Al-25Si-25Zn | 70/30 | | | Ea28 | 100 | Large | Not discolored | Absent |
| | Ea29 | CsZnAlF₆/Al-45Si-45Zn | 70/30 | | | Ea29 | 100 | Large | Not discolored | Absent |
| | Ea30 | CsZnAlF₆/Al-90Si-1Zn | 70/30 | | | Ea30 | 100 | Large | Not discolored | Absent |
| | Ea31 | CsZnAlF₆/Al-1Si-90Zn | 70/30 | | | Ea31 | 100 | Large | Not discolored | Absent |
| | Ea32 | CsZnAlF₆/Al-1Cu-1Zn | 70/30 | | | Ea32 | 100 | Large | Not discolored | Absent |
| | Ea33 | CsZnAlF₆/Al-10Cu-10Zn | 70/30 | | | Ea33 | 100 | Large | Not discolored | Absent |
| | Ea34 | CsZnAlF₆/Al-25Cu-25Zn | 70/30 | | | Ea34 | 100 | Large | Not discolored | Absent |
| | Ea35 | CsZnAlF₆/Al-45Cu-45Zn | 70/30 | | | Ea35 | 100 | Large | Not discolored | Absent |
| | Ea36 | CsZnAlF₆/Al-90Cu-1Zn | 70/30 | | | Ea36 | 100 | Large | Not discolored | Absent |
| | Ea37 | CsZnAlF₆/Al-1Cu-90Zn | 70/30 | | | Ea37 | 100 | Large | Not discolored | Absent |
| | Ea38 | CsZnAlF₆/Al-1Si-1Cu-1Zn | 70/30 | | | Ea38 | 100 | Large | Not discolored | Absent |
| | Ea39 | CsZnAlF₆/Al-5Si-5Cu-5Zn | 70/30 | | | Ea39 | 100 | Large | Not discolored | Absent |
| | Ea40 | CsZnAlF₆/Al-10Si-10Cu-10Zn | 70/30 | | | Ea40 | 100 | Large | Not discolored | Absent |
| | Ea41 | CsZnAlF₆/Al-30Si-30Cu-30Cu | 70/30 | | | Ea41 | 100 | Large | Not discolored | Absent |
| | Ea42 | CsZnAlF₆/Al-90Si-1Cu-1Zn | 70/30 | | | Ea42 | 100 | Large | Not discolored | Absent |
| | Ea43 | CsZnAlF₆/Al-1Si-90Cu-1Zn | 70/30 | | | Ea43 | 100 | Large | Not discolored | Absent |
| | Ea44 | CsZnAlF₆/Al-1Si-1Cu-90Zn | 70/30 | | | Ea44 | 100 | Large | Not discolored | Absent |

**TABLE 6-6**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Fa1 | Cs₂ZnAlF₇/Al | 70/30 | | | Fa1 | 100 | Large | Not discolored | Absent |
| | Fa2 | Cs₂ZnAlF₇/Si | 70/30 | | | Fa2 | 100 | Large | Not discolored | Absent |
| | Fa3 | Cs₂ZnAlF₇/Cu | 70/30 | | | Fa3 | 100 | Large | Not discolored | Absent |
| | Fa4 | Cs₂ZnAlF₇/Zn | 70/30 | | | Fa4 | 100 | Large | Not discolored | Absent |
| | Fa5 | Cs₂ZnAlF₇/Al-1Si | 70/30 | | | Fa5 | 100 | Large | Not discolored | Absent |
| | Fa6 | Cs₂ZnAlF₇/Al-10Si | 70/30 | | | Fa6 | 100 | Large | Not discolored | Absent |
| | Fa7 | Cs₂ZnAlF₇/Al-50Si | 70/30 | | | Fa7 | 100 | Large | Not discolored | Absent |
| | Fa8 | Cs₂ZnAlF₇/Al-90Si | 70/30 | | | Fa8 | 100 | Large | Not discolored | Absent |
| | Fa9 | Cs₂ZnAlF₇/Al-1Cu | 70/30 | | | Fa9 | 100 | Large | Not discolored | Absent |
| | Fa10 | Cs₂ZnAlF₇/Al-10Cu | 70/30 | | | Fa10 | 100 | Large | Not discolored | Absent |
| | Fa11 | Cs₂ZnAlF₇/Al-50Cu | 70/30 | | | Fa11 | 100 | Large | Not discolored | Absent |
| | Fa12 | Cs₂ZnAlF₇/Al-90Cu | 70/30 | | | Fa12 | 100 | Large | Not discolored | Absent |
| | Fa13 | Cs₂ZnAlF₇/Al-1Zn | 70/30 | | | Fa13 | 100 | Large | Not discolored | Absent |
| | Fa14 | Cs₂ZnAlF₇/Al-10Zn | 70/30 | | | Fa14 | 100 | Large | Not discolored | Absent |
| | Fa15 | Cs₂ZnAlF₇/Al-50Zn | 70/30 | | | Fa15 | 100 | Large | Not discolored | Absent |
| | Fa16 | Cs₂ZnAlF₇/Al-90Zn | 70/30 | | | Fa16 | 100 | Large | Not discolored | Absent |
| | Fa17 | Cs₂ZnAlF₇/Cu-10Zn | 70/30 | | | Fa17 | 100 | Large | Not discolored | Absent |
| | Fa18 | Cs₂ZnAlF₇/Cu-50Zn | 70/30 | | | Fa18 | 100 | Large | Not discolored | Absent |
| | Fa19 | Cs₂ZnAlF₇/Cu-90Zn | 70/30 | | | Fa19 | 100 | Large | Not discolored | Absent |
| | Fa20 | Cs₂ZnAlF₇/Al-1Si-1Cu | 70/30 | | | Fa20 | 100 | Large | Not discolored | Absent |
| | Fa21 | Cs₂ZnAlF₇/Al-10Si-10Cu | 70/30 | | | Fa21 | 100 | Large | Not discolored | Absent |
| | Fa22 | Cs₂ZnAlF₇/Al-25Si-25Cu | 70/30 | | | Fa22 | 100 | Large | Not discolored | Absent |
| Examples 5 | Fa23 | Cs₂ZnAlF₇/Al-45Si-45Cu | 70/30 | | Examples 5 | Fa23 | 100 | Large | Not discolored | Absent |
| | Fa24 | Cs₂ZnAlF₇/Al-90Si-1Cu | 70/30 | | | Fa24 | 100 | Large | Not discolored | Absent |
| | Fa25 | Cs₂ZnAlF₇/Al-1Si-90Cu | 70/30 | | | Fa25 | 100 | Large | Not discolored | Absent |
| | Fa26 | Cs₂ZnAlF₇/Al-1Si-1Zn | 70/30 | | | Fa26 | 100 | Large | Not discolored | Absent |
| | Fa27 | Cs₂ZnAlF₇/Al-10Si-10Zn | 70/30 | | | Fa27 | 100 | Large | Not discolored | Absent |
| | Fa28 | Cs₂ZnAlF₇/Al-25Si-25Zn | 70/30 | | | Fa28 | 100 | Large | Not discolored | Absent |
| | Fa29 | Cs₂ZnAlF₇/Al-45Si-45Zn | 70/30 | | | Fa29 | 100 | Large | Not discolored | Absent |
| | Fa30 | Cs₂ZnAlF₇/Al-90Si-1Zn | 70/30 | | | Fa30 | 100 | Large | Not discolored | Absent |
| | Fa31 | Cs₂ZnAlF₇/Al-1Si-90Zn | 70/30 | | | Fa31 | 100 | Large | Not discolored | Absent |
| | Fa32 | Cs₂ZnAlF₇/Al-1Cu-1Zn | 70/30 | | | Fa32 | 100 | Large | Not discolored | Absent |
| | Fa33 | Cs₂ZnAlF₇/Al-10Cu-10Zn | 70/30 | | | Fa33 | 100 | Large | Not discolored | Absent |
| | Fa34 | Cs₇ZnAlF,/Al-25Cu-25Zn | 70/30 | | | Fa34 | 100 | Large | Not discolored | Absent |
| | Fa35 | Cs₂ZnAlF₇/Al-45Cu-45Zn | 70/30 | | | Fa35 | 100 | Large | Not discolored | Absent |
| | Fa36 | Cs₂ZnAlF₇/Al-90Cu-1Zn | 70/30 | | | Fa36 | 100 | Large | Not discolored | Absent |
| | Fa37 | Cs₂ZnAlF₇/Al-1Cu-90Zn | 70/30 | | | Fa37 | 100 | Large | Not discolored | Absent |
| | Fa38 | Cs₂ZnAlF₇/Al-1Si-1Cu-1Zn | 70/30 | | | Fa38 | 100 | Large | Not discolored | Absent |
| | Fa39 | Cs₂ZnAlF₇/Al-5Si-5Cu-5Zn | 70/30 | | | Fa39 | 100 | Large | Not discolored | Absent |
| | Fa40 | Cs₂ZnAlF₇/Al-10Si-10Cu-10Zn | 70/30 | | | Fa40 | 100 | Large | Not discolored | Absent |
| | Fa41 | Cs₂ZnAlF₇/Al-30Si-30Cu-30Cu | 70/30 | | | Fa41 | 100 | Large | Not discolored | Absent |
| | Fa42 | Cs₂ZnAlF₇/Al-90Si-1Cu-1Zn | 70/30 | | | Fa42 | 100 | Large | Not discolored | Absent |
| | Fa43 | Cs₂ZnAlF₇/Al-1Si-90Cu-1Zn | 70/30 | | | Fa43 | 100 | Large | Not discolored | Absent |
| | Fa44 | Cs₂ZnAlF₇/Al-1Si-1Cu-90Zn | 70/30 | | | Fa44 | 100 | Large | Not discolored | Absent |

**TABLE 6-7**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Gal | CsZn₂AlF₈/Al | 70/30 | | | Gal | 100 | Large | Not discolored | Absent |
| | Ga2 | CsZn₂AlF₈/Si | 70/30 | | | Ga2 | 100 | Large | Not discolored | Absent |
| | Ga3 | CsZn₂AlF₈/Cu | 70/30 | | | Ga3 | 100 | Large | Not discolored | Absent |
| | Ga4 | CsZn₂AlF₈/Zn | 70/30 | | | Ga4 | 100 | Large | Not discolored | Absent |
| | Ga5 | CsZn₂AlF₈/Al-1Si | 70/30 | | | Ga5 | 100 | Large | Not discolored | Absent |
| | Ga6 | CsZn₂AlF₈/Al-10Si | 70/30 | | | Ga6 | 100 | Large | Not discolored | Absent |
| | Ga7 | CsZn₂AlF₈/Al-50Si | 70/30 | | | Ga7 | 100 | Large | Not discolored | Absent |
| | Ga8 | CsZn₂AlF₈/Al-90Si | 70/30 | | | Ga8 | 100 | Large | Not discolored | Absent |
| | Ga9 | CsZn₂AlF₈/Al-1Cu | 70/30 | | | Ga9 | 100 | Large | Not discolored | Absent |
| | Ga10 | CsZn₂AlF₈/Al-10Cu | 70/30 | | | Ga10 | 100 | Large | Not discolored | Absent |
| | Ga11 | CsZn₂AlF₈/Al-50Cu | 70/30 | | | Ga11 | 100 | Large | Not discolored | Absent |
| | Ga12 | CsZn₂AlF₈/Al-90Cu | 70/30 | | | Ga12 | 100 | Large | Not discolored | Absent |
| | Ga13 | CsZn₂AlF₈/Al-1Zn | 70/30 | | | Ga13 | 100 | Large | Not discolored | Absent |
| | Ga14 | CsZn₂AlF₈/Al-10Zn | 70/30 | | | Ga14 | 100 | Large | Not discolored | Absent |
| | Ga15 | CsZn₂AlF₈/Al-50Zn | 70/30 | | | Ga15 | 100 | Large | Not discolored | Absent |
| | Ga16 | CsZn₂AlF₈Al-90Zn | 70/30 | | | Ga16 | 100 | Large | Not discolored | Absent |
| | Ga17 | CsZn₂AlF₈/Cu-10Zn | 70/30 | | | Ga17 | 100 | Large | Not discolored | Absent |
| | Ga18 | CsZn₂AlF₈/Cu-50Zn | 70/30 | | | Ga18 | 100 | Large | Not discolored | Absent |
| | Ga19 | CsZn₂AlF₈/Cu-90Zn | 70/30 | | | Ga19 | 100 | Large | Not discolored | Absent |
| | Ga20 | CsZn₂AlF₈/AlSi-1Cu | 70/30 | | | Ga20 | 100 | Large | Not discolored | Absent |
| | Ga21 | CsZn₂AlF₈/Al-10Si-10Cu | 70/30 | | | Ga21 | 100 | Large | Not discolored | Absent |
| | Ga22 | CsZn₂AlF₈/Al-25Si-25Cu | 70/30 | | | Ga22 | 100 | Large | Not discolored | Absent |
| Examples 5 | Ga23 | CsZn₂AlF₈/Al-45Si-45Cu | 70/30 | | Examples 5 | Ga23 | 100 | Large | Not discolored | Absent |
| | Ga24 | CsZn₂AlF₈/Al-90Si-1Cu | 70/30 | | | Ga24 | 100 | Large | Not discolored | Absent |
| | Ga25 | CsZn₂AlF₈/Al-1Si-90Cu | 70/30 | | | Ga25 | 100 | Large | Not discolored | Absent |
| | Ga26 | CsZn₂AlF₈/Al-1Si-1Zn | 70/30 | | | Ga26 | 100 | Large | Not discolored | Absent |
| | Ga27 | CsZn₂AlF₈/Al-10Si-10Zn | 70/30 | | | Ga27 | 100 | Large | Not discolored | Absent |
| | Ga28 | CsZn₂AlF₈/Al-25Si-25Zn | 70/30 | | | Ga28 | 100 | Large | Not discolored | Absent |
| | Ga29 | CsZn₂AlF₈/Al-45Si-45Zn | 70/30 | | | Ga29 | 100 | Large | Not discolored | Absent |
| | Ga30 | CsZn₂AlF₈/Al-90Si-1Zn | 70/30 | | | Ga30 | 100 | Large | Not discolored | Absent |
| | Ga31 | CsZn₂AlF₈/Al-1Si-90Zn | 70/30 | | | Ga31 | 100 | Large | Not discolored | Absent |
| | Ga32 | CsZn₂AlF₈/Al-1Cu-1Zn | 70/30 | | | Ga32 | 100 | Large | Not discolored | Absent |
| | Ga33 | CsZn₂AlF₈/Al-10Cu-10Zn | 70/30 | | | Ga33 | 100 | Large | Not discolored | Absent |
| | Ga34 | CsZn₂AlF₈/Al-25Cu-25Zn | 70/30 | | | Ga34 | 100 | Large | Not discolored | Absent |
| | Ga35 | CsZn₂AlF₈/Al-45Cu-45Zn | 70/30 | | | Ga35 | 100 | Large | Not discolored | Absent |
| | Ga36 | CsZn₂AlF₈/Al-90Cu-1Zn | 70/30 | | | Ga36 | 100 | Large | Not discolored | Absent |
| | Ga37 | CsZn₂AlF₈/Al-1Cu-90Zn | 70/30 | | | Ga37 | 100 | Large | Not discolored | Absent |
| | Ga38 | CsZn₂AlF₈/Al-1Si-1Cu-1Zn | 70/30 | | | Ga38 | 100 | Large | Not discolored | Absent |
| | Ga39 | CsZn₂AlF₈/Al-5Si-5Cu-5Zn | 70/30 | | | Ga39 | 100 | Large | Not discolored | Absent |
| | Ga40 | CsZn₂AlF₈/Al-10Si-10Cu-10Zn | 70/30 | | | Ga40 | 100 | Large | Not discolored | Absent |
| | Ga41 | CsZn₂AlF₈/Al-30Si-30Cu-30Cu | 70/30 | | | Ga41 | 100 | Large | Not discolored | Absent |
| | Ga42 | CsZn₂AlF₈/Al-90Si-1Cu-1Zn | 70/30 | | | Ga42 | 100 | Large | Not discolored | Absent |
| | Ga43 | CsZn₂AlF₈/Al-1Si-90Cu-1Zn | 70/30 | | | Ga43 | 100 | Large | Not discolored | Absent |
| | Ga44 | CsZn₂AlF₈/Al-1Si-1Cu-90Zn | 70/30 | | | Ga44 | 100 | Large | Not discolored | Absent |

**TABLE 6-8**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ha1 | CsZnAl₂F₉/Al | 70/30 | | | Ha1 | 100 | Large | Not discolored | Absent |
| | Ha2 | CsZnAl₂F₉/Si | 70/30 | | | Ha2 | 100 | Large | Not discolored | Absent |
| | Ha3 | CsZnAl₂F₉/Cu | 70/30 | | | Ha3 | 100 | Large | Not discolored | Absent |
| | Ha4 | CsZnAl₂F₉/Zn | 70/30 | | | Ha4 | 100 | Large | Not discolored | Absent |
| | Ha5 | CsZnAl₂F₉/Al-1Si | 70/30 | | | Ha5 | 100 | Large | Not discolored | Absent |
| | Ha6 | CsZnAl₂F₉/Al-10Si | 70/30 | | | Ha6 | 100 | Large | Not discolored | Absent |
| | Ha7 | CsZnAl₂F₉/Al-50Si | 70/30 | | | Ha7 | 100 | Large | Not discolored | Absent |
| | Ha8 | CsZnAl₂F₉/Al-90Si | 70/30 | | | Ha8 | 100 | Large | Not discolored | Absent |
| | Ha9 | CsZnAl₂F₉/Al-1Cu | 70/30 | | | Ha9 | 100 | Large | Not discolored | Absent |
| | Ha10 | CsZnAl₂F₉/Al-10Cu | 70/30 | | | Ha10 | 100 | Large | Not discolored | Absent |
| | Ha11 | CsZnAl₂F₉/Al-50Cu | 70/30 | | | Ha11 | 100 | Large | Not discolored | Absent |
| | Ha12 | CsZnAl₂F₉/Al-90Cu | 70/30 | | | Ha12 | 100 | Large | Not discolored | Absent |
| | Ha13 | CsZnAl₂F₉/Al-1Zn | 70/30 | | | Ha13 | 100 | Large | Not discolored | Absent |
| | Ha14 | CsZnAl₂F₉/Al-10Zn | 70/30 | | | Ha14 | 100 | Large | Not discolored | Absent |
| | Ha15 | CsZnAl₂F₉/Al-50Zn | 70/30 | | | Ha15 | 100 | Large | Not discolored | Absent |
| | Ha16 | CsZnAl₂F₉/Al-90Zn | 70/30 | | | Ha16 | 100 | Large | Not discolored | Absent |
| | Ha17 | CsZnAl₂F₉/Cu-10Zn | 70/30 | | | Ha17 | 100 | Large | Not discolored | Absent |
| | Ha18 | CsZnAl₂F₉/Cu-50Zn | 70/30 | | | Ha18 | 100 | Large | Not discolored | Absent |
| | Ha19 | CsZnAl₂/F₉/Cu-90Zn | 70/30 | | | Ha19 | 100 | Large | Not discolored | Absent |
| | Ha20 | CsZnAl₂F₉/Al-1Si-1Cu | 70/30 | | | Ha20 | 100 | Large | Not discolored | Absent |
| | Ha21 | CsZnAl₂F₉/Al-10Si-10Cu | 70/30 | | | Ha21 | 100 | Large | Not discolored | Absent |
| | Ha22 | CsZnAl₂F₉/Al-25Si-25Cu | 70/30 | | | Ha22 | 100 | Large | Not discolored | Absent |
| Examples 5 | Ha23 | CsZnAl₂F₉/Al-45Si-45Cu | 70/30 | | Examples 5 | Ha23 | 100 | Large | Not discolored | Absent |
| | Ha24 | CsZnAl₂F₉/Al-90Si-1Cu | 70/30 | | | Ha24 | 100 | Large | Not discolored | Absent |
| | Ha25 | CsZnAl₂F₉/Al-1Si-90Cu | 70/30 | | | Ha25 | 100 | Large | Not discolored | Absent |
| | Ha26 | CsZnAl₂F₉/Al-1Si-1Zn | 70/30 | | | Ha26 | 100 | Large | Not discolored | Absent |
| | Ha27 | CsZnAl₂F₉/Al-10Si-10Zn | 70/30 | | | Ha27 | 100 | Large | Not discolored | Absent |
| | Ha28 | CsZnAl₂F₉/Al-25Si-25Zn | 70/30 | | | Ha28 | 100 | Large | Not discolored | Absent |
| | Ha29 | CsZnAl₂F₉/Al-45Si-45Zn | 70/30 | | | Ha29 | 100 | Large | Not discolored | Absent |
| | Ha30 | CsZnAl₂F₉/Al-90Si-1Zn | 70/30 | | | Ha30 | 100 | Large | Not discolored | Absent |
| | Ha31 | CsZnAl₂F₉/Al-1Si-90Zn | 70/30 | | | Ha31 | 100 | Large | Not discolored | Absent |
| | Ha32 | CsZnAl₂F₉/Al-1Cu-1Zn | 70/30 | | | Ha32 | 100 | Large | Not discolored | Absent |
| | Ha33 | CsZnAl₂F₉/Al-10Cu-10Zn | 70/30 | | | Ha33 | 100 | Large | Not discolored | Absent |
| | Ha34 | CsZnAl₂F₉/Al-25Cu-25Zn | 70/30 | | | Ha34 | 100 | Large | Not discolored | Absent |
| | Ha35 | CsZnAl₂F₉/Al-45Cu-45Zn | 70/30 | | | Ha35 | 100 | Large | Not discolored | Absent |
| | Ha36 | CsZnAl₂F₉/Al-90Cu-1Zn | 70/30 | | | Ha36 | 100 | Large | Not discolored | Absent |
| | Ha37 | CsZnAl₂F₉/Al-1Cu-90Zn | 70/30 | | | Ha37 | 100 | Large | Not discolored | Absent |
| | Ha38 | CsZnAl₂F₉/Al-1Si-1Cu-1Zn | 70/30 | | | Ha38 | 100 | Large | Not discolored | Absent |
| | Ha39 | CsZnAl₂F₉/Al-5Si-5Cu-5Zn | 70/30 | | | Ha39 | 100 | Large | Not discolored | Absent |
| | Ha40 | CsZnAl₂F₉/Al-10Si-10Cu-10Zn | 70/30 | | | Ha40 | 100 | Large | Not discolored | Absent |
| | Ha41 | CsZnAl₂F₉/Al-30Si-30Cu-30Cu | 70/30 | | | Ha41 | 100 | Large | Not discolored | Absent |
| | Ha42 | CsZnAl₂F₉/Al-90Si-1Cu-1Zn | 70/30 | | | Ha42 | 100 | Large | Not discolored | Absent |
| | Ha43 | CsZnAl₂F₉/Al-1Si-90Cu-1Zn | 70/30 | | | Ha43 | 100 | Large | Not discolored | Absent |
| | Ha44 | CsZnAl₂F₉/Al-1Si-1Cu-90Zn | 70/30 | | | Ha44 | 100 | Large | Not discolored | Absent |

**TABLE 6-9**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Aa45 | KZnAlF₆/Al | 30/70 | | | Aa45 | 30 | Small | Not discolored | Present |
| | Aa46 | KZnAlF₆/Si | 30/70 | | | Aa46 | 90 | Large | Not discolored | Present |
| | Aa47 | KZnAlF₆/Cu | 30/70 | | | Aa47 | 60 | Small | Not discolored | Present |
| | Aa48 | KZnAlF₆/Zn | 30/70 | | | Aa48 | 50 | Small | Not discolored | Present |
| | Aa49 | KZnAlF₆/Al-1Si | 30/70 | | | Aa49 | 35 | Small | Not discolored | Present |
| | Aa50 | KZnAlF₆/Al-10Si | 30/70 | | | Aa50 | 40 | Small | Not discolored | Present |
| | Aa51 | KZnAlF₆/Al-50Si | 30/70 | | | Aa51 | 70 | Medium | Not discolored | Present |
| | Aa52 | KZnAlF₆/Al-90Si | 30/70 | | | Aa52 | 80 | Large | Not discolored | Present |
| | Aa53 | KZnAlF₆/Al-1Cu | 30/70 | | | Aa53 | 30 | Small | Not discolored | Present |
| | Aa54 | KZnAlF₆/Al-10Cu | 30/70 | | | Aa54 | 35 | Small | Not discolored | Present |
| | Aa55 | KZnAlF₆/Al-50Cu | 30/70 | | | Aa55 | 50 | Small | Not discolored | Present |
| | Aa56 | KZnAlF₆/Al-90Cu | 30/70 | | | Aa56 | 60 | Small | Not discolored | Present |
| | Aa57 | KZnAlF₆/Al-1Zn | 30/70 | | | Aa57 | 30 | Small | Not discolored | Present |
| | Aa58 | KZnAlF₆/Al-10Zn | 30/70 | | | Aa58 | 35 | Small | Not discolored | Present |
| | Aa59 | KZnAlF₆/Al-50Zn | 30/70 | | | Aa59 | 40 | Small | Not discolored | Present |
| | Aa60 | KZnAlF₆/Al-90Zn | 30/70 | | | Aa60 | 50 | Small | Not discolored | Present |
| | Aa61 | KZnAlF₆/Cu-10Zn | 30/70 | | | Aa61 | 60 | Small | Not discolored | Present |
| | Aa62 | KZnAlF₆/Cu-50Zn | 30/70 | | | Aa62 | 55 | Small | Not discolored | Present |
| | Aa63 | KZnAlF₆/Cu-90Zn | 30/70 | | | Aa63 | 50 | Small | Not discolored | Present |
| | Aa64 | KZnAlF₆/Al-1Si-1Cu | 30/70 | | | Aa64 | 30 | Small | Not discolored | Present |
| | Aa65 | KZnAlF₆/Al-10Si-10Cu | 30/70 | | | Aa65 | 40 | Small | Not discolored | Present |
| | Aa66 | KZnAlF₆/Al-25Si-25Cu | 30/70 | | | Aa66 | 50 | Medium | Not discolored | Present |
| Comparative Example 5 | Aa67 | KZnAlF₆/Al-45Si-45Cu | 30/70 | | Comparative Example 5 | Aa67 | 60 | Medium | Not discolored | Present |
| | Aa68 | KZnAlF₆/Al-90Si-1Cu | 30/70 | | | Aa68 | 80 | Large | Not discolored | Present |
| | Aa69 | KZnAlF₆/Al-1Si-90Cu | 30/70 | | | Aa69 | 60 | Small | Not discolored | Present |
| | Aa70 | KZnAlF₆/Al-1Si-1Zn | 30/70 | | | Aa70 | 35 | Small | Not discolored | Present |
| | Aa71 | KZnAlF₆/Al-10Si-10Zn | 30/70 | | | Aa71 | 40 | Small | Not discolored | Present |
| | Aa72 | KZnAlF₆/Al-25Si-25Zn | 30/70 | | | Aa72 | 45 | Medium | Not discolored | Present |
| | Aa73 | KZnAlF₆/Al-45Si-45Zn | 30/70 | | | Aa73 | 55 | Medium | Not discolored | Present |
| | Aa74 | KZnAlF₆/Al-90Si-1Zn | 30/70 | | | Aa74 | 80 | Large | Not discolored | Present |
| | Aa75 | KZnAlF₆/Al-1Si-90Zn | 30/70 | | | Aa75 | 60 | Small | Not discolored | Present |
| | Aa76 | KZnAlF₆/Al-1Cu-1Zn | 30/70 | | | Aa76 | 30 | Small | Not discolored | Present |
| | Aa77 | KZnAlF₆/Al-10Cu-10Zn | 30/70 | | | Aa77 | 35 | Small | Not discolored | Present |
| | Aa78 | KZnAlF₆/Al-25Cu-25Zn | 30/70 | | | Aa78 | 40 | Small | Not discolored | Present |
| | Aa79 | KZnAlF₆/Al-45Cu-45Zn | 30/70 | | | Aa79 | 50 | Small | Not discolored | Present |
| | Aa80 | KZnAlF₆/Al-90Cu-1Zn | 30/70 | | | Aa80 | 60 | Small | Not discolored | Present |
| | Aa81 | KZnAlF₆/Al-1Cu-90Zn | 30/70 | | | Aa81 | 50 | Small | Not discolored | Present |
| | Aa82 | KZnAlF₆/Al-1Si-1Cu-1Zn | 30/70 | | | Aa82 | 35 | Small | Not discolored | Present |
| | Aa83 | KZnAlF₆/Al-5Si-5Cu-5Zn | 30/70 | | | Aa83 | 40 | Small | Not discolored | Present |
| | Aa84 | KZnAlF₆/Al-10Si-10Cu-10Zn | 30/70 | | | Aa84 | 50 | Small | Not discolored | Present |
| | Aa85 | KZnAlF₆/Al-30Si-30Cu-30Cu | 30/70 | | | Aa85 | 55 | Medium | Not discolored | Present |
| | Aa86 | KZnAlF₆/Al-90Si-1Cu-1Zn | 30/70 | | | Aa86 | 80 | Large | Not discolored | Present |
| | Aa87 | KZnAlF₆/Al-1Si-90Cu-1Zn | 30/70 | | | Aa87 | 60 | Small | Not discolored | Present |
| | Aa88 | KZnAlF₆/Al-1Si-1Cu-90Zn | 30/70 | | | Aa88 | 50 | Small | Not discolored | Present |

**TABLE 6-10**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ba45 | K₂ZnAlF₇/Al | 30/70 | | | Ba45 | 30 | Small | Not discolored | Present |
| | Ba46 | K₂ZnAlF₂/Si | 30/70 | | | Ba46 | 90 | Large | Not discolored | Present |
| | Ba47 | K₂ZnAlF₇/Cu | 30/70 | | | Ba47 | 60 | Small | Not discolored | Present |
| | Ba48 | K₂ZnAlF₇/Zn | 30/70 | | | Ba48 | 50 | Small | Not discolored | Present |
| | Ba49 | K₂ZnAlF₇/Al-1Si | 30/70 | | | Ba49 | 35 | Small | Not discolored | Present |
| | Ba50 | K₂ZnAlF₇/Al-10Si | 30/70 | | | Ba50 | 40 | Small | Not discolored | Present |
| | Ba51 | K₂ZnAlF₇/Al-50Si | 30/70 | | | Ba51 | 70 | Medium | Not discolored | Present |
| | Ba52 | K₂ZnAlF₇/Al-90Si | 30/70 | | | Ba52 | 80 | Small | Not discolored | Present |
| | Ba53 | K₂ZnAlF₇/Al-1Cu | 30/70 | | | Ba53 | 30 | Small | Not discolored | Present |
| | Ba54 | K₂ZnAlF₇/Al-10Cu | 30/70 | | | Ba54 | 35 | Small | Not discolored | Present |
| | Ba55 | K₂ZnAlF₇/Al-50Cu | 30/70 | | | Ba55 | 50 | Large | Not discolored | Present |
| | Ba56 | K₂ZnAlF₇/Al-90Cu | 30/70 | | | Ba56 | 60 | Small | Not discolored | Present |
| | Ba57 | K₂ZnAlF₇/Al-1Zn | 30/70 | | | Ba57 | 30 | Small | Not discolored | Present |
| | Ba58 | K₂ZnAlF₇/Al-10Zn | 30/70 | | | Ba58 | 35 | Small | Not discolored | Present |
| | Ba59 | K₂ZnAlF₇/Al-50Zn | 30/70 | | | Ba59 | 40 | Small | Not discolored | Present |
| | Ba60 | K₂ZnAlF₇/Al-90Zn | 30/70 | | | Ba60 | 50 | Small | Not discolored | Present |
| | Ba61 | K₂ZnAlF₇/Cu-10Zn | 30/70 | | | Ba61 | 60 | Small | Not discolored | Present |
| | Ba62 | K₂ZnAlF₇/Cu-50Zn | 30/70 | | | Ba62 | 55 | Small | Not discolored | Present |
| | Ba63 | K₂ZnAlF₇/Cu-90Zn | 30/70 | | | Ba63 | 50 | Small | Not discolored | Present |
| | Ba64 | K₂ZnAlF₇/Al-1Si-1Cu | 30/70 | | | Ba64 | 30 | Small | Not discolored | Present |
| | Ba65 | K₂ZnAlF₇/Al-10Si-10Cu | 30/70 | | | Ba65 | 40 | Small | Not discolored | Present |
| | Ba66 | K₂ZnAlF₇/Al-25Si-25Cu | 30/70 | | | Ba66 | 50 | Medium | Not discolored | Present |
| Comparative Example 5 | Ba67 | K₂ZnAlF₇/Al-45Si-45Cu | 30/70 | | Comparative Example 5 | Ba67 | 60 | Medium | Not discolored | Present |
| | Ba68 | K₂ZnAlF₇/Al-90Si-1Cu | 30/70 | | | Ba68 | 80 | Large | Not discolored | Present |
| | Ba69 | K₂ZnAlF₇/Al-1Si-90Cu | 30/70 | | | Ba69 | 60 | Small | Not discolored | Present |
| | Ba70 | K₂ZnAlF₇/Al-1Si-1Zn | 30/70 | | | Ba70 | 35 | Small | Not discolored | Present |
| | Ba71 | K₂ZnAlF₇/Al-10Si-10Zn | 30/70 | | | Ba71 | 40 | Small | Not discolored | Present |
| | Ba72 | K₂ZnAlF₇/Al-25Si-25Zn | 30/70 | | | Ba72 | 45 | Medium | Not discolored | Present |
| | Ba73 | K₂ZnAlF₇/Al-45Si-45Zn | 30/70 | | | Ba73 | 55 | Medium | Not discolored | Present |
| | Ba74 | K₂ZnAlF₇/Al-90Si-1Zn | 30/70 | | | Ba74 | 80 | Large | Not discolored | Present |
| | Ba75 | K₂ZnAlF₇/Al-1Si-90Zn | 30/70 | | | Ba75 | 60 | Small | Not discolored | Present |
| | Ba76 | K₂ZnAlF₇/Al-1Cu-1Zn | 30/70 | | | Ba76 | 30 | Small | Not discolored | Present |
| | Ba77 | K₂ZnAlF₇/Al-10Cu-10Zn | 30/70 | | | Ba77 | 35 | Small | Not discolored | Present |
| | Ba78 | K₂ZnAlF₇/Al-25Cu-25Zn | 30/70 | | | Ba78 | 40 | Small | Not discolored | Present |
| | Ba79 | K₂ZnAlF₇/Al-45Cu-45Zn | 30/70 | | | Ba79 | 50 | Small | Not discolored | Present |
| | Ba80 | K₂ZnAlF₇/Al-90Cu-1Zn | 30/70 | | | Ba80 | 60 | Small | Not discolored | Present |
| | Ba81 | K₂ZnAlF₇/Al-1Cu-90Zn | 30/70 | | | Ba81 | 50 | Small | Not discolored | Present |
| | Ba82 | K₂ZnAlF₇/Al-1Si-1Cu-1Zn | 30/70 | | | Ba82 | 35 | Small | Not discolored | Present |
| | Ba83 | K₂ZnAlF₇/Al-5Si-5Cu-5Zn | 30/70 | | | Ba83 | 40 | Small | Not discolored | Present |
| | Ba84 | K₂ZnAlF₇/Al-10Si-10Cu-10Zn | 30/70 | | | Ba84 | 50 | Small | Not discolored | Present |
| | Ba85 | K₂ZnAlF₇/Al-30Si-30Cu-30Cu | 30/70 | | | Ba85 | 55 | Medium | Not discolored | Present |
| | Ba86 | K₂ZnAlF₇/Al-90Si-1Cu-1Zn | 30/70 | | | Ba86 | 80 | Large | Not discolored | Present |
| | Ba87 | K₂ZnAlF₇/Al-1Si-90Cu-1Zn | 30/70 | | | Ba87 | 60 | Small | Not discolored | Present |
| | Ba88 | K₂ZnAlF₇/Al-1Si-1Cu-90Zn | 30/70 | | | Ba88 | 50 | Small | Not discolored | Present |

**TABLE 6-11**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ca45 | KZn₂AlF₈/Al | 30/70 | | | Ca45 | 30 | Small | Not discolored | Present |
| | Ca46 | KZn₂AlF₈/Si | 30/70 | | | Ca46 | 90 | Large | Not discolored | Present |
| | Ca47 | KZn₂AlF₈/Cu | 30/70 | | | Ca47 | 60 | Small | Not discolored | Present |
| | Ca48 | KZn₂AlF₈/Zn | 30/70 | | | Ca48 | 50 | Small | Not discolored | Present |
| | Ca49 | KZn₂AlF₈/Al-1Si | 30/70 | | | Ca49 | 35 | Small | Not discolored | Present |
| | Ca50 | KZn₂AlF₈/Al-10Si | 30/70 | | | Ca50 | 40 | Small | Not discolored | Present |
| | Ca51 | KZn₂AlF₈/Al-50Si | 30/70 | | | Ca51 | 70 | Medium | Not discolored | Present |
| | Ca52 | KZn₂AlF₈/Al-90Si | 30/70 | | | Ca52 | 80 | Large | Not discolored | Present |
| | Ca53 | KZn₂AlF₈/Al-1Cu | 30/70 | | | Ca53 | 30 | Small | Not discolored | Present |
| | Ca54 | KZn₂AlF₈/Al-10Cu | 30/70 | | | Ca54 | 35 | Small | Not discolored | Present |
| | Ca55 | KZn₂AlF₈/Al-50Cu | 30/70 | | | Ca55 | 50 | Medium | Not discolored | Present |
| | Ca56 | KZn₂AlF₈/Al-90Cu | 30/70 | | | Ca56 | 60 | Small | Not discolored | Present |
| | Ca57 | KZn₂AlF₈/Al-1Zn | 30/70 | | | Ca57 | 30 | Small | Not discolored | Present |
| | Ca58 | KZn₂AlF₈/Al-10Zn | 30/70 | | | Ca58 | 35 | Small | Not discolored | Present |
| | Ca59 | KZn₂AlF₈/Al-50Zn | 30/70 | | | Ca59 | 40 | Small | Not discolored | Present |
| | Ca60 | KZn₂AlF₈/Al-90Zn | 30/70 | | | Ca60 | 50 | Small | Not discolored | Present |
| | Ca61 | KZn₂AlF₈/Cu-10Zn | 30/70 | | | Ca61 | 60 | Small | Not discolored | Present |
| | Ca62 | KZn₂AlF₈/Cu-50Zn | 30/70 | | | Ca62 | 55 | Small | Not discolored | Present |
| | Ca63 | KZn₂AlF₈/Cu-90Zn | 30/70 | | | Ca63 | 50 | Small | Not discolored | Present |
| | Ca64 | KZn₂AlF₈/Al-1Si-1Cu | 30/70 | | | Ca64 | 30 | Small | Not discolored | Present |
| | Ca65 | KZn₂AlF₈/Al-10Si-10Cu | 30/70 | | | Ca65 | 40 | Small | Not discolored | Present |
| | Ca66 | KZn₂AlF₈/Al-25Si-25Cu | 30/70 | | | Ca66 | 50 | Medium | Not discolored | Present |
| Comparative Example 5 | Ca67 | KZn₂AlF₈/Al-45Si-45Cu | 30/70 | | Comparative Example 5 | Ca67 | 60 | Medium | Not discolored | Present |
| | Ca68 | KZn₂AlF₈/Al-90Si-1Cu | 30/70 | | | Ca68 | 80 | Large | Not discolored | Present |
| | Ca69 | KZn₂AlF₈/Al-1Si-90Cu | 30/70 | | | Ca69 | 60 | Small | Not discolored | Present |
| | Ca70 | KZn₂AlF₈/Al-1Si-1Zn | 30/70 | | | Ca70 | 35 | Small | Not discolored | Present |
| | Ca71 | KZn₂AlF₈/Al-10Si-10Zn | 30/70 | | | Ca71 | 40 | Small | Not discolored | Present |
| | Ca72 | KZn₂AlF₈/Al-25Si-25Zn | 30/70 | | | Ca72 | 45 | Medium | Not discolored | Present |
| | Ca73 | KZn₂AlF₈/Al-45Si-45Zn | 30/70 | | | Ca73 | 55 | Medium | Not discolored | Present |
| | Ca74 | KZn₂AlF₈/Al-90Si-1Zn | 30/70 | | | Ca74 | 80 | Large | Not discolored | Present |
| | Ca75 | KZn₂AlF₈/Al-1Si-90Zn | 30/70 | | | Ca75 | 60 | Small | Not discolored | Present |
| | Ca76 | KZn₂AlF₈/Al-1Cu-1Zn | 30/70 | | | Ca76 | 30 | Small | Not discolored | Present |
| | Ca77 | KZn₂AlF₈/Al-10Cu-10Zn | 30/70 | | | Ca77 | 35 | Small | Not discolored | Present |
| | Ca78 | KZn₂AlF₈/Al-25Cu-25Zn | 30/70 | | | Ca78 | 40 | Small | Not discolored | Present |
| | Ca79 | KZn₂AlF₈/Al-45Cu-45Zn | 30/70 | | | Ca79 | 50 | Small | Not discolored | Present |
| | Ca80 | KZn₂AlF₈/Al-90Cu-1Zn | 30/70 | | | Ca80 | 60 | Small | Not discolored | Present |
| | Ca81 | KZn₂AlF₈/Al-1Cu-90Zn | 30/70 | | | Ca81 | 50 | Small | Not discolored | Present |
| | Ca82 | KZn₂AlF₈/Al-1Si-1Cu-1Zn | 30/70 | | | Ca82 | 35 | Small | Not discolored | Present |
| | Ca83 | KZn₂AlF₈/Al-5Si-5Cu-5Zn | 30/70 | | | Ca83 | 40 | Small | Not discolored | Present |
| | Ca84 | KZn₂AlF₈/Al-10Si-10Cu-10Zn | 30/70 | | | Ca84 | 50 | Small | Not discolored | Present |
| | Ca85 | KZn₂AlF₈/Al-30Si-30Cu-30Cu | 30/70 | | | Ca85 | 55 | Medium | Not discolored | Present |
| | Ca86 | KZn₂AlF₈/Al-90Si-1Cu-1Zn | 30/70 | | | Ca86 | 80 | Large | Not discolored | Present |
| | Ca87 | KZn₂AlF₈/Al-1Si-90Cu-1Zn | 30/70 | | | Ca87 | 60 | Small | Not discolored | Present |
| | Ca88 | KZn₂AlF₈/Al-1Si-1Cu-90Zn | 30/70 | | | Ca88 | 50 | Small | Not discolored | Present |

**TABLE 6-12**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Da45 | KZnAl₂F₉/Al | 30/70 | | | Da45 | 30 | Small | Not discolored | Present |
| | Da46 | KZnAl₂F₉/Si | 30/70 | | | Da46 | 90 | Large | Not discolored | Present |
| | Da47 | KZnAl₂F₉/Cu | 30/70 | | | Da47 | 60 | Small | Not discolored | Present |
| | Da48 | KZnAl₂F₉/Zn | 30/70 | | | Da48 | 50 | Small | Not discolored | Present |
| | Da49 | KZnAl₂F₉/Al-1Si | 30/70 | | | Da49 | 35 | Large | Not discolored | Present |
| | Da50 | KZnAl₂F₉/Al-10Si | 30/70 | | | Da50 | 40 | Small | Not discolored | Present |
| | Da51 | KZnAl₂F₉/Al-50Si | 30/70 | | | Da51 | 70 | Small | Not discolored | Present |
| | Da52 | KZnAl₂F₉/Al-90Si | 30/70 | | | Da52 | 80 | Small | Not discolored | Present |
| | Da53 | KZnAl₂F₉/Al-1Cu | 30/70 | | | Da53 | 30 | Small | Not discolored | Present |
| | Da54 | KZnAl₂F₉/Al-10Cu | 30/70 | | | Da54 | 35 | Medium | Not discolored | Present |
| | Da55 | KZnAl₂F₉/Al-50Cu | 30/70 | | | Da55 | 50 | Large | Not discolored | Present |
| | Da56 | KZnAl₂F₉/Al-90Cu | 30/70 | | | Da56 | 60 | Small | Not discolored | Present |
| | Da57 | KZnAl₂F₉/Al-1Zn | 30/70 | | | Da57 | 30 | Small | Not discolored | Present |
| | Da58 | KZnAl₂F₉/Al-10Zn | 30/70 | | | Da58 | 35 | Small | Not discolored | Present |
| | Da59 | KZnAl₂F₉/Al-50Zn | 30/70 | | | Da59 | 40 | Small | Not discolored | Present |
| | Da60 | KZnAl₂F₉/Al-90Zn | 30/70 | | | Da60 | 50 | Small | Not discolored | Present |
| | Da61 | KZnAl₂F₉/Cu-10Zn | 30/70 | | | Da61 | 60 | Small | Not discolored | Present |
| | Da62 | KZnAl₂F₉/Cu-50Zn | 30/70 | | | Da62 | 55 | Small | Not discolored | Present |
| | Da63 | KZnAl₂F₉/Cu-90Zn | 30/70 | | | Da63 | 50 | Small | Not discolored | Present |
| | Da64 | KZnAl₂F₉/Al-1Si-1Cu | 30/70 | | | Da64 | 30 | Small | Not discolored | Present |
| | Da65 | KZnAl₂F₉/Al-10Si-10Cu | 30/70 | | | Da65 | 40 | Small | Not discolored | Present |
| | Da66 | KZnAl₂F₉/Al-25Si-25Cu | 30/70 | | | Da66 | 50 | Medium | Not discolored | Present |
| Comparative Example 5 | Da67 | KZnAl₂F₉/Al-45Si-45Cu | 30/70 | | Comparative Example 5 | Da67 | 60 | Medium | Not discolored | Present |
| | Da68 | KZnAl₂F₉/Al-90Si-1Cu | 30/70 | | | Da68 | 80 | Large | Not discolored | Present |
| | Da69 | KZnAl₂F₉/Al-1Si-90Cu | 30/70 | | | Da69 | 60 | Small | Not discolored | Present |
| | Da70 | KZnAl₂F₉/Al-1Si-1Zn | 30/70 | | | Da70 | 35 | Small | Not discolored | Present |
| | Da71 | KZnAl₂F₉/Al-10Si-10Zn | 30/70 | | | Da71 | 40 | Small | Not discolored | Present |
| | Da72 | KZnAl₂F₉/Al-25Si-25Zn | 30/70 | | | Da72 | 45 | Medium | Not discolored | Present |
| | Da73 | KZnAl₂F₉/Al-45Si-45Zn | 30/70 | | | Da73 | 55 | Medium | Not discolored | Present |
| | Da74 | KZnAl₂F₉/Al-90Si-1Zn | 30/70 | | | Da74 | 80 | Large | Not discolored | Present |
| | Da75 | KZnAl₂F₉/Al-1Si-90Zn | 30/70 | | | Da75 | 60 | Small | Not discolored | Present |
| | Da76 | KZnAl₂F₉/Al-1Cu-1Zn | 30/70 | | | Da76 | 30 | Small | Not discolored | Present |
| | Da77 | KZnAl₂F₉/Al-10Cu-10Zn | 30/70 | | | Da77 | 35 | Small | Not discolored | Present |
| | Da78 | KZnAl₂F₉/Al-25Cu-25Zn | 30/70 | | | Da78 | 40 | Small | Not discolored | Present |
| | Da79 | KZnAl₂F₉/Al-45Cu-45Zn | 30/70 | | | Da79 | 50 | Small | Not discolored | Present |
| | Da80 | KZnAl₂F₉/Al-90Cu-1Zn | 30/70 | | | Da80 | 60 | Small | Not discolored | Present |
| | Da81 | KZnAl₂F₉/Al-1Cu-90Zn | 30/70 | | | Da81 | 50 | Small | Not discolored | Present |
| | Da82 | KZnAl₂F₉/Al-1Si-1Cu-1Zn | 30/70 | | | Da82 | 35 | Small | Not discolored | Present |
| | Da83 | KZnAl₂F₉/Al-5Si-5Cu-5Zn | 30/70 | | | Da83 | 40 | Small | Not discolored | Present |
| | Da84 | KZnAl₂F₉/Al-10Si-10Cu-10Zn | 30/70 | | | Da84 | 50 | Small | Not discolored | Present |
| | Da85 | KZnAl₂F₉/Al-30Si-30Cu-30Cu | 30/70 | | | Da85 | 55 | Medium | Not discolored | Present |
| | Da86 | KZnAl₂F₉/Al-90Si-1Cu-1Zn | 30/70 | | | Da86 | 80 | Large | Not discolored | Present |
| | Da87 | KZnAl₂F₉/Al-1Si-90Cu-1Zn | 30/70 | | | Da87 | 60 | Small | Not discolored | Present |
| | Da88 | KZnAl₂F₉/Al-1Si-1Cu-90Zn | 30/70 | | | Da88 | 50 | Small | Not discolored | Present |

**TABLE 6-13**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ea45 | CsZnAlF₆/Al | 30/70 | | | Ea45 | 30 | Small | Not discolored | Present |
| | Ea46 | CsZnAlF₆/Si | 30/70 | | | Ea46 | 90 | Large | Not discolored | Present |
| | Ea47 | CsZnAlF₆/Cu | 30/70 | | | Ea47 | 60 | Small | Not discolored | Present |
| | Ea48 | CsZnAlF₆/Zn | 30/70 | | | Ea48 | 50 | Small | Not discolored | Present |
| | Ea49 | CsZnAlF₆/Al-1Si | 30/70 | | | Ea49 | 35 | Small | Not discolored | Present |
| | Ea50 | CsZnAlF₆/Al-10Si | 30/70 | | | Ea50 | 40 | Small | Not discolored | Present |
| | Ea51 | CsZnAlF₆/Al-50Si | 30/70 | | | Ea51 | 70 | Small | Not discolored | Present |
| | Ea52 | CsZnAlF₆/Al-90Si | 30/70 | | | Ea52 | 80 | Small | Not discolored | Present |
| | Ea53 | CsZnAlF₆/Al-10Cu | 30/70 | | | Ea53 | 30 | Small | Not discolored | Present |
| | Ea54 | CsZnAlF₆/Al-10Cu | 30/70 | | | Ea54 | 35 | Medium | Not discolored | Present |
| | Ea55 | CsZnAlF₆/Al-50Cu | 30/70 | | | Ea55 | 50 | Large | Not discolored | Present |
| | Ea56 | CsZnAlF₆/Al-90Cu | 30/70 | | | Ea56 | 60 | Small | Not discolored | Present |
| | Ea57 | CsZnAlF₆/Al-1Zn | 3onto | | | Ea57 | 30 | Small | Not discolored | Present |
| | Ea58 | CsZnAlF₆/Al-10Zn | 30/70 | | | Ea58 | 35 | Small | Not discolored | Present |
| | Ea59 | CsZnAlF₆/Al-50Zn | 30/70 | | | Ea59 | 40 | Small | Not discolored | Present |
| | Ea60 | CsZnAlF₆/Al-90Zn | 30/70 | | | Ea60 | 50 | Small | Not discolored | Present |
| | Ea61 | CsZnAlF₆/Cu-10Zn | 30/7O | | | Ea61 | 60 | Small | Not discolored | Present |
| | Ea62 | CsZnAlF₆/Cu-50Zn | 30/70 | | | Ea62 | 55 | Small | Not discolored | Present |
| | Ea63 | CsZnAlF₆/Cu-90Zn | 30/70 | | | Ea63 | 50 | Small | Not discolored | Present |
| | Ea64 | CsZnAlF₆/Al-1Si-1Cu | 30/70 | | | Ea64 | 30 | Small | Not discolored | Present |
| | Ea65 | CsZnAlF₆/Al-10Si-10Cu | 30/70 | | | Ea65 | 40 | Small | Not discolored | Present |
| | Ea66 | CsZnAlF₆/Al-25Si-25Cu | 30/70 | | | Ea66 | 50 | Medium | Not discolored | Present |
| Comparative Example 5 | Ea67 | CsZnAlF₆/Al-45Si-45Cu | 30/70 | | Comparative Example 5 | Ea67 | 60 | Medium | Not discolored | Present |
| | Ea68 | CsZnAlF₆/Al-90Si-1Cu | 30/70 | | | Ea68 | 80 | Large | Not discolored | Present |
| | Ea69 | CsZnAlF₆/Al-1Si-90Cu | 30/70 | | | Ea69 | 60 | Small | Not discolored | Present |
| | Ea70 | CsZnAlF₆/Al-1Si-1Zn | 30/70 | | | Ea70 | 35 | Small | Not discolored | Present |
| | Ea71 | CsZnAlF₆/Al-10Si-10Zn | 30/70 | | | Ea71 | 40 | Small | Not discolored | Present |
| | Ea72 | CsZnAlF₆/Al-25Si-25Zn | 30/70 | | | Ea72 | 45 | Medium | Not discolored | Present |
| | Ea73 | CsZnAlF₆/Al-45Si-45Zn | 30/70 | | | Ea73 | 55 | Medium | Not discolored | Present |
| | Ea74 | CsZnAlF₆/Al-90Si-1Zn | 30/70 | | | Ea74 | 80 | Large | Not discolored | Present |
| | Ea75 | CsZnAlF₆/Al-1Si-90Zn | 30/70 | | | Ea75 | 60 | Small | Not discolored | Present |
| | Ea76 | CsZnAlF₆/Al-1Cu-1Zn | 30/70 | | | Ea76 | 30 | Small | Not discolored | Present |
| | Ea77 | CsZnAlF₆/Al-10Cu-10Zn | 30/70 | | | Ea77 | 35 | Small | Not discolored | Present |
| | Ea78 | CsZnAlF₆/Al-25Cu-25Zn | 30/70 | | | Ea78 | 40 | Small | Not discolored | Present |
| | Ea79 | CsZnAlF₆/Al-45Cu-45Zn | 30/70 | | | Ea79 | 50 | Small | Not discolored | Present |
| | Ea80 | CsZnAlF₆/Al-90Cu-1Zn | 30/70 | | | Ea80 | 60 | Small | Not discolored | Present |
| | Ea81 | CsZnAlF₆/Al-1Cu-90Zn | 30/70 | | | Ea81 | 50 | Small | Not discolored | Present |
| | Ea82 | CsZnAlF₆/Al-1Si-1Cu-1Zn | 30/70 | | | Ea82 | 35 | Small | Not discolored | Present |
| | Ea83 | CsZnAlF₆/Al-5Si-5Cu-5Zn | 30/70 | | | Ea83 | 40 | Small | Not discolored | Present |
| | Ea84 | CsZnAlF₆/Al-10Si-10Cu-10Zn | 30/70 | | | Ea84 | 50 | Small | Not discolored | Present |
| | Ea85 | CsZnAlF₆/Al-30Si-30Cu-30Cu | 30/70 | | | Ea85 | 55 | Medium | Not discolored | Present |
| | Ea86 | CsZnAlF₆/Al-90Si-1Cu-1Zn | 30/70 | | | Ea86 | 80 | Large | Not discolored | Present |
| | Ea87 | CsZnAlF₆/Al-1Si-90Cu-1Zn | 30/70 | | | Ea87 | 60 | Small | Not discolored | Present |
| | Ea88 | CsZnAlF₆/Al-1Si-1Cu-90Zn | 30/70 | | | Ea88 | 50 | Small | Not discolored | Present |

**TABLE 6-14**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Fa45 | Cs₂ZnAlF₇/Al | 30/70 | | | Fa45 | 30 | Small | Not discolored | Present |
| | Fa46 | Cs₂ZnAlF₇/Si | 30/70 | | | Fa46 | 90 | Large | Not discolored | Present |
| | Fa47 | Cs₂ZnAlF₇/Cu | 30/70 | | | Fa47 | 60 | Small | Not discolored | Present |
| | Fa48 | Cs₂ZnAlF₇/Zn | 30/70 | | | Fa48 | 50 | Small | Not discolored | Present |
| | Fa49 | Cs₂ZnAlF₇/Al-1Si | 30/70 | | | Fa49 | 35 | Small | Not discolored | Present |
| | Fa50 | Cs₂ZnAlF₇/Al-10Si | 30/70 | | | Fa50 | 40 | Small | Not discolored | Present |
| | Fa51 | Cs₂ZnAlF₇/Al-50Si | 30/70 | | | Fa51 | 70 | Small | Not discolored | Present |
| | Fa52 | Cs₂ZnAlF₇/Al-90Si | 30/70 | | | Fa52 | 80 | Small | Not discolored | Present |
| | Fa53 | Cs₂ZnAlF₇/Al-1Cu | 30/70 | | | Fa53 | 30 | Small | Not discolored | Present |
| | Fa54 | Cs₂ZnAlF₇/Al-10Cu | 30/70 | | | Fa54 | 35 | Medium | Not discolored | Present |
| | Fa55 | Cs₂ZnAlF₇/Al-50Cu | 30/70 | | | Fa55 | 50 | Large | Not discolored | Present |
| | Fa56 | Cs₂ZnAlF₇/Al-90Cu | 30/70 | | | Fa56 | 60 | Small | Not discolored | Present |
| | Fa57 | Cs₂ZnAlF₇/Al-1Zn | 30/70 | | | Fa57 | 30 | Small | Not discolored | Present |
| | Fa58 | Cs₂ZnAlF₇/Al-10Zn | 30/70 | | | Fa58 | 35 | Small | Not discolored | Present |
| | Fa59 | Cs₂ZnAlF₇/Al-50Zn | 30/70 | | | Fa59 | 40 | Small | Not discolored | Present |
| | Fa60 | Cs₂ZnAlF₇/Al-90Zn | 30/70 | | | Fa60 | 50 | Small | Not discolored | Present |
| | Fa61 | Cs₂ZnAlF₇/Cu-10Zn | 30/70 | | | Fa61 | 60 | Small | Not discolored | Present |
| | Fa62 | Cs₂ZnAlF₇/Cu-50Zn | 30/70 | | | Fa62 | 55 | Small | Not discolored | Present |
| | Fa63 | Cs₂ZnAlF₇/Cu-90Zn | 30/70 | | | Fa63 | 50 | Small | Not discolored | Present |
| | Fa64 | Cs₂ZnAlF₇/Al-1Si-1Cu | 30/70 | | | Fa64 | 30 | Small | Not discolored | Present |
| | Fa65 | Cs₂ZnAlF₇/Al-10Si-10Cu | 30/70 | | | Fa65 | 40 | Small | Not discolored | Present |
| | Fa66 | Cs₂ZnAlF₇/Al-25Si-25Cu | 30/70 | | | Fa66 | 50 | Medium | Not discolored | Present |
| Comparative Example 5 | Fa67 | Cs₂ZnAlF₇/Al-45Si-45Cu | 30/70 | | Comparative Example 5 | Fa67 | 60 | Medium | Not discolored | Present |
| | Fa68 | Cs₂ZnAlF₇/Al-90Si-1Cu | 30/70 | | | Fa68 | 80 | Large | Not discolored | Present |
| | Fa69 | Cs₂ZnAlF₇/Al-1Si-90Cu | 30/70 | | | Fa69 | 60 | Small | Not discolored | Present |
| | Fa70 | Cs₂ZnAlF₇/Al-1Si-1Zn | 30/70 | | | Fa70 | 35 | Small | Not discolored | Present |
| | Fa71 | Cs₂ZnAlF₇/Al-10Si-10Zn | 30/70 | | | Fa71 | 40 | Small | Not discolored | Present |
| | Fa72 | Cs₂ZnAlF₇/Al-25Si-25Zn | 30/70 | | | Fa72 | 45 | Medium | Not discolored | Present |
| | Fa73 | Cs₂ZnAlF₇/Al-45Si-45Zn | 30/70 | | | Fa73 | 55 | Medium | Not discolored | Present |
| | Fa74 | Cs₂ZnAlF₇/Al-90Si-1Zn | 30/70 | | | Fa74 | 80 | Large | Not discolored | Present |
| | Fa75 | Cs₂ZnAlF₇/Al-1Si-90Zn | 30/70 | | | Fa75 | 60 | Small | Not discolored | Present |
| | Fa76 | Cs₂ZnAlF₇/Al-1Cu-1Zn | 30/70 | | | Fa76 | 30 | Small | Not discolored | Present |
| | Fa77 | Cs₂ZnAlF₇/Al-10Cu-10Zn | 30/70 | | | Fa77 | 35 | Small | Not discolored | Present |
| | Fa78 | Cs₂ZnAlF₇/Al-25Cu-25Zn | 30/70 | | | Fa78 | 40 | Small | Not discolored | Present |
| | Fa79 | Cs₂ZnAlF₇/Al-45Cu-45Zn | 30/70 | | | Fa79 | 50 | Small | Not discolored | Present |
| | Fa80 | Cs₂ZnAlF₇/Al-90Cu-1Zn | 30/70 | | | Fa80 | 60 | Small | Not discolored | Present |
| | Fa81 | Cs₂ZnAlF₇/Al-1Cu-90Zn | 30/70 | | | Fa81 | 50 | Small | Not discolored | Present |
| | Fa82 | Cs₂ZnAlF₇/Al-1Si-1Cu-1Zn | 30/70 | | | Fa82 | 35 | Small | Not discolored | Present |
| | Fa83 | Cs₂ZnAlF₇/Al-5Si-5Cu-5Zn | 30/70 | | | Fa83 | 40 | Small | Not discolored | Present |
| | Fa84 | Cs₂ZnAlF₇/Al-10Si-10Cu-10Zn | 30/70 | | | Fa84 | 50 | Small | Not discolored | Present |
| | Fa85 | Cs₂ZnAlF₇/Al-30Si-30Cu-30Cu | 30/70 | | | Fa85 | 55 | Medium | Not discolored | Present |
| | Fa86 | Cs₂ZnAlF₇/Al-90Si-1Cu-1Zn | 30/70 | | | Fa86 | 80 | Large | Not discolored | Present |
| | Fa87 | Cs₂ZnAlF₇/Al-1Si-90Cu-1Zn | 30/70 | | | Fa87 | 60 | Small | Not discolored | Present |
| | Fa88 | Cs₂ZnAlF₇/Al-1Si-1Cu-90Zn | 30/70 | | | Fa88 | 50 | Small | Not discolored | Present |

**TABLE 6-15**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ga45 | CsZn₂AlF₈/Al | 30/70 | | | Ga45 | 30 | Small | Not discolored | Present |
| | Ga46 | CsZn₂AlF₈/Si | 30/70 | | | Ga46 | 90 | Large | Not discolored | Present |
| | Ga47 | CsZn₂AlF₈/Cu | 30/70 | | | Ga47 | 60 | Small | Not discolored | Present |
| | Ga48 | CsZn₂AlF₈/Zn | 30/70 | | | Ga48 | 50 | Small | Not discolored | Present |
| | Ga49 | CsZn₂AlF₈/Al-1Si | 30/70 | | | Ga49 | 35 | Small | Not discolored | Present |
| | Ga50 | CsZn₂AlF₈/Al-10Si | 30/70 | | | Ga50 | 40 | Small | Not discolored | Present |
| | Ga51 | CsZn₂AlF₈/Al-50Si | 30/70 | | | Ga51 | 70 | Small | Not discolored | Present |
| | Ga52 | CsZn₂AlF₈/Al-90Si | 30/70 | | | Ga52 | 80 | Small | Not discolored | Present |
| | Ga53 | CsZn₂AlF₈/Al-1Cu | 30/70 | | | Ga53 | 30 | Small | Not discolored | Present |
| | Ga54 | CsZn₂AlF₈/Al-10Cu | 30/70 | | | Ga54 | 35 | Medium | Not discolored | Present |
| | Ga55 | CsZn₂AlF₈/Al-50Cu | 30/70 | | | Ga55 | 50 | Large | Not discolored | Present |
| | Ga56 | CsZn₂AlF₈/Al-90Cu | 30/70 | | | Ga56 | 60 | Small | Not discolored | Present |
| | Ga57 | CsZn₂AlF₈/Al-1Zn | 30/70 | | | Ga57 | 30 | Small | Not discolored | Present |
| | Ga58 | CsZn₂AlF₈/Al-10Zn | 30/70 | | | Ga58 | 35 | Small | Not discolored | Present |
| | Ga59 | CsZn₂AlF₈/Al-50Zn | 30/70 | | | Ga59 | 40 | Small | Not discolored | Present |
| | Ga60 | CsZn₂AlF₈/Al-90Zn | 30/70 | | | Ga60 | 50 | Small | Not discolored | Present |
| | Ga61 | CsZn₂AlF₈/Cu-10Zn | 30/70 | | | Ga61 | 60 | Small | Not discolored | Present |
| | Ga62 | CsZn₂AlF₈/Cu-50Zn | 30/70 | | | Ga62 | 55 | Small | Not discolored | Present |
| | Ga63 | CsZn₂AlF₈/Cu-90Zn | 30/70 | | | Ga63 | 50 | Small | Not discolored | Present |
| | Ga64 | CsZn₂AlF₈/Al-1Si-1Cu | 30/70 | | | Ga64 | 30 | Small | Not discolored | Present |
| | Ga65 | CsZn₂AlF₈/Al-10Si-10Cu | 30/70 | | | Ga65 | 40 | Small | Not discolored | Present |
| | Ga66 | CsZn₂AlF₈/Al-25Si-25Cu | 30/70 | | | Ga66 | 50 | Medium | Not discolored | Present |
| Comparative Example 5 | Ga67 | CsZn₂AlF₈/Al-45Si-45Cu | 30/70 | | Comparative Example 5 | Ga67 | 60 | Medium | Not discolored | Present |
| | Ga68 | CsZn₂AlF₈/Al-90Si-1Cu | 30/70 | | | Ga68 | 80 | Large | Not discolored | Present |
| | Ga69 | CsZn₂AlF₈/Al-1Si-90Cu | 30/70 | | | Ga69 | 60 | Small | Not discolored | Present |
| | Ga70 | CsZn₂AlF₈/Al-1Si-1Zn | 30/70 | | | Ga70 | 35 | Small | Not discolored | Present |
| | Ga71 | CsZn₂AlF₈/Al-10Si-10Zn | 30/70 | | | Ga71 | 40 | Small | Not discolored | Present |
| | Ga72 | CsZn₂AlF₈/Al-25Si-25Zn | 30/70 | | | Ga72 | 45 | Medium | Not discolored | Present |
| | Ga73 | CsZn₂AlF₈/Al-45Si-45Zn | 30/70 | | | Ga73 | 55 | Medium | Not discolored | Present |
| | Ga74 | CsZn₂AlF₈/Al-90Si-1Zn | 30/70 | | | Ga74 | 80 | Large | Not discolored | Present |
| | Ga75 | CsZn₂AlF₈/Al-1Si-90Zn | 30/70 | | | Ga75 | 60 | Small | Not discolored | Present |
| | Ga76 | CsZn₂AlF₈/Al-1Cu-1Zn | 30/70 | | | Ga76 | 30 | Small | Not discolored | Present |
| | Ga77 | CsZn₂AlF₈/Al-10Cu-10Zn | 30/70 | | | Ga77 | 35 | Small | Not discolored | Present |
| | Ga78 | CsZn₂AlF₈/Al-25Cu-25Zn | 30/70 | | | Ga78 | 40 | Small | Not discolored | Present |
| | Ga79 | CsZn₂AlF₈/Al-45Cu-45Zn | 30/70 | | | Ga79 | 50 | Small | Not discolored | Present |
| | Ga80 | CsZn₂AlF₈/Al-90Cu-1Zn | 30/70 | | | Ga80 | 60 | Small | Not discolored | Present |
| | Ga81 | CsZn₂AlF₈/Al-1Cu-90Zn | 30/70 | | | Ga81 | 50 | Small | Not discolored | Present |
| | Ga82 | CsZn₂AlF₈/Al-1Si-1Cu-1Zn | 30/70 | | | Ga82 | 35 | Small | Not discolored | Present |
| | Ga83 | CsZn₂AlF₈/Al-5Si-5Cu-5Zn | 30/70 | | | Ga83 | 40 | Small | Not discolored | Present |
| | Ga84 | CsZn₂AlF₈/Al-10Si-10Cu-10Zn | 30/70 | | | Ga84 | 50 | Small | Not discolored | Present |
| | Ga85 | CsZn₂AlF₈/Al-30Si-30Cu-30Cu | 30/70 | | | Ga85 | 55 | Medium | Not discolored | Present |
| | Ga86 | CsZn₂AlF₈/Al-90Si-1Cu-1Zn | 30/70 | | | Ga86 | 80 | Large | Not discolored | Present |
| | Ga87 | CsZn₂AlF₈/Al-1Si-90Cu-1Zn | 30/70 | | | Ga87 | 60 | Small | Not discolored | Present |
| | Ga88 | CsZn₂AlF₈/Al-1Si-1Cu-90Zn | 30/70 | | | Ga88 | 50 | Small | Not discolored | Present |

**TABLE 6-16**

| | Specimen | Flux composition | Mixing ratio (%) | | | Specimen | Joining ratio (%) | Size of fillet | External appearance of surface of aluminum | Residue on surface of aluminum |
|---|---|---|---|---|---|---|---|---|---|---|
| | Ha45 | CsZnAl₂F₉/Al | 30/70 | | | Ha45 | 30 | Small | Not discolored | Present |
| | Ha46 | CsZnAl₂F₉/Si | 30/70 | | | Ha46 | 90 | Large | Not discolored | Present |
| | Ha47 | CsZnAl₂F₉/Cu | 30/70 | | | Ha47 | 60 | Small | Not discolored | Present |
| | Ha48 | CsZnAl₂F₉/Zn | 30/70 | | | Ha48 | 50 | Small | Not discolored | Present |
| | Ha49 | CsZnAl₂F₉/Al-1Si | 30/70 | | | Ha49 | 35 | Small | Not discolored | Present |
| | Ha50 | CsZnAl₂F₉/Al-10Si | 30/70 | | | Ha50 | 40 | Small | Not discolored | Present |
| | Ha51 | CsZnAl₂F₉/Al-50Si | 30/70 | | | Ha51 | 70 | Small | Not discolored | Present |
| | Ha52 | CsZnAl₂F₉/Al-90Si | 30/70 | | | Ha52 | 80 | Small | Not discolored | Present |
| | Ha53 | CsZnAl₂F₉/Al-1Cu | 30/70 | | | Ha53 | 30 | Small | Not discolored | Present |
| | Ha54 | CsZnAl₂F₉/Al-10Cu | 30/70 | | | Ha54 | 35 | Medium | Not discolored | Present |
| | Ha55 | CsZnAl₂F₉/Al-50Cu | 30/70 | | | Ha55 | 50 | Large | Not discolored | Present |
| | Ha56 | CsZnAl₂F₉/Al-90Cu | 30/70 | | | Ha56 | 60 | Small | Not discolored | Present |
| | Ha57 | CsZnAl₂F₉/Al-1Zn | 30/70 | | | Ha57 | 30 | Small | Not discolored | Present |
| | Ha58 | CsZnAl₂F₉/Al-10Zn | 30/70 | | | Ha58 | 35 | Small | Not discolored | Present |
| | Ha59 | CsZnAl₂F₉/Al-50Zn | 30/70 | | | Ha59 | 40 | Small | Not discolored | Present |
| | Ha60 | CsZnAl₂F₉/Al-90Zn | 30/70 | | | Ha60 | so | Small | Not discolored | Present |
| | Ha61 | CsZnAl₂F₉/Cu-10Zn | 30/70 | | | Ha61 | 60 | Small | Not discolored | Present |
| | Ha62 | CsZnAl₂F₉/Cu-50Zn | 30/70 | | | Ha62 | 55 | Small | Not discolored | Present |
| | Ha63 | CsZnAl₂F₉/Cu-90Zn | 30/70 | | | Ha63 | 50 | Small | Not discolored | Present |
| | Ha64 | CsZnAl₂F₉/Al-1Si-1Cu | 30/70 | | | Ha64 | 30 | Small | Not discolored | Present |
| | Ha65 | CsZnAl₂F₉/Al-10Si-10Cu | 30/70 | | | Ha65 | 40 | Small | Not discolored | Present |
| | Ha66 | CsZnAl₂F₉/Al-25Si-25Cu | 30/70 | | | Ha66 | 50 | Medium | Not discolored | Present |
| Comparative Example 5 | Ha67 | CsZnAl₂F₉/Al-45Si-45Cu | 30/70 | | Comparative Example 5 | Ha67 | 60 | Medium | Not discolored | Present |
| | Ha68 | CsZnAl₂F₉/Al-90Si-1Cu | 30/70 | | | Ha68 | 80 | Large | Not discolored | Present |
| | Ha69 | CsZnAl₂F₉/Al-1Si-90Cu | 30/70 | | | Ha69 | 60 | Small | Not discolored | Present |
| | Ha70 | CsZnAl₂F₉/Al-1Si-1Zn | 30/70 | | | Ha70 | 35 | Small | Not discolored | Present |
| | Ha71 | CsZnAl₂F₉/Al-10Si-10Zn | 30/70 | | | Ha71 | 40 | Small | Not discolored | Present |
| | Ha72 | CsZnAl₂F₉/Al-25Si-25Zn | 30/70 | | | Ha72 | 45 | Medium | Not discolored | Present |
| | Ha73 | CsZnAl₂F₉/Al-45Si-45Zn | 30/70 | | | Ha73 | 55 | Medium | Not discolored | Present |
| | Ha74 | CsZnAl₂F₉/Al-90Si-1Zn | 30/70 | | | Ha74 | 80 | Large | Not discolored | Present |
| | Ha75 | CsZnAl₂F₉/Al-1Si-90Zn | 30/70 | | | Ha75 | 60 | Small | Not discolored | Present |
| | Ha76 | CsZnAl₂F₉/Al-1Cu-1Zn | 30/70 | | | Ha76 | 30 | Small | Not discolored | Present |
| | Ha77 | CsZnAl₂F₉/Al-10Cu-10Zn | 30/70 | | | Ha77 | 35 | Small | Not discolored | Present |
| | Ha78 | CsZnAl₂F₉/Al-25Cu-25Zn | 30/70 | | | Ha78 | 40 | Small | Not discolored | Present |
| | Ha79 | CsZnAl₂F₉/Al-45Cu-45Zn | 30/70 | | | Ha79 | 50 | Small | Not discolored | Present |
| | Ha80 | CsZnAl₂F₉/Al-90Cu-1Zn | 30/70 | | | Ha80 | 60 | Small | Not discolored | Present |
| | Ha81 | CsZnAl₂F₉/Al-1Cu-90Zn | 30/70 | | | Ha81 | 50 | Small | Not discolored | Present |
| | Ha82 | CsZnAl₂F₉/Al-1Si-1Cu-1Zn | 30/70 | | | Ha82 | 35 | Small | Not discolored | Present |
| | Ha83 | CsZnAl₂F₉/Al-5Si-5Cu-5Zn | 30/70 | | | Ha83 | 40 | Small | Not discolored | Present |
| | Ha84 | CsZnAl₂F₉/Al-10Si-10Cu-10Zn | 30/70 | | | Ha84 | 50 | Small | Not discolored | Present |
| | Ha85 | CsZnAl₂F₉/Al-30Si-30Cu-30Cu | 30/70 | | | Ha85 | 55 | Medium | Not discolored | Present |
| | Ha86 | CsZnAl₂F₉/Al-90Si-1Cu1Zn | 30/70 | | | Ha86 | 80 | Large | Not discolored | Present |
| | Ha87 | CsZnAl₂F₉/Al-1Si-90Cu-1Zn | 30/70 | | | Ha87 | 60 | Small | Not discolored | Present |
| | Ha88 | CsZnAl₂F₉/Al-1Si-1Cu-90Zn | 30/70 | | | Ha88 | 50 | Small | Not discolored | Present |

As shown in Tables 6-1 to 6-8, good results (brazability) were obtained in Example 5 even when the metal powder was mixed. On the other hand, when the ratio of the metal powder was high (Ae45 to Ae88, Be45 to Be88, Ce45 to Ce88, De45 to De88, Ee45 to Ee88, Fe45 to Fe88, Ge45 to Ge88, and He45 to He88 of Comparative Example 5), an unmelted residue was observed, and the joining ratio decreased due to the unmelted residue.

### Example 6 and Comparative Example 6

### Flux composition

Flux powders (average particle size: 10 µm) (flux content: 100 mass%) having the composition shown in Table 7 were provided as a flux component.

### Brazing test

The brazing test was performed in the same manner as in Example 1 and Comparative Example 1, except that the average dew point inside the furnace was changed as shown in Table 7.

### Evaluation of brazability

The brazability was evaluated in the same manner as in Example 1 and Comparative Example 1. The evaluation results are shown in Table 7.

**TABLE 7**

| | Specimen | Flux composition | Average dew point (°C) | | | Specimen | Joining ratio (%) | Size of fillet | External appearance of surface of aluminum | Residue on surface of aluminum |
|---|---|---|---|---|---|---|---|---|---|---|
| | Af1 | KZnAlF₆ | -40 | | | Af1 | 100 | Large | Not discolored | Absent |
| | Af2 | KZnAlF₆ | -20 | | | Af2 | 100 | Large | Not discolored | Absent |
| | Bf1 | K₂ZnAlF₇ | -40 | | | Bf1 | 100 | Large | Not discolored | Absent |
| | Bf2 | K₂ZnAlF₇ | -20 | | | Bf2 | 100 | Large | Not discolored | Absent |
| | Cf1 | KZn₂AlF₈ | -40 | | | Cf1 | 100 | Large | Not discolored | Absent |
| | Cf2 | KZn₂AlF₈ | -20 | | | Cf2 | 100 | Large | Not discolored | Absent |
| | Df1 | KZnAl₂F₉ | -40 | | | Df1 | 100 | Large | Not discolored | Absent |
| | Df2 | KZnAl₂F₉ | -20 | | | Df2 | 100 | Large | Not discolored | Absent |
| Example 6 | Ef1 | CsZnAlF₆ | -40 | | Example 6 | Ef1 | 100 | Large | Not discolored | Absent |
| | Ef2 | CsZnAlF₆ | -20 | | | Ef2 | 100 | Large | Not discolored | Absent |
| | Ff1 | Cs₂ZnAlF₇ | -40 | | | Ff1 | 100 | Large | Not discolored | Absent |
| | Ff2 | Cs₂ZnAlF₇ | -20 | | | Ff2 | 100 | Large | Not discolored | Absent |
| | Gf1 | CsZn₂AlF₈ | -40 | | | Gf1 | 100 | Large | Not discolored | Absent |
| | Gf2 | CsZn₂AlF₈ | -20 | | | Gf2 | 100 | Large | Not discolored | Absent |
| | Hf1 | CsZnAl₂F₉ | -40 | | | Hf1 | 100 | Large | Not discolored | Absent |
| | Hf2 | CsZnAl₂F₉ | -20 | | | Hf2 | 100 | Large | Not discolored | Absent |
| Comparative Example 6 | If1 | KZnF₃ | -20 | | Comparative Example 6 | If1 | 0 | - | White | Present (white) |

As shown in Table 7, good results were obtained in Example 6 even when the average dew point during brazing was high. In Comparative Example 6 (If1), most of KZnF₃ remained unreacted as a white residue, and a fillet was not formed since the average dew point of the atmosphere during brazing was high.

## Claims

1. A method for brazing an aluminum alloy comprising applying a flux component to a surface of an aluminum alloy member, and brazing the aluminum alloy member to which the flux component has been applied,
the flux component being a component (A) that is a powder of an alkali metal zinc fluoroaluminate represented by a general formula (1),
M_{w}ZnₓAl_{y}F_{z} (1)
wherein M is K or Cs, and w, x, y, and z are a positive integer, the greatest common divisor of w, x, y, and z being 1, and
the component (A) being applied to the surface of the aluminum alloy member in an amount of 1 to 50 g/m².

2. A method for brazing an aluminum alloy comprising applying a flux component to a surface of an aluminum alloy member, and brazing the aluminum alloy member to which the flux component has been applied,
the flux component being a mixture of a component (A) and a flux component other than the component (A), the component (A) being a powder of an alkali metal zinc fluoroaluminate represented by a general formula (1),
M_{w}ZnₓAl_{y}F_{z} (1)
wherein M is K or Cs, and w, x, y, and z are a positive integer, the greatest common divisor of w, x, y, and z being 1,
the component (A) being applied to the surface of the aluminum alloy member in a ratio of 50 mass% or more with respect to the total amount of the component (A) and the flux component other than the component (A), and
the component (A) and the flux component other than the component (A) being applied to the surface of the aluminum alloy member in an amount of 1 to 50 g/m² in total.

3. A method for brazing an aluminum alloy comprising applying a flux component to a surface of an aluminum alloy member, and brazing the aluminum alloy member to which the flux component has been applied,
the flux component being a mixture of a component (A) that is a powder of an alkali metal zinc fluoroaluminate represented by a general formula (1), and a component (B) that is one type of powder or two or more types of powders selected from a powder of an alkali metal fluoroaluminate and a powder of an alkali metal fluorozincate,
M_{w}ZnₓAl_{y}F_{z} (1)
wherein M is K or Cs, and w, x, y, and z are a positive integer, the greatest common divisor of w, x, y, and z being 1,
the component (A) being applied to the surface of the aluminum alloy member in a ratio of 50 mass% or more with respect to the total amount of the component (A) and the component (B), and
the component (A) and the component (B) being applied to the surface of the aluminum alloy member in an amount of 1 to 50 g/m² in total.

4. The method for brazing an aluminum alloy according to any one of claims 1 to 3, wherein the flux component has an average particle size of 80 µm or less.

5. The method for brazing an aluminum alloy according to any one of claims 1 to 4, comprising applying a component (C) to the surface of the aluminum alloy member together with the flux component, the component (C) being one type of metal powder or two or more types of metal powders selected from a powder of an aluminum alloy that comprises one type of metal element or two or more types of metal elements among Si, Cu, and Zn, an Al powder, an Si powder, a Cu powder, and a Zn powder,
the component (A) being applied to the surface of the aluminum alloy member in a ratio of 50 mass% or more with respect to the total amount of the flux component and the component (C).

6. A flux component-coated aluminum alloy member comprising an aluminum alloy member and a flux component, the flux component having been applied to a surface of the aluminum alloy member,
the flux component being a component (A) that is a powder of an alkali metal zinc fluoroaluminate represented by a general formula (1),
M_{w}ZnₓAl_{y}F_{z} (1)
wherein M is K or Cs, and w, x, y, and z are a positive integer, the greatest common divisor of w, x, y, and z being 1, and
the component (A) having been applied to the surface of the aluminum alloy member in an amount of 1 to 50 g/m².

7. A flux component-coated aluminum alloy member comprising an aluminum alloy member and a flux component, the flux component having been applied to a surface of the aluminum alloy member,
the flux component being a mixture of a component (A) and a flux component other than the component (A), the component (A) being a powder of an alkali metal zinc fluoroaluminate represented by a general formula (1),
M_{w}ZnₓAl_{y}F_{z} (1)
wherein M is K or Cs, and w, x, y, and z are a positive integer, the greatest common divisor of w, x, y, and z being 1,
the component (A) having been applied to the surface of the aluminum alloy member in a ratio of 50 mass% or more with respect to the total amount of the component (A) and the flux component other than the component (A), and
the component (A) and the flux component other than the component (A) having been applied to the surface of the aluminum alloy member in an amount of 1 to 50 g/m² in total.

8. A flux component-coated aluminum alloy member comprising an aluminum alloy member and a flux component, the flux component having been applied to a surface of the aluminum alloy member,
the flux component being a mixture of a component (A) that is a powder of an alkali metal zinc fluoroaluminate represented by a general formula (1), and a component (B) that is one type of powder or two or more types of powders selected from a powder of an alkali metal fluoroaluminate and a powder of an alkali metal fluorozincate,
M_{w}ZnₓAl_{y}F_{z} (1)
wherein M is K or Cs, and w, x, y, and z are a positive integer, the greatest common divisor of w, x, y, and z being 1,
the component (A) having been applied to the surface of the aluminum alloy member in a ratio of 50 mass% or more with respect to the total amount of the component (A) and the component (B), and
the component (A) and the component (B) having been applied to the surface of the aluminum alloy member in an amount of 1 to 50 g/m² in total.

9. The flux component-coated aluminum alloy member according to any one of claims 6 to 8, wherein the flux component has an average particle size of 80 µm or less.

10. The flux component-coated aluminum alloy member according to any one of claims 6 to 9, a component (C) having been applied to the surface of the aluminum alloy member together with the flux component, the component (C) being one type of metal powder or two or more types of metal powders selected from a powder of an aluminum alloy that comprises one type of metal element or two or more types of metal elements among Si, Cu, and Zn, an Al powder, an Si powder, a Cu powder, and a Zn powder, and
the component (A) having been applied to the surface of the aluminum alloy member in a ratio of 50 mass% or more with respect to the total amount of the flux component and the component (C).
